# EUROPEAN PATENT APPLICATION

(11) **EP 4 613 459 A1**
(43) Date of publication of application: **10.09.2025**
(21) Application number: 23884784.2
(22) Date of filing: 27.10.2023
(51) Int. Cl.: B29C 64/124

(54) **THREE-DIMENSIONAL PRINTING DEVICE AND THREE-DIMENSIONAL PRINTING METHOD**

(30) Priority: 31.10.2022 CN 202211351592; 31.10.2022 CN 202222902259 U; 31.10.2022 CN 202222890817 U; 31.10.2022 CN 202222890819 U; 31.10.2022 CN 202222902528 U; 27.02.2023 CN 202310180951; 31.05.2023 CN 202321376313 U
(71) Applicant: Guangzhou Heygears IMC. Inc, Guangzhou, Guangdong 510663 (CN)
(72) Inventor: LIU, Jingcheng, Guangzhou, Guangdong 510663 (CN); ZHU, Jinyong, Guangzhou, Guangdong 510663 (CN); ZOU, Chenlai, Guangzhou, Guangdong 510663 (CN); HE, Jiaqiang, Guangzhou, Guangdong 510663 (CN); LI, Qianyun, Guangzhou, Guangdong 510663 (CN); YAO, Xiaoxia, Guangzhou, Guangdong 510663 (CN); XIE, Fei, Guangzhou, Guangdong 510663 (CN); SU, Shutian, Guangzhou, Guangdong 510663 (CN); HU, Jun, Guangzhou, Guangdong 510663 (CN); XU, Mingjie, Guangzhou, Guangdong 510663 (CN); WAN, Xin, Guangzhou, Guangdong 510663 (CN); DENG, Lingfeng, Guangzhou, Guangdong 510663 (CN); LIANG, Yuhao, Guangzhou, Guangdong 510663 (CN); ZENG, Weibin, Guangzhou, Guangdong 510663 (CN); LUO, Ming, Guangzhou, Guangdong 510663 (CN)
(74) Representative: Herzog IP Patentanwalts GmbH
(86) International application number: PCT/CN2023/127351
(87) International publication number: WO 2024/093852

(57) **Abstract**

The present disclosure relates to the technical field of three-dimensional forming devices, and in particular, to a three-dimensional printing device and a three-dimensional printing method. The three-dimensional printing device includes a frame, a material tray, an illumination mechanism, a platform mechanism, and an automatic liquid supplementing mechanism. The frame includes a base plate; the material tray is arranged on the base plate and is configured to hold a printing material, and the material tray defines a primary groove, a channel, and a secondary groove, which are in communication in sequence; the illumination mechanism is located below the material tray, so as to project light toward the material tray; the platform mechanism is configured to allow the printing material in the primary groove to adhere to layer by layer, so as to obtain a printed object; and the automatic liquid supplementing mechanism includes a flow intercepting assembly, and the flow intercepting assembly is configured to block or open the channel such that the printing material in the secondary groove flows into the primary groove though the channel. The automatic liquid supplementing mechanism does not need to be provided with an additional liquid pump and conveying tube, such that risks caused by residual photosensitive resin in the liquid pump and conveying tube after addition in the related art may be avoided. Therefore, the three-dimensional printing device also has beneficial effects of improving operation efficiency, reducing manpower cost, etc.

## Description

### Cross-Reference to Related Application

This application claims priority to the following applications, the disclosures of which are hereby incorporated by reference in their entirety.
1. Chinese Patent Application No. CN202211351592.2, filed to the China National Intellectual Property Administration on October 31, 2022 and entitled "Three-Dimensional Printing Device, Three-Dimensional Printing Method, and Zero-Searching Control Method".
2. Chinese Patent Application No. CN202310180951.0, filed to the China National Intellectual Property Administration on February 27, 2023 and entitled "Zero-Searching Control Method for 3D Printer, and 3D Printer".
3. Chinese Patent No. CN 202222902259.8 filed to the China National Intellectual Property Administration on October 31, 2022 and entitled "Functional Mechanism and Three-Dimensional Printing Device".
4. Chinese Patent Application No. CN202222890817.3 filed to the China National Intellectual Property Administration on October 31, 2022 and entitled "Screen Structure and 3D Printer".
5. Chinese Patent Application No. CN 202222890819.2 filed to the China National Intellectual Property Administration on October 31, 2022 and entitled "Locking Mechanism, Platform Assembly, and Three-Dimensional Printing Device".
6. Chinese Patent Application No. CN 202222902528.0 filed to the China National Intellectual Property Administration on October 31, 2022 and entitled "Material Tray and Three-Dimensional Printing Device".
7. Chinese Patent Application No. CN202321376313.8 filed to the China National Intellectual Property Administration on May 31, 2023 and entitled "Locking Structure and 3D Printing Device".

### Technical Field

The present disclosure relates to the technical field of three-dimensional forming, and in particular, to a three-dimensional printing device and a three-dimensional printing method.

### Background

3D printing technologies are to create three-dimensional entities by using 3D printing devices in a layer-by-layer overlapping manner according to three-dimensional model data of objects. The 3D printing technologies may build a special structure that cannot be realized by existing conventional machining, thereby realizing simplified production of any complex structural component. Existing light-curing printing technologies are classified into laser three-dimensional printing technologies Stereo Lithography Appearance (SLA, curing by a laser point light source), Digital Light Processing (DLP, curing by a projector plane light source), and Liquid Crystal Display (LCD, curing by a light source and a liquid crystal plane). For an LCD light curing three-dimensional printing device, a light source is used to project light toward a material tray with a transparent bottom to cause a light-curing material between a forming platform and the bottom of the material tray to undergo a polymerization reaction, so as to obtain a cured sheet, the cured sheet is bonded on the forming platform. By causing the forming platform to move away from the bottom of the material tray and causing the light source to continuously or discontinuously project the light toward the bottom of the material tray, layer-by-layer curing is realized, and a three-dimensional solid printed object is formed by the stacked cured sheets.

At present, the vast majority of light-curing printer resins are manually poured in a resin box, and when a large model is printed, the resins are often not enough, leading to failed printing of the model. Therefore, an automatic feeding mechanism for a light-curing resin is provided. The addition of a photosensitive resin system by some light-curing three-dimensional printing devices mainly depends on a liquid pump to pump a photosensitive resin to a photosensitive resin pool from a photosensitive resin bottle. However, the photosensitive resin in such system needs to pass through three parts: a liquid pump input tube, a pump body, and a liquid pump output tube. When the photosensitive resin is added, there may be residual photosensitive resin in the liquid pump input tube, the pump body, and the liquid pump output tube. There are two types of risks about the residual photosensitive resin. One the one hand, the photosensitive resin may be cured in the liquid pump input tube, the pump body, and the liquid pump output tube, causing blocking or damages to an automatic liquid supplementing system; and on the other hand, if the photosensitive resin is not cured in the liquid pump input tube, the pump body, and the liquid pump output tube, and the type of photosensitive resin is changed for a next printing, the residual photosensitive resin causes some contamination to the photosensitive resin newly added, affecting a printing effect, thereby resulting in a great printing risk.

### Summary

The present disclosure provides a three-dimensional printing device. The three-dimensional printing device includes a frame, a material tray, an illumination mechanism, a platform mechanism, and an automatic liquid supplementing mechanism. The frame includes a base plate; the material tray is provided on the base plate and is configured to hold a printing material, and the material tray defines a primary groove, a channel, and a secondary groove, which are in communication in sequence; the illumination mechanism is located below the material tray, so as to project light toward the material tray; the platform mechanism is configured to allow the printing material in the primary groove to adhere to layer by layer, so as to obtain a printed object; and the automatic liquid supplementing mechanism includes a flow intercepting assembly, and the flow intercepting assembly is configured to block or open the channel such that the printing material in the secondary groove flows into the primary groove through the channel.

The present disclosure provides a three-dimensional printing method, which is applied to the three-dimensional printing device in any one of the above embodiments, and includes an automatic liquid supplementing step. The automatic liquid supplementing step includes: liquid level information of a printing material in a primary groove is acquired; the liquid level information and preset liquid level information are compared to generate a comparison result; and a flow intercepting assembly is controlled to block or open the channel according to the comparison result.

The present disclosure provides a three-dimensional printing device. The three-dimensional printing device includes a frame, a material tray, an illumination mechanism, and a screen mechanism. The frame includes a base plate; the material tray is provided on the base plate, and is configured to hold a printing material; the illumination mechanism is located below the material tray, so as to project light toward the material tray; the screen mechanism is provided on the base plate and located between the material tray and the illumination mechanism; the illumination mechanism includes a shielding housing, a light-emitting assembly, and a heat dissipation assembly; the shielding housing includes a bottom plate and a side wall, and the screen mechanism is provided on the top of the shielding housing; the light-emitting assembly is provided on the bottom plate; the heat dissipation assembly includes a fan, an air inlet provided on the bottom plate, and an air outlet provided on the side wall; the air inlet and the air outlet are respectively located on two sides of the screen mechanism; and the fan is configured to drive airflow to enter the shielding housing through the air inlet and leave the shielding housing through the air outlet.

In an embodiment, the heat dissipation assembly further includes a flow guide member, which has a flow guide surface; and the flow guide surface is configured to guide the airflow entering the shielding housing through the air inlet to the screen mechanism, and then to the air outlet.

In an embodiment, the heat dissipation assembly further includes a heat exchanger. The heat exchanger includes an evaporation member, a condensation member, and a connection pipeline. The evaporation member is disposed on the bottom plate and configured to absorb heat emitted by the light-emitting assembly; the condensation member is disposed at the air outlet; and the connection pipeline is configured to connect the evaporation member and the condensation member.

In an embodiment, the evaporation member includes a heat sink, the light-emitting assembly is disposed on the heat sink, and a plurality of heat exchange channels are provided in the heat sink; the condensation member includes a heat dissipation fin; and one end of the connection pipeline is embedded in the heat sink and communicates with the heat exchange channels, and the other end is embedded in the heat dissipation fin.

The present disclosure provides a locking mechanism, which is configured to a platform mechanism of a three-dimensional printing device. The platform mechanism includes a forming platform, a platform fixing rack, and a locking mechanism. The locking mechanism includes a locking member and a transmission assembly. The locking member has an abutment end; and one end of the transmission assembly is movably connected to the platform fixing rack and the other end is movably connected to the locking member, and the transmission assembly includes at least two transmission members, which are hinged with each other. A first hinge shaft is provided between the two transmission members, and the first hinge shaft has a locking position. The transmission assembly is configured so that the abutment end abuts the forming platform against the platform fixing rack when the first hinge shaft is located in the locking position, and the forming platform applies a force to the locking member such that the first hinge shaft is kept in the locking position.

In an embodiment, the first hinge shaft has an unlocking position. The transmission assembly is configured so that the abutment end is away from the forming platform when the first hinge shaft is in the unlocking position.

In an embodiment, the two transmission members includes a first transmission member and a second transmission member. A second hinge shaft is provided between the first transmission member and the platform fixing rack, and a third hinge shaft is provided between the second transmission member and the locking member. A plane passing through an axis of the second hinge shaft and an axis of the third hinge shaft is a central plane, and the locking position and the unlocking position are respectively located on two sides of the central plane.

In an embodiment, the locking mechanism includes a force applying member. The force applying member is connected to the first hinge shaft, and configured to drive the first hinge shaft to switch between the unlocking position and the locking position.

In an embodiment, the locking mechanism includes a limiting member. The limiting member is connected to the platform fixing rack, and configured to limit the locking member to move along a preset path.

In an embodiment, the limiting member includes a limiting plate. The limiting plate is provided with a positioning hole. One end of the limiting plate is fixedly connected to the platform fixing rack, and the other end extends in a direction away from the platform fixing rack. The locking member penetrates in the positioning hole to limit the abutment end to move in an extending direction of the positioning hole.

In an embodiment, the three-dimensional printing device includes a platform driving mechanism configured to drive the platform mechanism to move. The platform mechanism includes a mounting rack. The mounting rack includes a lifting lug and an extension portion, which are integrally connected. The lifting lug and the limiting member are respectively disposed on two ends of the extension portion. The lifting lug is movably connected to one transmission member, and the extension portion is configured to be connected to the platform driving mechanism.

The present disclosure provides a platform mechanism, which is used in a three-dimensional printing device. The platform mechanism includes a forming platform, a platform fixing rack, and a locking mechanism. The locking mechanism is mounted on the platform fixing rack, and configured to lock the forming platform to the platform fixing rack. The locking mechanism may be the locking mechanism in any one of the above embodiments. Refer to the respective embodiments for relevant details, details are not described herein again.

In an embodiment, the three-dimensional printing device includes a platform driving mechanism configured to drive a platform mechanism to move. The platform mechanism further includes a leveling assembly. The leveling assembly includes an adjustment rack, an angle assembly, and a limiting mechanism. The adjustment rack is connected to the platform driving mechanism, and is provided with an adjustment cavity. The adjustment cavity has a through opening facing the platform fixing rack. The angle assembly is rotatably disposed in the adjustment cavity, and is connected to the platform fixing rack. The limiting mechanism abuts against the angle assembly to define a rotation angle of the angle assembly after rotation relative to the adjustment cavity.

In an embodiment, the angle assembly includes a universal ball joint. The universal ball joint is connected to the platform fixing rack through the through opening. The limiting mechanism abuts against the universal ball joint to define a rotation angle of the universal ball joint relative to the adjustment cavity. The leveling assembly includes a third connecting member, and the third connecting member is connected between the platform fixing rack and the universal ball joint.

In an embodiment, the adjustment rack includes a box body and a cover body, which are connected to each other. The cover body is located on a side of the box body that faces toward the platform fixing rack. The box body and the cover body form the adjustment cavity together. The through opening is provided on the cover body. The angle assembly is connected to the platform fixing rack through the through opening.

In an embodiment, a side of the adjustment rack that is away from the platform fixing rack is provided with a first limiting hole. The limiting mechanism includes an abutment member and a control member. The abutment member is disposed in the adjustment cavity, and abuts against a side of the angle assembly that is away from the platform fixing rack. The control member is movably disposed in the first limiting hole, and detachably mounted to the adjustment rack, with one end abutting against the abutment member.

In an embodiment, the platform mechanism further includes the leveling assembly. The leveling assembly includes a reference sensor and a leveling sensor. The reference sensor is mounted on a reference member of the three-dimensional printing device, so as to sense position information of the reference member. The leveling sensor is mounted on the forming platform, and configured to sense position information of the forming platform, so as to match the position information of the reference member.

In an embodiment, the forming platform includes a fourth connecting member and a platform body. The fourth connecting member is configured to be connected to the platform fixing rack. The platform body is connected to the fourth connecting member, and defines a plurality of forming hole groups arranged at intervals in a first direction. The forming hole groups include a plurality of forming holes arranged at intervals in a second direction. In the first direction, the forming holes in the adjacent forming hole groups are arranged in a staggered manner. There is an included angle greater than zero between the first direction and the second direction.

In an embodiment, the platform body has a forming surface configured to allow the printing material to adhere to, so as to form a printed model. The forming surface has a rough region.

In an embodiment, the three-dimensional printing device includes the platform driving mechanism configured to move the platform mechanism. The platform fixing rack includes a main body portion connected to the platform driving mechanism, and a hitching portion and a limiting portion, which are respectively connected to the main body portion. The forming platform includes the platform body and a lapping portion connected to the platform body. The lapping portion is configured to be in lap joint with the hitching portion, so as to hitch the platform body to the platform fixing rack. The limiting portion is configured to limit a tilt angle of the forming platform when the platform body is obliquely hitched to the platform fixing rack by the hitching portion.

In an embodiment, the hitching portion includes a hitching surface and an abutment surface opposite to the hitching surface. The limiting portion is disposed on one side of the abutment surface, or disposed on one side of the hitching surface.

The present disclosure provides a three-dimensional printing device. The three-dimensional printing device includes a frame, a material tray, an illumination mechanism, and a platform mechanism. The frame includes a base plate; the material tray is arranged on the base plate and is configured to hold a printing material; the illumination mechanism is located below the material tray, so as to project light toward the material tray; and the platform mechanism is configured to allow the printing material in the primary groove to adhere to layer by layer, so as to obtain a printed object. The platform mechanism may be the platform mechanism in any one of the above embodiments. Refer to the respective embodiments for relevant details, details are not described herein again.

The present disclosure provides a three-dimensional printing device. The three-dimensional printing device includes a frame and a material tray. The frame includes a clamping member; the material tray is detachably disposed on the frame, and a clamping assembly is disposed on the material tray; the clamping member is in clamping connection with the clamping assembly; the clamping assembly is provided with a mounting chamber and an accommodating groove, which communicate with each other; a movable locking portion is disposed in the accommodating groove; a limiting groove cooperated with the locking portion is provided on the clamping member; when the material tray is mounted on the frame, the clamping member is located in the mounting chamber, and a part of the locking portion is clamped in the limiting groove; and the locking portion is configured to be able to retract the accommodating groove toward a direction away from the limiting groove.

The present disclosure provides a locking structure, which is used for the material tray of the three-dimensional printing device. The locking structure includes a housing and a locking assembly. The housing has a first opening. The locking assembly is disposed on a side close to the first opening in the housing. A transmission structure is rotatably disposed in the housing, and a first end of the transmission structure abuts against a first end of the locking assembly. When the transmission structure rotates, the locking assembly is driven to move at the first opening such that a second end of the locking assembly is locked or unlocked with the material tray.

In an embodiment, a resetting assembly is further included. A first boss portion is provided on a side of the locking assembly that is away from the first opening. The resetting assembly is disposed between the housing and the first boss portion.

In an embodiment, a plurality of pushing blocks are disposed on one of the first end of the transmission structure and the first end of the locking assembly, and the other one is provided with an abutment portion and a plurality of accommodating notches. The accommodating notches and the abutment portion are located on the same side. The pushing blocks are rotatably disposed in the accommodating notches. When the pushing blocks rotate to the abutment portion, the second end of the locking assembly is locked with the material tray; and when the pushing blocks rotate into the accommodating notches, the second end of the locking assembly is unlocked with the material tray.

In an embodiment, a side close to the accommodating notch of the pushing block is provided with a first guiding slope.

In an embodiment, in a rotation direction away from the accommodating notch, a distance between the first guiding slope and the transmission structure is gradually shortened.

In an embodiment, the pushing block is a wedge-shaped block, and in an extending direction of the wedge-shaped block, a width of the wedge-shaped block is equal in all places. The accommodating notch is a wedge-shaped groove, and a depth of the accommodating notch matches the pushing block.

In an embodiment, an inner thread is provided on one of the first end of the transmission structure and the first end of the locking assembly, and the other one is provided with an outer thread. The inner thread is in threaded connection with the outer thread.

In an embodiment, the transmission structure is provided with a first limiting structure, the housing is provided with a second limiting structure, and the second limiting structure is configured to define a rotation range of the first limiting structure.

In an embodiment, the locking assembly includes a buffer member and a pressing member. The first end of the locking assembly is an end close to the transmission structure of the buffer member, the second end of the locking assembly is an end close to the material tray of the pressing member , and the first boss portion is disposed on the pressing member. The pressing member is provided with a first guide groove, and the buffer member is movably disposed in the first guide groove.

In an embodiment, the pressing member is provided with a second guide groove, a second boss portion is provided on the buffer member, the second boss portion is opposite to an opening of the second guide groove, and an elastic member is disposed between the second guide groove and the second boss portion.

In an embodiment, the material tray is provided with a first locking portion, and the second end of the locking assembly is provided with a second locking portion. When the second end of the locking assembly is locked with the material tray, the first locking portion is in clamped connection with the second locking portion.

In an embodiment, the first locking portion is provided with a second guiding slope, the second locking portion is provided with a third guiding slope, and when the second end of the locking assembly is locked with the material tray, the second guiding slope abuts against the third guiding slope.

In an embodiment, the locking assembly is provided with a third guide groove, a first guide post is disposed on the transmission structure, and the first guide post rotatably penetrates the third guide groove.

In an embodiment, a second guide post is disposed on the second boss portion, and the second guide post penetrates the second guide groove.

In an embodiment, the housing also has a second opening, a drive portion is disposed outside the housing, and a part of the drive portion is connected to the transmission structure by penetrating the second opening.

The present disclosure provides a three-dimensional printing device. The three-dimensional printing device includes a frame, a material tray, and a locking structure for locking the frame and the material tray. The locking structure may be the locking structure used for the three-dimensional printing device in any one of the above embodiments. Refer to the respective embodiments for relevant details, details are not described herein again.

The present disclosure provides a material tray, which is used for a three-dimensional printing device. The material tray includes a material tray frame. A detachable release film assembly is provided in the material tray frame. The release film assembly includes a fixed rack assembly and a release film fixed on the fixed rack assembly. The fixed rack assembly includes a first fixed rack and a second fixed rack. The release film is fixed between the first fixed rack and the second fixed rack.

In an embodiment, the release film is provided with an assembly hole, one of the first fixed rack and the second fixed rack is provided with a second limiting hole, a limiting post is disposed on the other one, and the limiting post penetrates the assembly hole and the second limiting hole; and/or a convex strip is disposed on one of the first fixed rack and the second fixed rack, the other one is provided with a first groove cooperating the convex strip, and the convex strip is embedded in the first groove.

In an embodiment, the three-dimensional printing device includes a frame, and the material tray is configured to be detachably disposed on the frame. The second fixed rack is located on a side away from the frame of the release film. At least one support post is disposed on a side away from the second fixed rack of the first fixed rack. The support post bears against the frame to cause the release film to be spaced apart from the frame.

In an embodiment, the material tray frame is provided with a snap-fit groove circumferentially extending along the material tray frame, the snap-fit groove has an opening in a direction close to the frame, and the fixed rack assembly is embedded in the snap-fit groove.

In an embodiment, the material tray frame is also provided with an avoidance space, and the avoidance space communicates with the snap-fit groove and is located on a side away from the first fixed rack of the second fixed rack.

In an embodiment, an inner circumferential edge of the first fixed rack is flush with an inner circumferential edge of the second fixed rack, or a flange is disposed on the inner circumferential edge of the second fixed rack, and the flange abuts against the first fixed rack and is flush with a side away from the second fixed rack of the first fixed rack.

In an embodiment, the release film includes a release film body and a release film identifier connected to the release film body. There are a plurality of assembly holes. The plurality of assembly holes are circumferentially arranged along the release film body. The material tray frame includes a primary groove and a secondary groove. The release film body is embedded in the primary groove, and the release film identifier is embedded in the secondary groove. A release film reader is disposed on the frame, and the release film identifier is disposed opposite to the release film reader.

The present disclosure provides a three-dimensional printing device. The three-dimensional printing device includes a frame, a material tray, an illumination mechanism, and a platform mechanism. The frame includes a base plate; the material tray is arranged on the base plate and is configured to hold a printing material; the illumination mechanism is located below the material tray, so as to project light toward the material tray; and the platform mechanism is configured to allow the printing material in the primary groove to adhere to layer by layer, so as to obtain a printed object. The material tray may be the material tray in any one of the above embodiments. Refer to the respective embodiments for relevant details, details are not described herein again.

The present disclosure provides a screen mechanism, which is used for a three-dimensional printing device. The three-dimensional printing device includes a frame, a control mechanism, and a supporting member. The screen mechanism includes a screen assembly. The frame defines an accommodating cavity and a through opening communicating with the accommodating cavity. The screen assembly is disposed on the frame; the screen assembly is electrically connected to a first connection end through a first connection line; and the first connection end is located in the accommodating cavity. The control mechanism is disposed in the accommodating cavity and electrically connected to a second connection end through a second connection line; and the second connection end and the first connection end are connected in an insertion manner. The supporting member is movably disposed on the frame; a part of the supporting member extends into the accommodating cavity by the through opening so as to support the second connection end; and the supporting member is configured to be able to move toward a direction away from the accommodating cavity.

In an embodiment, the supporting member includes a cover portion and a mounting portion, which are connected to each other. The cover portion covers the through opening, the mounting portion is provided with a mounting hole, and the second connection line penetrates the mounting hole.

In an embodiment, a first magnetic member is disposed on the frame, a second magnetic member is disposed on the cover portion, and the first magnetic member and the second magnetic member are disposed opposite to each other and are adsorbable; and/or one of the supporting member and the frame includes an insertion buckle, and the other one of the supporting member and the frame are provided with an insertion hole corresponding to the insertion buckle. The supporting member is detachable relative to the frame through the cooperating of the insertion buckle and the insertion hole.

In an embodiment, a first cooperating portion and an inserting pin, which are spaced, are disposed on the first connection end; an inserting hole and a second cooperating portion, which are spaced, are disposed on the second connection end; and the inserting pin is inserted in the inserting hole, and the first cooperating portion is cooperated with the second cooperating portion in a clamping manner.

In an embodiment, the screen assembly is movably disposed on the frame in a third direction. The screen assembly includes a mounting support and a screen fixed on the mounting support. A reset member is also disposed on the frame; and the reset member abuts against between the mounting support and the frame in the third direction.

In an embodiment, a pressure sensor is also disposed on the frame, and the reset member abuts against the pressure sensor.

In an embodiment, a guiding post is disposed on the mounting support; the guiding post is spaced apart from the pressure sensor; the elastic member includes a spring; and the spring is sleeved on the guiding post.

In an embodiment, the frame includes a case body and a base plate. The base plate and the case body define an accommodating cavity together. The base plate is provided with a guiding groove that passes through in the third direction. The screen assembly is movably clamped in the guiding groove.

In an embodiment, a fixed rack is disposed on a side away from the mounting support of the base plate; the fixed rack is disposed opposite to the mounting support; and the pressure sensor is disposed on the fixed rack.

In an embodiment, a first adsorption portion is disposed on the mounting support; a second adsorption portion is disposed on the base plate; and the first adsorption portion and the second adsorption portion are opposite to each other and are adsorbable.

The present disclosure provides a three-dimensional printing device. The three-dimensional printing device includes a frame, a control mechanism, a supporting member, a material tray, an illumination mechanism, a platform mechanism, and a screen mechanism. The frame includes a base plate; the material tray is arranged on the base plate and is configured to hold a printing material; the illumination mechanism is located below the material tray, so as to project light toward the material tray; and the platform mechanism is configured to allow the printing material in the primary groove to adhere to layer by layer, so as to obtain a printed object. The screen mechanism may be the screen mechanism in any one of the above embodiments. Refer to the respective embodiments for relevant details, details are not described herein again.

The present disclosure provides a three-dimensional printing method, which is applied to the three-dimensional printing device in any one of the above embodiments. An illumination mechanism of the three-dimensional printing device includes a light source and an exposure apparatus. The three-dimensional printing method includes: when a platform mechanism of the three-dimensional printing device is attached to the exposure apparatus of the three-dimensional printing device, the exposure apparatus of the three-dimensional printing device is controlled to transmit light to form an initial printed layer, wherein at least one of the platform mechanism or the exposure apparatus is a floating assembly; the platform mechanism is controlled to move to a preset position, and the exposure apparatus is controlled to transmit light to form a current printed layer and complete a printing action of a current round, wherein the preset position is determined according to the number of the current printed layer; and the printing action of a next round is executed until a preset event occurs.

The present disclosure provides a three-dimensional printing method, including: when a forming platform of a three-dimensional printing device is attached to an exposure apparatus of the three-dimensional printing device, the exposure apparatus of the three-dimensional printing device is controlled to transmit light to form an initial printed layer, wherein at least one of the forming platform or the exposure apparatus is a floating assembly; the platform mechanism is controlled to move to a preset position, and the exposure apparatus is controlled to transmit light to form a current printed layer and complete a printing action of a current round, wherein the preset position is determined according to the number of the current printed layers; and the printing action of a next round is executed until a preset event occurs.

In an embodiment, the three-dimensional printing method further includes: the forming platform is controlled to move toward the exposure apparatus, until the forming platform is subjected to an acting force at a plurality of preset target positions; and a horizontal degree of the forming platform is adjusted such that a difference value among the acting forces applied to each preset target position is less than a preset threshold.

In an embodiment, the plurality of preset target positions include two positions of the forming platform in a diagonal relationship.

In an embodiment, the three-dimensional printing method further includes: the forming platform is controlled to firstly move, until the forming platform is attached to the exposure apparatus. In the initial moving process, a material tray disposed between the forming platform and the exposure apparatus has no printing material.

In an embodiment, controlling the platform mechanism to move to the preset position includes: an initial moving distance of the forming platform is acquired, and according to the initial moving distance and the number of the current printed layers, an elevating mechanism of the three-dimensional printing device is controlled to move, such that the forming platform moves to the preset position. The number of the current printed layers is an integer greater than or equal to 0.

In an embodiment, the attachment state is confirmed according to one or more of the following magnitudes: a first displacement amount of the exposure apparatus, a first pressure level exerted on the exposure apparatus, a second displacement amount of the forming platform, and a second pressure level exerted on the forming platform.

In an embodiment, the preset event includes completing the printing action of a preset number of layers and/or a current forming surface of the forming platform being parallel to a floating base plate of the exposure apparatus.

In an embodiment, before controlling the exposure apparatus of the three-dimensional printing device to transmit light to form the initial printed layer, the three-dimensional printing method further includes: during the downward moving of the forming platform, a maximum displacement amount and a minimum displacement amount in the first displacement amount of the exposure apparatus are acquired, and it is determined that the forming platform is attached to the exposure apparatus when the maximum displacement amount meets a first condition and the minimum displacement amount meets a second condition; or during the downward moving of the forming platform, a maximum displacement amount and a minimum displacement amount in the second displacement amount of the exposure apparatus are acquired, and it is determined that the forming platform is attached to the exposure apparatus when the maximum displacement amount meets a third condition and the minimum displacement amount meets a fourth condition.

In an embodiment, the first condition includes falling into a first range or being less than a first threshold; the second condition includes falling into a second range or being greater than a second threshold or maintaining a duration falling into the second range to reach a preset duration; the third condition includes falling into a third range or being less than a third threshold; and the fourth condition includes falling into a fourth range or being greater than a fourth threshold or maintaining a duration falling into the fourth range to reach a preset duration.

In an embodiment, before controlling the exposure apparatus of the three-dimensional printing device to transmit light to form the initial printed layer, the three-dimensional printing method further includes: during the downward moving of the forming platform, a maximum pressure level and a minimum pressure level in the first pressure level exerted on the exposure apparatus are acquired, and it is determined that the forming platform is attached to the exposure apparatus when the maximum pressure level meets a fifth condition and the minimum pressure level meets a sixth condition; or during the downward moving of the forming platform, a maximum pressure level and a minimum pressure level in the second pressure level exerted on the exposure apparatus are acquired, and it is determined that the forming platform is attached to the exposure apparatus when the maximum pressure level meets a seventh condition and the minimum pressure level meets an eighth condition.

In an embodiment, the fifth condition includes falling into a fifth range or being less than a fifth threshold; the sixth condition includes falling into a sixth range or being greater than a sixth threshold; the seventh condition includes falling into a seventh range or being less than a seventh threshold; and the eighth condition includes falling into an eighth range or being greater than an eighth threshold.

In an embodiment, before controlling the exposure apparatus of the three-dimensional printing device to transmit light to form the initial printed layer, the three-dimensional printing method further includes: the forming platform is controlled to move down a target distance according to a preset speed; and after the forming platform moves down the target distance, the forming platform is controlled to move downward continuously, until the forming platform is attached to the exposure apparatus.

In an embodiment, controlling the forming platform to move down the target distance according to the preset speed includes: the forming platform is controlled to move down different distance sections according to different speeds. The sum of different distance sections moved downward is the target distance.

In an embodiment, before after the forming platform moves down the target distance, controlling the forming platform to move downward continuously, the three-dimensional printing method further includes: residue detection is performed on a material groove of the three-dimensional printing device, and the step of controlling the forming platform to move downward continuously is executed when a result for residue detection is qualified.

In an embodiment, before or at the same time or after controlling the exposure apparatus of the three-dimensional printing device to transmit light to form the initial printed layer, the method further includes: a restoring power is applied to the exposure apparatus when an angle between the exposure apparatus and a horizontal plane changes and an angle between the forming platform and the horizontal plane is fixed, wherein the restoring power is a force that causes a tilt angle of the exposure apparatus to restore after the tilt angle of the exposure apparatus changes; or the restoring power is applied to the forming platform when the angle between the forming platform and the horizontal plane changes and the angle between the exposure apparatus and the horizontal plane is fixed, wherein the restoring power is a force that causes a tilt angle of the forming platform to restore after the tilt angle of the forming platform changes.

In an embodiment, the three-dimensional printing method further includes: the forming platform or the exposure apparatus is locked when the preset event occurs.

The present disclosure provides a three-dimensional printing method, including: the forming platform of a three-dimensional printing device is controlled to move to an exposure apparatus of the three-dimensional printing device, until a plurality of preset target positions of the forming platform are all subjected to an acting force; and a horizontal degree of the forming platform is adjusted such that a difference value between the acting forces applied to each preset target position is less than a preset threshold.

In an embodiment, the plurality of preset target positions include two positions of the forming platform in a diagonal relationship.

The present disclosure provides a three-dimensional printing device. The three-dimensional printing device includes a forming platform, an exposure apparatus, a memory, and a processor. The memory stores a computer program. The computer program, when being run by the processor, executes the three-dimensional printing method in any one of the above embodiments. Refer to the respective embodiments for relevant details, details are not described herein again.

The present disclosure provides a non-volatile storage medium. The non-volatile storage medium stores a computer program. The computer program, when being run by a processor, executes the three-dimensional printing method in any one of the above embodiments. Refer to the respective embodiments for relevant details, details are not described herein again.

The present disclosure provides a functional mechanism, which is used for a three-dimensional printing device. The three-dimensional printing device includes a frame. The functional mechanism includes a fixed base detachable relative to the frame and a connector base fixed disposed on the frame. The fixed base includes a functional module and a first connector electrically connected to the functional module. A control mechanism is disposed in the frame or the connector base. A second connector electrically connected to the control mechanism is disposed in the connector base. When the fixed base is mounted on the frame, the fixed base abuts against the connector base such that the first connector is electrically connected to the second connector.

In an embodiment, one of the fixed base and the connector base is provided with a first limiting protrusion, the other one is provided with a first limiting groove, the fixed base is configured to be detachably connected to the connector base through the cooperating between the first limiting protrusion and the first limiting groove; and/or a first magnet is disposed on one of the fixed base and the connector base, a second magnet is disposed on the other one, and the fixed base is configured to be detachably connected to the connector base through adsorption between the first magnet and the second magnet.

In an embodiment, the first connector includes a first connector circuit board and a first connection portion integrated on the first connector circuit board, and the second connector includes a second connector circuit board and a second connection portion integrated on the second connector circuit board. When the fixed base is mounted on the frame, the first connection portion electrically abuts against the second connection portion.

In an embodiment, the fixed base includes a first housing; the first housing defines a first mounting cavity and a first hole communicating with the first mounting cavity; the functional module and the first connector are disposed in the first mounting cavity; and the first connection portion is at least partially exposed from the first hole. The connector base includes a second housing; the second housing defines a second mounting cavity and a second hole communicating with the second mounting cavity; the second connector is disposed in the second mounting cavity; and the second connection portion is at least partially exposed from the second housing.

In an embodiment, the three-dimensional printing device further includes a material tray detachably disposed on the frame. The functional module includes a heating module. The heating module is configured to heat the material tray. The first connector includes a first heating connector; the first connector circuit board includes a first heating connector circuit board; and the first connection portion includes a first heating connection portion. The second connector includes a second heating connector; the second connector circuit board includes a second heating connector circuit board; and the second connection portion includes a second heating connection portion. The material tray includes a material tray frame. The first housing includes a material tray frame and a cover housing, which are cooperated with each other, the material tray frame defines the first mounting cavity, and the cover housing defines the first hole.

When the material tray is mounted on the frame, the first heating connection portion electrically abuts against the second heating connection portion.

In an embodiment, the first mounting cavity includes a fixed groove and a mounting groove. The material tray frame includes a body portion and a protrusion portion. The body portion defines the fixed groove circumferentially extending along the body portion. The protrusion portion defines the mounting groove communicating with the fixed groove. The heating module is embedded in the fixed groove. The first heating connector is embedded in the mounting groove.

In an embodiment, the three-dimensional printing device further includes a material tray disposed on the frame. The functional module further includes a detection module. The detection module is configured to detect a printing material in the material tray. The first connector includes a first detection connector, the first connector circuit board includes a first detection connector circuit board, and the first connection portion includes a first detection connection portion. The second connector includes a second detection connector, the second connector circuit board includes a second detection connector circuit board, and the second connection portion includes a second detection connection portion. The fixed base is detachably mounted on the material tray. When the material tray is mounted on the frame, the first detection connection portion electrically abuts against the second detection connection portion.

In an embodiment, one of the fixed base and the material tray is provided with a second limiting protrusion, the other one is provided with a second limiting groove, the fixed base is configured to be detachably connected to the material tray through the cooperating between the second limiting protrusion and the second limiting groove; and/or a third magnet is disposed on the fixed base, a fourth magnet is disposed on the material tray, and the fixed base is configured to be detachably connected to the material tray through adsorption between the third magnet and the fourth magnet.

In an embodiment, the detection module includes a detection circuit board and a detection assembly integrated on the detection circuit board. The first housing also defines an avoidance port communicating with the first mounting cavity. The detection assembly is exposed from the avoidance port. The detection circuit board is electrically connected to the first detection connector circuit board.

In an embodiment, the functional module includes a temperature detection module and/or a liquid level detection module. For the temperature detection module, the detection assembly includes a temperature detection probe, and the first housing is constructed as a bent structure such that the temperature detection probe is opposite to an inner bottom wall of the material tray. For the liquid level detection module, the detection assembly includes a liquid level detection probe, and the liquid level detection probe is constructed to extend into the material tray.

In an embodiment, the first housing includes a first sub-housing and a second sub-housing, which are in clamped connection with each other. A first limiting structure is disposed on the first sub-housing, and a second limiting structure is disposed on the second sub-housing. The detection circuit board is sandwiched between the first limiting structure and the second limiting structure.

The present disclosure provides a three-dimensional printing device. The three-dimensional printing device includes a frame, a material tray, an illumination mechanism, a platform mechanism, and a functional mechanism. The frame includes a base plate; the material tray is arranged on the base plate and is configured to hold a printing material; the illumination mechanism is located below the material tray, so as to project light toward the material tray; and the platform mechanism is configured to allow the printing material in the primary groove to adhere to layer by layer, so as to obtain a printed object. The functional mechanism may be the functional mechanism in any one of the above embodiments. Refer to the respective embodiments for relevant details, details are not described herein again.

The beneficial effects of the embodiments of the present disclosure include, but are not limited to, the following.

In the three-dimensional printing device provided in the present disclosure, the automatic liquid supplementing mechanism is disposed and includes the flow intercepting assembly, and the flow intercepting assembly may block or open the channel between the secondary groove and the primary groove of the material tray according to an external control instruction action. Therefore, whether a resin in the secondary groove can flow into the primary groove is determined according to requirements. The automatic liquid supplementing mechanism does not need to be provided with an additional liquid pump and conveying tube, such that risks caused by residual photosensitive resin in the liquid pump and conveying tube after addition in the related art may be avoided. The three-dimensional printing device provided in the present disclosure can also implement the three-dimensional printing method, and thus has the beneficial effects of improving operation efficiency, reducing manpower costs, etc.

The three-dimensional printing method provided in the present disclosure includes an automatic liquid supplementing step. The automatic liquid supplementing step may control the flow intercepting assembly to block or open the channel through the liquid level information of the printing material in the primary groove. Therefore, the addition and supplementing of the printing material in the primary groove may be realized automatically, thereby improving operation efficiency, and reducing manpower costs.

According to the three-dimensional printing method provided in the present disclosure, the following method is used. When the forming platform of the three-dimensional printing device is attached to the exposure apparatus of the three-dimensional printing device, the exposure apparatus of the three-dimensional printing device is controlled to transmit light to form the initial printed layer; the platform mechanism is controlled to move to the preset position, and the exposure apparatus is controlled to transmit light to form the current printed layer and complete the printing action of the current round; the preset position is determined according to the number of the current printed layer; and the printing action of the next round is executed until the preset event occurs. Since in the method, if the forming platform is not flush with the exposure apparatus, the forming platform and the exposure apparatus may be attached to each other first, and the first printing is performed; and then the forming platform is controlled to move to perform printing for one or more rounds, such that adjustment may be performed through multiple printings when the forming platform is not flush with the exposure apparatus, causing the forming surface of the forming platform to be ultimately parallel to the exposure apparatus. Therefore, the technical problem of failed printing due to a non-parallel issue among the forming platform, material tray, and exposure apparatus of the three-dimensional printing device is solved.

### Brief Description of the Drawings

Drawings here are incorporated into the specification and constitute a part of the specification. The drawings illustrate embodiments in accordance with the present disclosure and serve to understand the principles of the present disclosure together with the specification.

In order to more clearly illustrate the embodiments of the present disclosure or the technical solutions in the related art, the drawings used in the description of the embodiments or the related art will be briefly described below. It is apparent that other drawings can be obtained from those skilled in the art according to these drawings without any creative work.
Fig. 1 is a schematic structural diagram of a three-dimensional printing device according to embodiments of the present disclosure.
Fig. 2 is a schematic diagram of partial structure of a material tray of a three-dimensional printing device according to embodiments of the present disclosure.
Fig. 3 is a partial enlarged view of Portion A in Fig. 2.
Fig. 4 is an exploded structural view of a three-dimensional printing device in which an automatic liquid supplementing mechanism is cooperated with a material tray according to embodiments of the present disclosure.
Fig. 5 is a schematic diagram of a three-dimensional structure of a three-dimensional printing device in which an automatic liquid supplementing mechanism is cooperated with a material tray according to embodiments of the present disclosure.
Fig. 6 is a schematic diagram of a three-dimensional structure of a three-dimensional printing device in which an automatic liquid supplementing mechanism, a base plate, and a material tray are cooperated with each other according to embodiments of the present disclosure.
Fig. 7 is a schematic diagram of a three-dimensional structure of a three-dimensional printing device in which a flow intercepting assembly is cooperated with a material tray according to embodiments of the present disclosure.
Fig. 8 is a schematic diagram of a three-dimensional structure of a three-dimensional printing device in a state that partial structure of a flow intercepting assembly blocks a channel of a material tray according to embodiments of the present disclosure.
Fig. 9 is a schematic diagram of a three-dimensional structure of a three-dimensional printing device in a state that partial structure of a flow intercepting assembly opens a channel of a material tray according to embodiments of the present disclosure.
Fig. 10 is an exploded structural view of a flow intercepting assembly of a three-dimensional printing device according to embodiments of the present disclosure.
Fig. 11 is a schematic diagram of a three-dimensional structure of a flow intercepting assembly in a three-dimensional printing device according to embodiments of the present disclosure.
Fig. 12 is a schematic diagram of an internal structure of a flow intercepting assembly in a three-dimensional printing device according to embodiments of the present disclosure.
Fig. 13 is a schematic diagram of a three-dimensional structure of a blocking member in a three-dimensional printing device according to embodiments of the present disclosure.
Fig. 14 is a schematic diagram of a three-dimensional structure of a three-dimensional printing device in which a liquid adding assembly, a base plate, and a material tray are cooperated with each other when a material bottle is in a standby position according to embodiments of the present disclosure.
Fig. 15 is a partial enlarged view of Portion B in Fig. 14.
Fig. 16 is a structural cross-sectional view of a three-dimensional printing device in which a liquid adding assembly, a base plate, and a material tray are cooperated with each other when a material bottle is in a standby position according to embodiments of the present disclosure.
Fig. 17 is a schematic diagram of a three-dimensional structure of a three-dimensional printing device in which a liquid adding assembly, a base plate, and a material tray are cooperated with each other when a material bottle is in an working position according to embodiments of the present disclosure.
Fig. 18 is a structural cross-sectional view I of a three-dimensional printing device in which a liquid adding assembly, a base plate, and a material tray are cooperated with each other when a material bottle is in an working position according to embodiments of the present disclosure.
Fig. 19 is a schematic diagram I of a three-dimensional structure of a three-dimensional printing device in which a material bottle is cooperated with a support rack according to embodiments of the present disclosure.
Fig. 20 is an exploded structural view I of a material bottle and a support rack of a three-dimensional printing device according to embodiments of the present disclosure.
Fig. 21 is a schematic diagram of a three-dimensional structure of a material bottle of a three-dimensional printing device according to embodiments of the present disclosure.
Fig. 22 is a schematic diagram of a three-dimensional structure of a support rack of a three-dimensional printing device according to embodiments of the present disclosure.
Fig. 23 is a schematic diagram II of a three-dimensional structure of a three-dimensional printing device in which a material bottle is cooperated with a support rack according to embodiments of the present disclosure.
Fig. 24 is an exploded structural view I of a material bottle and a support rack of a three-dimensional printing device according to embodiments of the present disclosure.
Fig. 25 is a schematic diagram of a three-dimensional structure of a three-dimensional printing device in which a support rack is cooperated with a base plate according to embodiments of the present disclosure.
Fig. 26 is a partial enlarged view of Portion C in Fig. 25.
Fig. 27 is a structural cross-sectional view II of a three-dimensional printing device in which a liquid adding assembly, a base plate, and a material tray are cooperated with each other when a material bottle is in an working position according to embodiments of the present disclosure.
Fig. 28 is a schematic top view of a supporting structure of a three-dimensional printing device according to embodiments of the present disclosure.
Fig. 29 is a schematic cross-sectional view of the supporting structure of Fig. 28.
Fig. 30 is a top view of partial structure in a three-dimensional printing device according to embodiments of the present disclosure.
Fig. 31 is a cross-sectional view in a direction of A-A in Fig. 30.
Fig. 32 is an exploded structural view of partial structure of a three-dimensional printing device according to embodiments of the present disclosure.
Fig. 33 is a diagram of a three-dimensional structure of a shielding housing of a three-dimensional printing device according to embodiments of the present disclosure.
Fig. 34 is a top view of a shielding housing of a three-dimensional printing device according to embodiments of the present disclosure.
Fig. 35 is a cross-sectional view of a shielding housing of a three-dimensional printing device according to embodiments of the present disclosure.
Fig. 36 is a schematic diagram of partial structure of a three-dimensional printing device according to embodiments of the present disclosure, wherein a platform assembly is in a locking position.
Fig. 37 is a schematic diagram of partial three-dimensional structure of a platform assembly according to embodiments of the present disclosure.
Fig. 38 is a schematic diagram of another partial structure of a three-dimensional printing device according to embodiments of the present disclosure, wherein a platform assembly is in an unlocking position.
Fig. 39 is a schematic exploded view of partial structure of a three-dimensional printing device according to embodiments of the present disclosure.
Fig. 40 is a schematic diagram of a partial side structure of a platform assembly according to embodiments of the present disclosure.
Fig. 41 is a schematic diagram of a cross-sectional structure at A-A in a platform assembly according to embodiments of the present disclosure.
Fig. 42 is a schematic diagram of a cross-sectional structure of an adjustment rack of a platform assembly according to embodiments of the present disclosure.
Fig. 43 is a schematic diagram of a three-dimensional structure of an abutment member of a platform assembly according to embodiments of the present disclosure.
Fig. 44 is a schematic diagram of a side structure of an abutment member of a platform assembly according to embodiments of the present disclosure.
Fig. 45 is a schematic diagram of a three-dimensional structure of a forming platform of a platform assembly according to embodiments of the present disclosure.
Fig. 46 is a schematic diagram of a three-dimensional structure of a forming platform of a platform assembly according to embodiments of the present disclosure.
Fig. 47 is a top view of a platform body of a platform assembly according to embodiments of the present disclosure.
Fig. 48 is a schematic diagram of a three-dimensional structure of a platform body according to embodiments of the present disclosure.
Fig. 49 is a schematic diagram of a side structure of a locking mechanism when being in a locking position after being assembled with a forming platform and a platform fixing rack according to embodiments of the present disclosure.
Fig. 50 is a schematic diagram of a side structure of a locking mechanism when being in an unlocking position after being assembled with a forming platform and a platform fixing rack according to embodiments of the present disclosure.
Fig. 51 is a schematic diagram of a three-dimensional structure of a locking mechanism when being in a locking position according to embodiments of the present disclosure.
Fig. 52 is a schematic diagram of a three-dimensional structure of a locking mechanism when being in an unlocking position according to embodiments of the present disclosure.
Fig. 53 is a schematic diagram of a three-dimensional structure of a force applying member of a locking mechanism according to embodiments of the present disclosure.
Fig. 54 is a schematic diagram of a three-dimensional structure of a mounting rack of a locking mechanism according to embodiments of the present disclosure.
Fig. 55 is another schematic structural diagram of a side in a three-dimensional printing device in which a locking mechanism is in a locking position after being assembled with a forming platform and a platform fixing rack according to embodiments of the present disclosure.
Fig. 56 is another schematic structural diagram of a side in a three-dimensional printing device in which a locking mechanism is in an unlocking position after being assembled with a forming platform and a platform fixing rack according to embodiments of the present disclosure.
Fig. 57 is a three-dimensional view of a local structure of a three-dimensional printing device according to embodiments of the present disclosure.
Fig. 58 is a cross-sectional view of a local structure of a three-dimensional printing device according to embodiments of the present disclosure.
Fig. 59 is a three-dimensional view of a clamping assembly of a material tray and a clamping member of a frame of a three-dimensional printing device according to embodiments of the present disclosure.
Fig. 60 is a cross-sectional view of a three-dimensional printing device in which a clamping assembly of a material tray and a clamping member of a frame are in a locking state according to embodiments of the present disclosure.
Fig. 61 is a cross-sectional view of a three-dimensional printing device in which a clamping assembly of a material tray and a clamping member of a frame are in an unlocking state according to embodiments of the present disclosure.
Fig. 62 is a cross-sectional view of a locking structure in a three-dimensional printing device when being locked according to embodiments of the present disclosure.
Fig. 63 is a cross-sectional view of the locking structure when being unlocked of Fig. 62.
Fig. 64 is a cross-sectional view of another angle of the locking structure when being locked of Fig. 62.
Fig. 65 is a cross-sectional view of another angle of the locking structure when being unlocked of Fig. 63.
Fig. 66 is an explosive view of the locking structure of Fig. 62.
Fig. 67 is an exploded three-dimensional view of another angle of the locking structure of Fig. 61.
Fig. 68 is a three-dimensional view of a transmission structure and a buffer member of the locking structure of Fig. 62.
Fig. 69 is a three-dimensional view of another angle of the transmission structure and the buffer member of Fig. 68.
Fig. 70 is a cross-sectional view of a local structure of the three-dimensional printing device of Fig. 62.
Fig. 71 is a diagram of a local structure of the three-dimensional printing - device of Fig. 62. according to embodiments of the present disclosure.
Fig. 73 is a partial enlarged view of F in Fig. 72.
Fig. 74 is an exploded structural view of another angle of a material tray of a three-dimensional printing device according to embodiments of the present disclosure.
Fig. 75 is a partial enlarged view of G in Fig. 74.
Fig. 76 is a partial cross-sectional view I of a material tray of a three-dimensional printing device according to embodiments of the present disclosure.
Fig. 77 is a partial enlarged view of H in Fig. 76.
Fig. 78 is a partial cross-sectional view II of a material tray of a three-dimensional printing device according to embodiments of the present disclosure.
Fig. 79 is a partial enlarged view of I in Fig. 78.
Fig. 80 is a partial cross-sectional view III of a material tray of a three-dimensional printing device according to embodiments of the present disclosure.
Fig. 81 is a partial enlarged view of J in Fig. 80.
Fig. 82 is an exploded view of a local structure of a three-dimensional printing device according to embodiments of the present disclosure.
Fig. 83 is a three-dimensional view of a local structure of a material tray of a three-dimensional printing device according to embodiments of the present disclosure.
Fig. 84 is a three-dimensional view of a local structure of a three-dimensional printing device according to embodiments of the present disclosure.
Fig. 85 is an exploded view of a local structure of a three-dimensional printing device according to embodiments of the present disclosure.
Fig. 86 is a bottom view of a local structure of a material tray of a three-dimensional printing device according to embodiments of the present disclosure.
Fig. 87 is an exploded view of a local structure of a material tray of a three-dimensional printing device according to embodiments of the present disclosure.
Fig. 88 is a partial enlarged view of K in Fig. 87.
Fig. 89 is a partial enlarged view of L in Fig. 87.
Fig. 90 is a schematic diagram of partial structure of a functional mechanism according to embodiments of the present disclosure.
Fig. 91 is an exploded view of partial structure in a three-dimensional printing device according to embodiments of the present disclosure.
Fig. 92 is a partial enlarged view of M in Fig. 91.
Fig. 93 is a three-dimensional view of one angle of a screen mechanism of a three-dimensional printing device according to embodiments of the present disclosure.
Fig. 94 is a three-dimensional view of another angle of a screen mechanism of a three-dimensional printing device according to embodiments of the present disclosure.
Fig. 95 is a three-dimensional view of still another angle of a screen mechanism of a three-dimensional printing device according to embodiments of the present disclosure.
Fig. 96 is a cross-sectional view of C-C in Fig. 95.
Fig. 97 is a partial enlarged view of N in Fig. 96.
Fig. 98 is a partial enlarged view of O in Fig. 96.
Fig. 99 is a three-dimensional view of a supporting member of a three-dimensional printing device according to embodiments of the present disclosure.
Fig. 100 is a diagram of a connection relationship of a control mechanism of a three-dimensional printing device according to embodiments of the present disclosure.
Fig. 101 is a block flowchart of a three-dimensional printing method according to embodiments of the present disclosure.
Fig. 102 is a block flowchart of an automatic liquid supplementing step of a three-dimensional printing method according to embodiments of the present disclosure.
Fig. 103 is a flowchart of a control method of an optional three-dimensional printing device according to embodiments of the present disclosure.
Fig. 104 is a schematic diagram of a forming platform and a screen of a control method of an optional three-dimensional printing device according to embodiments of the present disclosure.
Fig. 105 is a schematic diagram of a control method of an optional three-dimensional printing device in which an angle between a screen and a horizontal plane is changeable according to embodiments of the present disclosure.
Fig. 106 is a schematic diagram of a control method of an optional three-dimensional printing device in which an angle between a forming platform and a horizontal plane is changeable according to embodiments of the present disclosure.
Fig. 107 is a flowchart of a control method of another optional three-dimensional printing device according to embodiments of the present disclosure.
Fig. 108 is a bottom view of a three-dimensional printing device of a control method of an optional three-dimensional printing device according to embodiments of the present disclosure.
Fig. 109 is a schematic diagram of a multi-layer printed object of a control method of an optional three-dimensional printing device according to embodiments of the present disclosure.
Fig. 110 is a schematic diagram of a three-dimensional structure of a platform assembly according to embodiments of the present disclosure.
Fig. 111 is a schematic diagram of a three-dimensional structure of a platform assembly according to embodiments of the present disclosure.
Fig. 112 is a three-dimensional view of a screen mechanism and a frame of a three-dimensional printing device according to embodiments of the present disclosure.
Fig. 113 is a cross-sectional view of D-D in Fig. 112.
Fig. 114 is a partial enlarged view of P in Fig. 113.
Fig. 115 is a three-dimensional view of a supporting member of a screen mechanism according to embodiments of the present disclosure.
Fig. 116 is a three-dimensional view of a fixed base of a functional mechanism according to embodiments of the present disclosure.
Fig. 117 is an enlarged view of Q in Fig. 116.
Fig. 118 is a three-dimensional view of a connector base of a functional mechanism.
Fig. 119 is a schematic diagram of a local structure of a three-dimensional printing device according to the present disclosure.
Fig. 120 is a schematic diagram of partial structure of a flow intercepting assembly in a three-dimensional printing device according to embodiments of the present disclosure.

### Detailed Description of the Embodiments

In order to make objectives, technical solutions, and advantages of embodiments of the present disclosure clearer, the technical solutions in the embodiments of the present disclosure will be clearly and completely described below in combination with the drawings in the embodiments of the present disclosure. It is apparent that the described embodiments are part of the embodiments of the present disclosure, not all the embodiments. All other embodiments obtained by those of ordinary skill in the art on the basis of the embodiments in the present disclosure without creative work all fall within the scope of protection of the present disclosure.

It is to be noted that similar numbers and letters indicate similar items in the following drawings, so once a certain item is defined in one drawing, no further definitions and explanations are required for same in the subsequent drawings.

It is to be noted that the features in the embodiments of the present disclosure may be combined with one another without conflict.

3D printing technologies are to create three-dimensional entities by using three-dimensional printing devices in a layer-by-layer manner according to three-dimensional model data of objects. The 3D printing technologies may obtain a special structure that cannot be realized by existing conventional machining, thereby realizing simplified production of any complex structural component. Existing 3D printing technologies include laser SLA, DLP, LCD, Fused Deposition Modeling (FDM), Selective Laser Sintering (SLS), etc.

In some related technologies, the addition of a photosensitive resin system by some light-curing three-dimensional printing devices mainly depends on a liquid pump to pump a photosensitive resin to a photosensitive resin pool from a photosensitive resin bottle. However, the photosensitive resin in this structure system needs to pass through a liquid pump input tube, a pump body, and a liquid pump output tube. When the photosensitive resin is added, there may be residual photosensitive resin in the liquid pump input tube, the pump body, and the liquid pump output tube, and the residual photosensitive resin has at least the following two risks.
(1) The photosensitive resin is cured in the liquid pump input tube, the pump body, and the liquid pump output tube, causing blocking or damages to an automatic liquid supplementing system.
(2) If the photosensitive resin is not cured in the liquid pump input tube, the pump body, and the liquid pump output tube, and the type of photosensitive resin is changed for a next printing, the residual photosensitive resin causes some contamination to the photosensitive resin newly changed, affecting a printing effect, thereby resulting in a great printing risk.

In some related technologies, a three-dimensional printing device adds the photosensitive resin system through the action of gravity, and a material storage apparatus is hung upside down on a material tray for liquid addition, causing the following problems.
(1) A printing material in the material storage apparatus reduces as using time passes, a feeding speed of the material from which to the material tray gradually changes, such that a flow rate of the added material cannot be controlled stably.
(2) Liquid addition is constantly performed, and the flowing of the resin causes instability during exposure curing, resulting in printing defects or printing failures.
(3) If the material is added too much, resistance during printing increases, and even the printing material overflows, thus damaging a printer.
(4) A liquid level of the printing material in the material tray is relatively high, and consumption of the printing material requires a long time of printing, it is possible that the printing material is exposed to outside light before being consumed by printing during a long period of time, which may leads to undesired cured or deteriorated printing material to a certain extent, producing residues in the printing material in the material tray, thus affecting printing quality.

In order to improve at least one defect in the related art, embodiments of the present disclosure provide a three-dimensional printing device and a three-dimensional printing method, which can realize automatic liquid supplementing, and may maintain a low liquid level, thereby improving efficiency and reducing manpower costs. For easy of understanding of the three-dimensional printing method provided in the embodiments of the present disclosure, the three-dimensional printing device provided in the embodiments of the present disclosure is first introduced below.

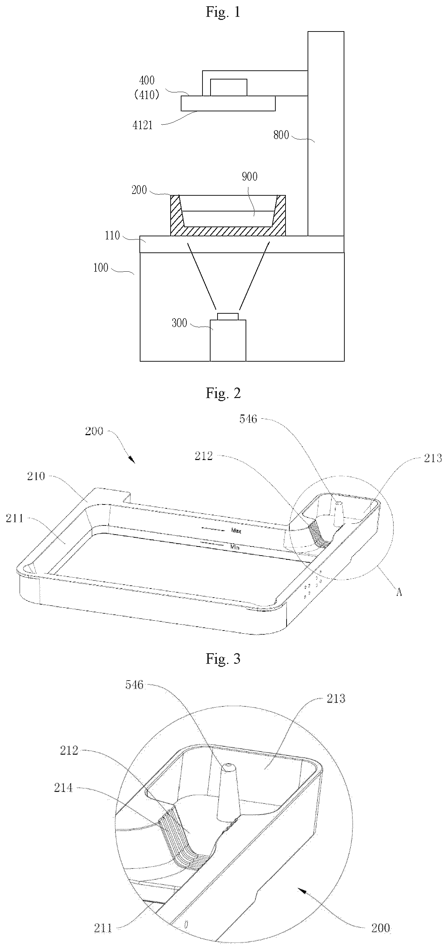

As shown in Figs. 1-3, a three-dimensional printing device of the embodiments of the present disclosure mainly includes a frame 100, a material tray 200, an illumination mechanism 300, a forming platform 410, and a platform driving mechanism 800. The frame 100 includes a base plate 110; the material tray 200 is disposed on the base plate 110; the material tray 200 is configured to hold a printing material; a primary groove 211, a channel 212, and a secondary groove 213, which are in communication in sequence, are defined in the material tray 200; the illumination mechanism 300 is located below the material tray 200, so as to project light toward the material tray 200; the platform driving mechanism 800 may be configured to drive the forming platform 410 to move; and the forming platform 410 is configured to allow the printing material in the primary groove 211 to be adhered layer by layer, so as to obtain a printed object. In this embodiment, the mechanisms of the three-dimensional printing device cooperate with each other, so as to form the printing material into a printed object required.

Specifically, the forming platform 410 may have a forming surface 4121; the forming surface 4121 is configured to allow the printed object to be adhered on it; and the forming platform 410 does reciprocating movement on a path close to or away from the base plate 110. The forming surface 4121 of the forming platform 410 is generally a surface on a side of the forming platform 410 that faces toward the base plate 110, so as to be opposite to a plate surface of the base plate 110. In a printing process, the printed object may be cured on the forming surface 4121 layer by layer, and with the formation of the printed object layer by layer, the forming platform 410 is gradually raised. The base plate 110 may have a light-transmitting region. The primary groove 211 of the material tray 200 may be placed in the light-transmitting region, and a material of a portion, corresponding to the light-transmitting region, of the material tray 200 may be a transparent material. The primary groove 211 of the material tray 200 is configured to carry the printing material. The illumination mechanism 300 may be disposed below the base plate 110 corresponding to the light-transmitting region; the material tray 200 and the forming platform 410 are correspondingly located above the base plate 110; the illumination mechanism 300 may emit a light beam; and the light beam passes through the light-transmitting region of the base plate 110 and then enters the primary groove 211 of the material tray 200, such that the printing material in the primary groove 211 can be cured. During 3D printing, the forming platform 410 gradually approaches the material tray 200 and immerses the forming surface 4121 in the printing material carried by the primary groove 211 of the material tray 200, and the light of the illumination mechanism 300 passes through the light-transmitting region and then illuminates in the primary groove 211, such that the printing material located between the bottom of the primary groove 211 and the forming surface is cured, and cured on the forming surface of the forming platform 410, or cured on a previous layer of printing material that has been cured on the forming surface.

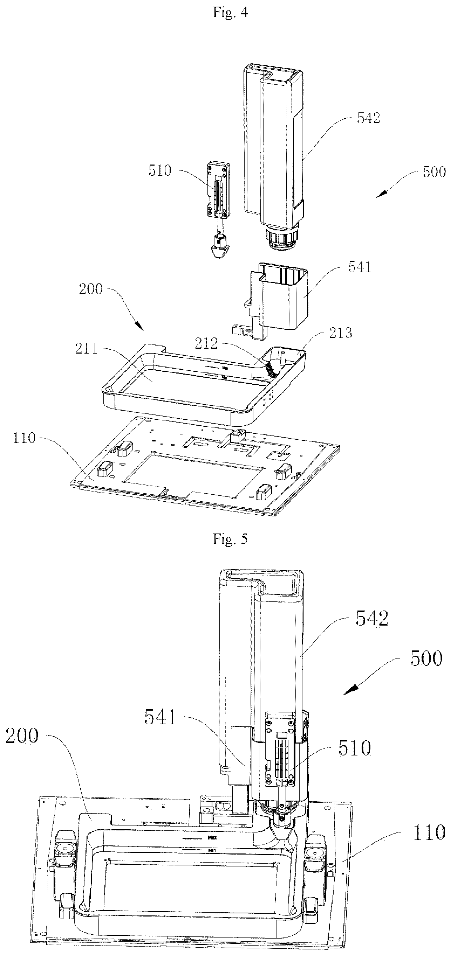

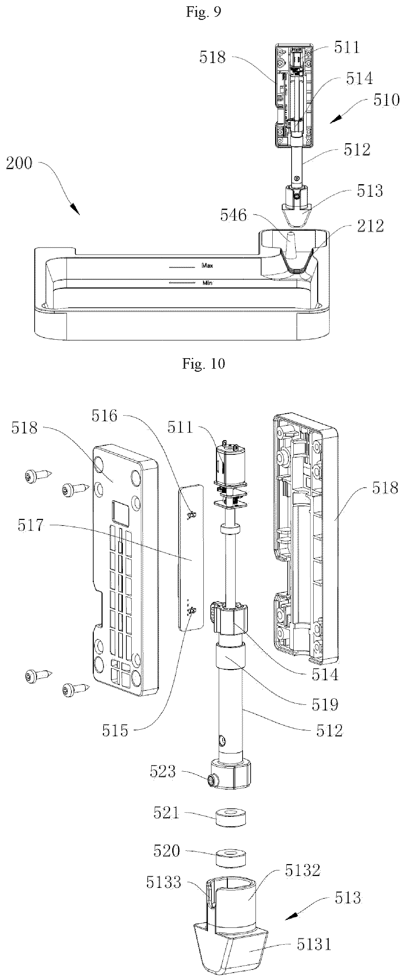

Referring to Figs. 4-9, in an implementation, the three-dimensional printing device includes an automatic liquid supplementing mechanism 500. The automatic liquid supplementing mechanism 500 includes a flow intercepting assembly 510. The flow intercepting assembly 510 is configured to block or open the channel 212 such that the printing material in the secondary groove 213 flows into the primary groove 211 via the channel 212. The formation of the flow intercepting assembly 510 includes, but is not limited to, at least one of an electric pushing rod, an electric baffle, or a gate valve. In a operation process, the secondary groove 213 may be constantly stocked with the printing material for supplying to the primary groove 211. When a liquid level of the printing material in the primary groove 211 is high or the printing material is not required to be added to the primary groove 211 temporarily, the printing material in the secondary groove 213 may be prevented from flowing into the primary groove 211 by controlling the flow intercepting assembly 510 to block the channel 212 between the secondary groove 213 and the primary groove 211 of the material tray 200; otherwise, when the liquid level is low or the printing material is required to be added to the primary groove 211, the flow intercepting assembly 510 may be controlled to open the channel 212 between the secondary groove 213 and the primary groove 211 of the material tray 200, and the printing material in the secondary groove 213 may flow into the primary groove 211, thereby achieving a function of adding liquid to the primary groove 211. Preferably, a groove bottom of the secondary groove 213 of the material tray 200 is higher than a groove bottom of the primary groove 211, such that after the flow intercepting assembly 510 opens the channel 212, the printing material in the secondary groove 213 may flow into the primary groove 211 under the action of gravity. More preferably, the groove bottom of the secondary groove 213 of the material tray 200 is higher than the liquid level of the printing material in the primary groove 211 under normal operation, such that after the flow intercepting assembly 510 opens the channel 212, the printing material in the secondary groove 213 may flow into the primary groove 211 under the action of gravity, and the printing material in the primary groove 211 may be prevented from reversely entering the secondary groove 213 to avoid polluting the printing material in the secondary groove 213. The automatic liquid supplementing mechanism in this implementation may complete the supplementing of the printing material in the primary groove 211 of the material tray 200 without an additional liquid pump and conveying tube, such that risks caused by residual photosensitive resin in the liquid pump and conveying tube after the addition of the printing material in the related art may be avoided. In this implementation, the channel may be opened at a desired time to add liquid to the primary groove according to requirements through the flow intercepting assembly. Compared to a manner of directly hanging a material storage apparatus upside down above the material tray for liquid addition, liquid addition does not need to be constantly performed, such that the problem of instability during exposure curing caused by the continuous flowing of the printing material is avoided, and the problems of too much addition of the printing material causing an increase in the resistance during printing, affecting printing quality, or damage to the three-dimensional printing device due to the overflowing of the printing material may also be avoided.

In an implementation, the automatic liquid supplementing mechanism 500 further includes a detection assembly 530. The detection assembly 530 is configured to obtain liquid level information of the printing material in the primary groove 211, and the flow intercepting assembly 510 blocks or opens the channel 212 according to the liquid level information. During the operation of the three-dimensional printing device, the detection assembly 530 acquires the liquid level information of the printing material in the current primary groove 211. When the liquid level is high, the flow intercepting assembly 510 is controlled to block the channel 212 between the secondary groove 213 and the primary groove 211 of the material tray 200, and the printing material in the secondary groove 213 cannot flow into the primary groove 211; otherwise, when the liquid level corresponding to the liquid level information, acquired by the detection assembly 530, of the printing material in the current primary groove 211 is low, the flow intercepting assembly 510 is controlled to open the channel 212 between the secondary groove 213 and the primary groove 211 of the material tray 200, and the printing material in the secondary groove 213 flows into the primary groove 211, so as to add liquid to the primary groove 211. Through the arrangement of the detection assembly 530 in this implementation, the flow intercepting assembly 510 may be controlled to block or open the channel 212 according to the liquid level information of the printing material in the primary groove 211, such that addition and supplementing of the printing material in the primary groove 211 may be automatically realized, and the disadvantages of constantly adding liquid, instable light curing caused by addition of too much liquid, failed printing are overcome, thereby improving operation efficiency, and reducing manpower costs.

In partial application scenario, a low liquid level may be preset as a target liquid level. Specifically, a specific position of the preset target liquid level is not limited in this application scenario, and the target liquid level may be set together according to a shape and size of the primary groove 211, as well as the impact of other related components of the three-dimensional printing device. In this application scenario, an amount of the printing material with the target liquid level may be less than a total consumption amount of the printing material in a printing process, that is, cannot meet an amount required by the three-dimensional printing device to complete printing once, such that automatic liquid addition is required during the printing process. Furthermore, in other application scenarios, the amount of the printing material with the target liquid level may also meet the consumption amount for printing once or printing for several times. For example, when the consumption amount for just printing once may be met, the printing material may be added at next printing, and in this case, the adding amount may be determined according to monitoring of the liquid level. In this application scenario, since the liquid level may be a low liquid level, the printing material in the primary groove 211 of the material tray 200 is always maintained at the low liquid level by the automatic liquid supplementing mechanism, a contact between the printing material in the primary groove 211 and external light can be reduced to greatly reduce the probability of unnecessary curing caused by the contact between the printing material and the external light, so as to reduce the likelihood of generating residues in the primary groove 211 of the material tray 200, thereby reducing risks of adverse effects on printing quality .

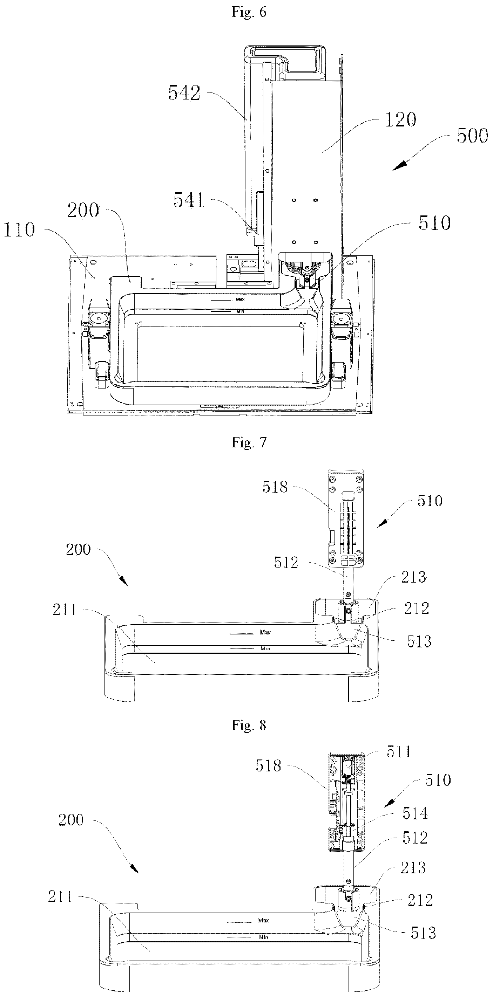

In an implementation, as shown in Fig. 6, the frame 100 of the three-dimensional printing device further includes a mounting plate, the mounting plate is fixedly mounted on the base plate 110, and the flow intercepting assembly 510 is provided on the mounting plate. As a part of the frame 100, the base plate 110 has strong stability. The material tray 200 is directly fixed on the base plate 110, and the flow intercepting assembly 510 is mounted to the base plate 110 through the mounting plate, such that a fixed position of the flow intercepting assembly 510 in a space is unchanged relative to the channel 212 on the material tray 200. In this way, during operation, the flow intercepting assembly 510 may be prevented from affecting a blocking effect on the channel 212 due to an offset in the fixed position of the flow intercepting assembly itself, thereby improving the accuracy of the operation of the flow intercepting assembly 510.

In an implementation, as shown in Figs. 8-12, the flow intercepting assembly 510 may mainly include a drive member 511, a push rod 512, and a blocking member 513; and the drive member 511, the push rod 512, and the blocking member 513 are connected in sequence. The drive member 511 is mechanically connected to a first end of the push rod 512, so as to drive the push rod 512 to do displacement motion. The blocking member 513 is provided on a second end of the push rod 512; and the blocking member 513 is configured to be cooperated with the channel 212. The drive member 511 is configured to drive the push rod 512 to drive the blocking member 513 to move toward or away from the channel 212, so as to block or open the channel 212. Under the driving of the drive member 511, the blocking member 513 can move relative to the channel 212. Optionally, the drive member 511 may drive the blocking member 513 to move along a straight line. In this embodiment, the blocking member 513 is always located right above the channel 212, the blocking member 513 may do reciprocating movement in a direction perpendicular to the base plate 110, and at the same time, an extending direction of the push rod 512 is also vertical to the base plate 110, such that a driving distance of the drive member 511 may be shortened by fully using an extending length of a rod member. Specifically, the drive member 511 may be a motor, for example, a stepping motor, or the like, preferably a linear stepping motor. Definitely, the drive member may also be other mechanisms that can provide power.

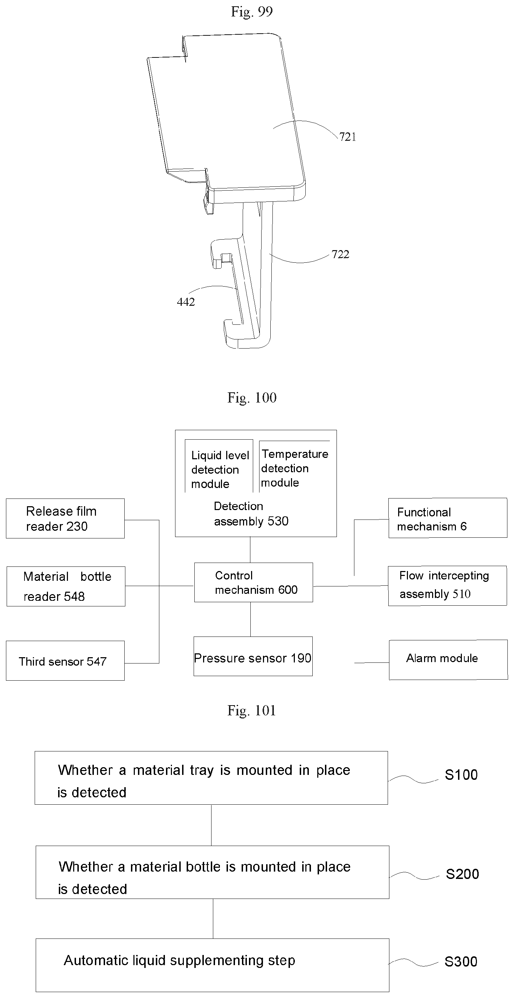

In an implementation, the drive member 511 is configured to drive the blocking member 513 to move between a termination position at which the channel 212 is blocked and an initial position at which the channel 212 is opened. The flow intercepting assembly 510 further includes a triggering member 514, a first sensor 515, and a second sensor 516. The first sensor 515 is configured to associate with the triggering member 514 when the blocking member 513 reaches the termination position, so as to output a blocking member termination sensing signal. The second sensor 516 is configured to associate with the triggering member 514 when the blocking member 513 reaches the initial position, so as to output an initial blocking member sensing signal. As shown in Fig. 100, a printer of the embodiments of the present disclosure further includes a control mechanism 600. The flow intercepting assembly 510 and the detection assembly 530 are electrically connected to the control mechanism 600. The flow intercepting assembly 510 may complete corresponding operations under the control of the control mechanism 600. The control mechanism 600 may be a main control board.

In the above implementation, the termination position and the initial position may be understood as two limit positions during movement of the blocking member 513, that is, the first sensor 515 and the second sensor 516 may be configured to detect the two limit positions of the blocking member 513. In this embodiment, the blocking member 513 does linear motion, and two ends of a motion path of the blocking member are respectively the termination position and the initial position. The first sensor 515 is configured to output the blocking member termination sensing signal to the control mechanism 600 when the blocking member 513 reaches the termination position. The second sensor 516 is configured to output the initial blocking member sensing signal to the control mechanism 600 when the blocking member 513 reaches the initial position. The blocking member termination sensing signal and the initial blocking member sensing signal facilitate the control mechanism 600 in acquiring the position information of the blocking member 513, so as to control the blocking member to start moving or stop moving. Since the push rod 512 and the blocking member 513 move synchronously, the triggering member 514 may be selectively arranged on the blocking member 513, or may also be selectively arranged on the push rod 512. For example, the triggering member 514 may be arranged on the push rod 512, the first sensor 515 is arranged in a position corresponding to the position of the triggering member 514 when the blocking member 513 reaches the termination position, and the second sensor 516 is arranged in a position corresponding to the position of the triggering member 514 when the blocking member 513 reaches the initial position. That is to say, the first sensor 515 and the second sensor 516 are respectively disposed in a region corresponding to a start position of the triggering member 514 and a region corresponding to an end position. When the triggering member 514 moves with the push rod 512 and reaches the start position or end position, the triggering member 514 on the push rod 512 triggers the corresponding first sensor 515 or second sensor 516.

In the above implementations, the first sensor 515 and the second sensor 516 may be a suitable type of sensors for detecting whether the blocking member 513 is in place. For example, the sensor may be a proximity switch. The first sensor 515 and the second sensor 516 may both be hall sensors. The triggering member 514 may be a magnetic member. Whether the blocking member 513 is in place is determined through an electrical signal generated by the hall sensor receiving a magnetic induction signal. The flow intercepting assembly 510 may include a circuit board 517. The hall sensor is disposed on the circuit board 517 and transmits the electrical signal to the control mechanism 600 of the three-dimensional printing device through the circuit board 517. The control mechanism 600 may determine whether the blocking member 513 has reached the initial position or termination position according to the electrical signal, so as to control the starting and stopping of the drive member 511, thereby avoiding damages to the drive member 511. For another example, the sensor may also be a mechanical sensor. The first sensor 515 and the second sensor 516 may both be micro-switches. The triggering member 514 is a toggle member. Whether the blocking member 513 is in place is determined through an electrical signal generated after mechanical structure interference between the micro-switch and the toggle member is triggered. The micro-switch is also disposed on the circuit board 517 and transmits the electrical signal to the control mechanism 600 of the three-dimensional printing device through the circuit board 517. The control mechanism 600 may determine whether the blocking member 513 has reached the initial position or termination position according to the electrical signal, so as to control the starting and stopping of the drive member 511, thereby avoiding damages to the drive member 511.

In an implementation, the flow intercepting assembly 510 may further include an outer housing 518. The outer housing 518 includes an accommodating space having an opening portion. The drive member 511, the triggering member 514, the first sensor 515, and the second sensor 516 are all located in the accommodating space. The push rod 512 runs through the opening portion. One end of the push rod 512 is connected to the drive member 511 by extending into the accommodating space, and the other end of the push rod 512 is located outside the outer housing 518 and connected to the blocking member 513. The push rod 512 is configured to extend or retract from the opening portion under the action of the drive member 511 such that the blocking member 513 moves between the termination position and the initial position. The outer housing 518 may act as a fixed carrier for structures such as the drive member 511, the first sensor 515, the second sensor 516, the circuit board 517, etc., and may also protect components therein. Further, a graphite copper sleeve 519 is also provided in the outer housing 518. The graphite copper sleeve 519 is fixed on the outer housing 518 and sleeved on the push rod 512. The graphite copper sleeve 519 are mainly used for lubrication and limiting purposes. On one hand, the push rod 512 and the blocking member 513 may be defined to do reciprocating movement in the direction perpendicular to the base plate 110, and on the other hand, the smoothness of the reciprocating movement of the push rod 512 may be maintained.

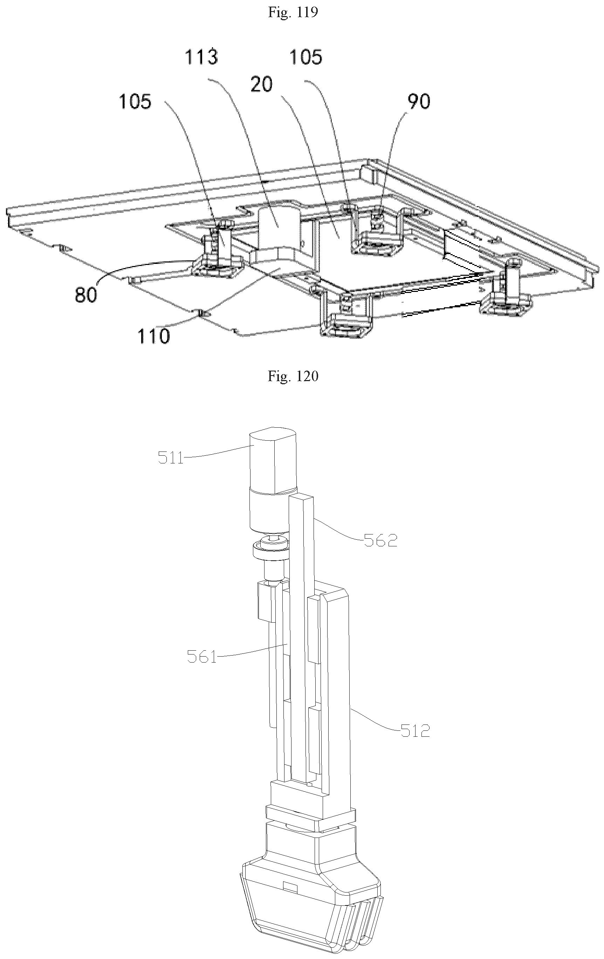

In an implementation, as shown in Fig. 120, the flow intercepting assembly further includes a sliding block 561 and a sliding rail 562, which are located in the accommodating space of the outer housing 518 and cooperated with each other. The sliding rail 562 is mounted on the outer housing 518, and the sliding block 561 is connected to the drive member 511 and the push rod 512. Specifically, the sliding block 561 is connected to the drive member 511, and the push rod 512 may be mounted on the sliding block 561. When the drive member 511 operates, the sliding block 561 may be driven to move. Due to the limitation of the sliding rail 562, the sliding block 561 can drive the push rod 512 to stably move, thereby improving the movement stability of push rod 512.

In an implementation, the blocking member 513 is detachably connected to the push rod 512; a first connecting member 520 is provided on the blocking member 513; and a second connecting member 521 cooperated with the first connecting member 520 is provided on an end of the push rod 512 that is away from the drive member 511. The mating manner of the first connecting member 520 and the second connecting member 521 may realize a quick connection between the blocking member 513 and the push rod 512. When the type of the printing material is changed, the blocking member 513 may be dismounted and cleaned to avoid pollution. Optionally, the first connecting member 520 and the second connecting member 521 may both be magnetic members, for example, the first connecting member 520 and the second connecting member 521 both are magnets. Alternatively, one of the first connecting member 520 and the second connecting member 521 is a magnetic member, and the other one is a magnetically conductive member, for example, the magnetic member is the magnet, and the magnetically conductive member may select an iron member.

In an implementation, the blocking member 513 includes a blocking portion 5131 and a sleeve 5132, which are connected with each other; a limiting recess 5133 radially running through a wall of the sleeve 5132 is formed on an end of the sleeve 5132 that is away from the blocking portion 5131; the push rod 512 is provided with a limiting protrusion 523 cooperated with the limiting recess 5133; in a state that the blocking member 513 is connected to the push rod 512, the sleeve 5132 is sleeved on an end of the push rod 512 that is away from the drive member 511; and the limiting protrusion 523 is snapped into the limiting recess 5133 to limit circumferential rotation of the blocking member 513.

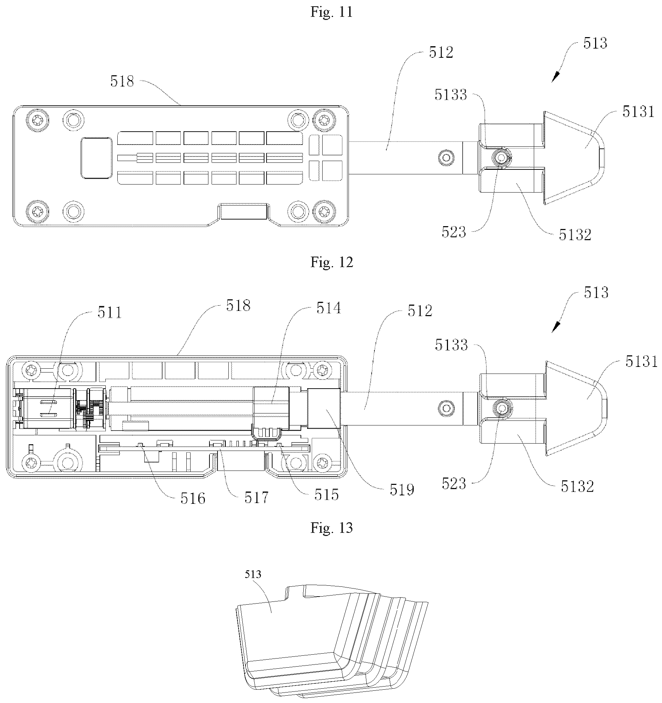

Further, a plurality of linear protrusions are arranged on the channel 212; a rubber sleeve is coated on the blocking member 513; and in a state that the blocking member 513 blocks the channel 212, the rubber sleeve is in interference fit with the linear protrusions, thereby ensuring a tight connection between the blocking member 513 and the channel 212. This prevents the printing material in the secondary groove 213 from entering the primary groove 211 when the blocking member 513 blocks the channel 212. As shown in Fig. 13, an outer surface of the blocking member 513 that faces toward the channel 212 may be provided with one or more ribs spaced apart from each other, such that in a blocking state, the mating between the blocking member 513 and the channel 212 is tighter, thereby further improving a blocking effect of the blocking member 513 to the channel 212.

Further, a material of the rubber sleeve is preferably ethylene propylene diene monomer rubber or fluororubber. The ethylene propylene diene monomer rubber is a copolymer of ethylene, propylene, and a small amount of non-conjugated diene, and is a kind of ethylene-propylene rubber. A main chain consists of chemically stable saturated hydrocarbon, and only a side chain contains an unsaturated double bond, causing the rubber sleeve to have good aging-resistant performance such as ozone resistance, heat resistance, weather resistance, etc. A carbon atom of the main chain or the side chain of the fluororubber contains a synthetic polymer elastomer of a fluorine atom, and by introducing the fluorine atom, the rubber sleeve is endowed with excellent heat resistance, oxidation resistance, oil resistance, corrosion resistance, and atmospheric aging resistance.

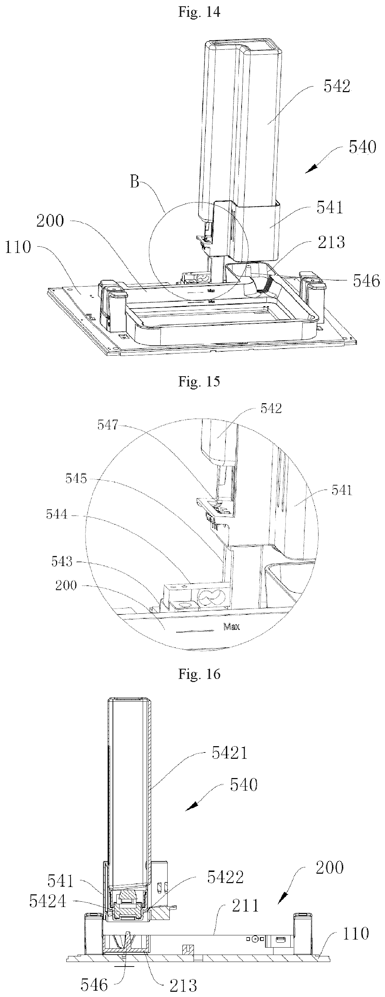

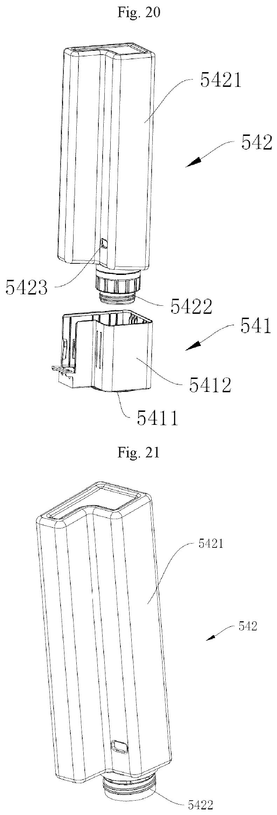

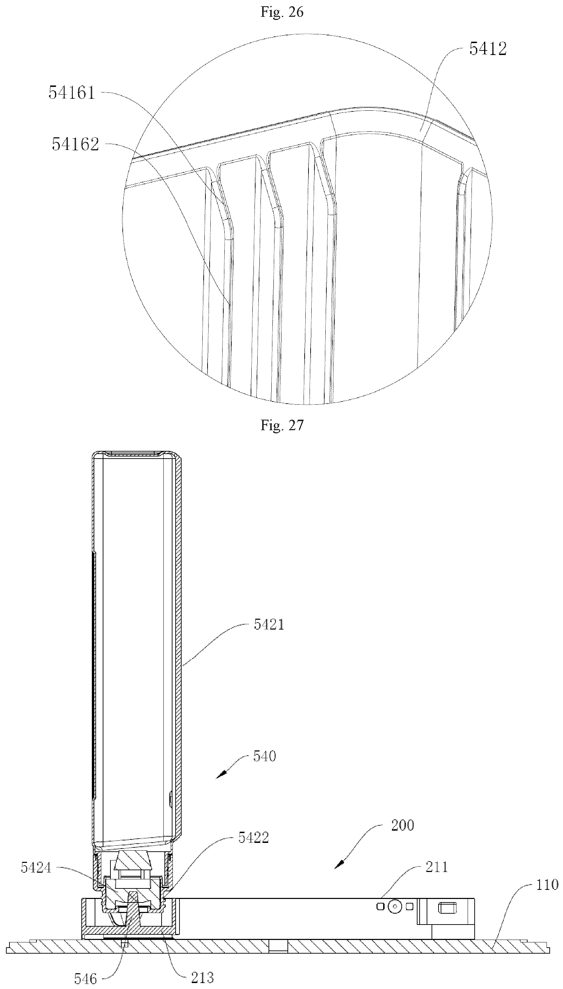

In an implementation, as shown in Figs. 14-27, the automatic liquid supplementing mechanism further includes a liquid adding assembly 540. The liquid adding assembly 540 includes a support rack 541 and a material bottle 542. The support rack 541 includes a support plate 5411 and a limiting plate 5412. An accommodating portion 5413 is defined by the support plate 5411 and the limiting plate 5412. A fixation hole 5414 is provided on the support plate 5411 in a position corresponding to the secondary groove 213. The accommodating portion 5413 is configured to accommodate the material bottle 542. A bottle mouth 5422 of the material bottle 542 runs through the fixation hole 5414 and then extends into the secondary groove 213. The material bottle 542 is configured to store the printing material and add the printing material to the secondary groove 213, and the support rack 541 is configured to support and carry the material bottle 542.

Optionally, the support plate 5411 of the support rack 541 is generally disposed parallel to the base plate 110, so as to provide limit at the bottom. The limiting plate 5412 of the support rack 541 is disposed vertically to the base plate 110. The support plate 5411 and the limiting plate 5412 of the support rack 541 are enclosed to form an accommodating portion 5413 with an open top, such that the material bottle 542 may be inserted into the accommodating portion 5413 toward the support plate 5411. The limiting plate 5412 may be configured to circumferentially limit a bottle body 5421 of the material bottle 542.

Optionally, a contour shape of the accommodating portion 5413 defined by the support rack 541 matches an external contour of the material bottle 542, so as to achieve a good limiting effect. For example, a cross-sectional shape of the bottle body 5421 portion of the material bottle 542 is L-shaped, and an arrangement mode of the limiting plate 5412 in a circumferential direction is in an L shape corresponding to a cross-sectional shape of the accommodating portion 5413.

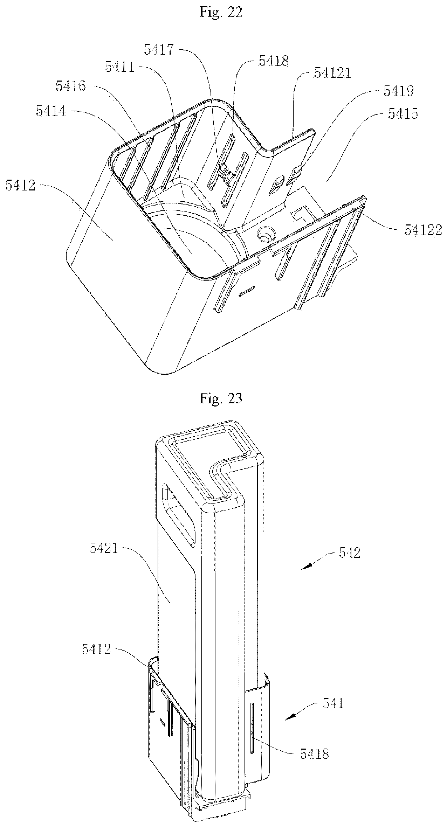

Optionally, the limiting plate 5412 is a semi-enclosed structure in a circumferential direction around a vertical direction. Specifically, the limiting plate 5412 is provided with a vertical gap 5415. For example, as shown in Fig. 22, the limiting plates 5412 include a first limiting plate 54121 and a second limiting plate 54122, which are disposed parallel to each other. The vertical gap 5415 is formed between the first limiting plate 54121 and the second limiting plate 54122. The vertical gap may allow an increased deformation amount of the limiting plate 5412 to prevent the limiting plate 5412 from chipping.

Definitely, the limiting plate 5412 may also be an enclosed structure in a direction around a circumferential direction of the material bottle 542. Specifically, as shown in Figs. 22-27, thus, when the printing material in the material bottle 542 leaks by accident, the limiting plate 5412 enclosed circumferentially can prevent the printing material from flowing to other positions to a certain extent, so as to improve cleanliness.

Optionally, as shown in Figs. 22-26, a rib 5416 is formed on an inner surface of the limiting plate 5412. The rib 5416 includes a guiding section 54161 and a limiting section 54162, which are arranged from top to bottom. The inner surface of the limiting plate 5412 should be understood as a side surface of the limiting plate 5412 that faces toward the accommodating portion 5413. The guiding section 54161 is an inclined portion that is formed at an upper portion of the rib 5416. In an extending direction from top to bottom, the guiding section 54161 is gradually away from the inner surface of the limiting plate 5412. The limiting section 54162 is a vertical portion that is below the rib 5416. The guiding section 54161 is configured to achieve a guiding function to the material bottle 542. In a process of inserting the material bottle 542 in the support rack 541, after an outer wall comes into contact with the guiding section 54161, the guiding section 54161 plays a role in guiding the material bottle 542, causing the bottle mouth 5422 of the material bottle 542 to gradually directly face toward the fixation hole 5414 on the support plate 5411, such that the material bottle 542 is inserted more conveniently, and the workload of position alignment is reduced, thereby improving operation efficiency. The limiting section 54162 may achieve a function of limiting the material bottle 542 in the accommodating portion 5413, causing the material bottle 542 to be stably connected to the support rack 541.

Optionally, as shown in Figs. 22-26, a first protrusion 5417 is formed on the inner surface of the limiting plate 5412, and the material bottle 542 is provided with a concave portion 5423 cooperated with the first protrusion 5417. After the material bottle 542 is mounted in place, a position of the first protrusion 5417 corresponds to the concave portion 5423 on the material bottle 542, and the first protrusion 5417 is snapped into the concave portion 5423 in a matching manner. The arrangement of the first protrusion 5417 and the concave portion 5423 may be used for clamping the material bottle 542 to improve the stability of connecting the support rack 541 and the material bottle 542, and when being mounted in place, the first protrusion 5417 can vibrate or produce a "click" sound when being snapped into the concave portion 5423, so as to provide feedback to an operator, such that a mechanical feedback effect that the material bottle 542 is in place may be achieved. Since during the mounting of the material bottle 542, there is strong interference squeezing between the first protrusion 5417 and a bottle wall of the material bottle 542, and hollow portions 5418 may be respectively provided on the limiting plates 5412 on two sides of the first protrusion 5417, causing the limiting plates 5412 between the hollow portions 5418 to have certain deformation, so as to prevent the first protrusion 5417 from excessively squeezing the bottle body 5421 of the material bottle 542 during the mounting of the material bottle 542.

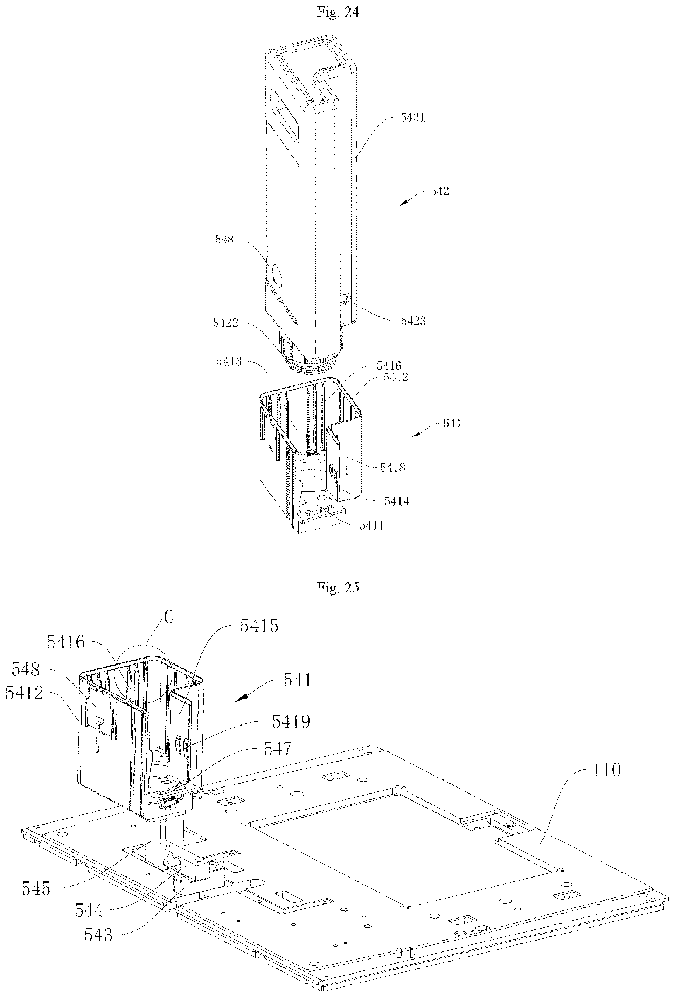

In an implementation, as shown in Fig. 25, the liquid adding assembly 540 further includes a weighing sensor 543, a connecting block 544, and a support frame 545. The weighing sensor 543 is located between the support rack 541 and the base plate 110. The weighing sensor 543 is configured to acquire residue information of the printing material in the material bottle 542. Specifically, the support rack 541 is configured to support the material bottle 542, and is fixedly disposed above the secondary groove 213 of the material tray 200. The support plate 5411 of the support rack 541 is connected to the support frame 545 to support the support rack 541. The support frame 545 is connected to the connecting block 544. The connecting block 544 is fixed on the weighing sensor 543. A total weight of the support frame 545, the support rack 541, the material bottle 542, and the printing material in the material bottle 542 may be obtained through the weighing sensor 543. Therefore, a change in the weight of the printing material in the material bottle 542 may be embodied by a variation of date provided by the weighing sensor 543, thereby reminding the operator to changing the material bottle 542 in time.

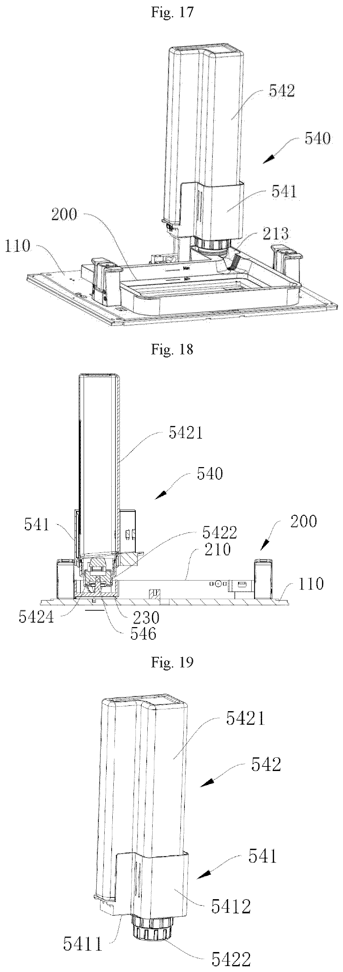

In an implementation, as shown in Figs. 2 and 3, the liquid adding assembly 540 further includes an ejector rod 546 disposed in the secondary groove 213. The material bottle 542 further includes a one-way valve 5424. The one-way valve 5424 is disposed at the bottle mouth 5422 of the material bottle 542. The one-way valve 5424 is configured to block the bottle mouth 5422. When the bottle mouth 5422 of the material bottle 542 faces downward, the one-way valve 5424 causes the printing material in the material bottle 542 to not flow out. In this implementation, the material bottle 542 has an working position as shown in Figs. 17 and 18. In the working position, the material bottle 542 is assembled on the support rack 541, and the ejector rod 546 ejects the one-way valve 5424 to open the bottle mouth 5422 of the material bottle 542. Specifically, in this implementation, in the working position, an end of the ejector rod 546 that is away from the secondary groove 213 pushes against an end of the one-way valve 5424 that faces toward the secondary groove 213, the one-way valve 5424 opens the bottle mouth 5422 of the material bottle 542 under the action of the ejector rod 546, and the printing material in the material bottle 542 flows into the secondary groove 213 via the bottle mouth 5422. When the liquid level in the secondary groove 213 overflows the bottle mouth 5422, due to the effect of air pressure, the printing material in the material bottle 542 does not continuously flow into the secondary groove 213 due to gravity, and when the liquid level in the secondary groove 213 decreases to a level below the bottle mouth 5422, the printing material in the material bottle 542 continuously flows into the secondary groove 213, so as to realize automatic liquid addition to the secondary groove 213. In this implementation, the printing material in the material bottle decreases with the use, then the speed of liquid addition to the secondary groove of the material tray gradually changes, and a flow rate for liquid addition cannot be stably controlled, but after incorporating the flow intercepting assembly and the liquid adding assembly, liquid addition processes in the primary groove and secondary groove of the material tray can be controlled respectively, changes in the flow rate of the liquid addition process of the material bottle to the secondary groove does not affect the primary groove, and corresponding actions of the flow intercepting assembly may realize stable liquid addition from the secondary groove to the primary groove. Further, when the first protrusion 5417 is formed on the inner surface of the limiting plate 5412, and the material bottle 542 is provided with the concave portion 5423, and when the material bottle 542 is in the working position, the first protrusion 5417 is exactly cooperated with the concave portion 5423 in a clamping manner.

Further, the material bottle 542 further has a standby position as shown in Figs. 14-16. As shown in Fig. 25, a supporting portion 5419 is provided on the support rack 541. In the standby position, the material bottle 542 is assembled on the support rack 541. The material bottle 542 is cooperated with the supporting portion 5419 in a limiting manner. An end of the one-way valve 5424 that faces toward the secondary groove 213 is higher than an end of the ejector rod 546 that is away from the secondary groove 213. That is, the supporting portion 5419 is configured to limit the material bottle 542 in a position at which the ejector rod 546 cannot reach the one-way valve 5424. In this case, there is no interference between the ejector rod 546 and the one-way valve 5424, the one-way valve 5424 maintains the state of blocking the bottle mouth 5422, and the printing material in the material bottle 542 does not flow out. The supporting portion 5419 may be selected from various limiting structures that may achieve the above function. For example, as shown in Fig. 25, the supporting portion 5419 is a second protrusion that is formed on the inner surface of the limiting plate 5412. The bottle body 5421 of the material bottle 542 has a top end surface and a bottom end surface. The bottle mouth 5422 is disposed on the top end surface, and in the process of inserting the material bottle 542 in the support rack 541, the top end surface of the bottle body 5421 pushes against an upper edge of the second protrusion, so as to limit the material bottle 542 in the standby position. When the material bottle 542 is required to be adjusted to the working position, the material bottle 542 needs to be pressed down firmly, and the material bottle 542 or the limiting plate 5412 is deformed to cause the material bottle 542 to continuously move downward, until the working position is reached. Preferably, when the vertical gap 5415 is formed on the limiting plate 5412, the supporting portions 5419 may be disposed on the first limiting plate 54121 and the second limiting plate 54122 on two sides of the vertical gap 5415. Since in the process that the material bottle 542 moves from the standby position to the working position, there is a strong squeezing action between the supporting portion 5419 and the bottle wall of the material bottle 542. By disposing the supporting portion 5419 in a position close to the vertical gap 5415, the large deformation degree of the limiting plate 5412 near the vertical gap 5415 is fully taken into consideration, such that excessive squeezing is avoided while an enough squeezing force is provided. For another example, when the first protrusion 5417 is formed on the inner surface of the limiting plate 5412, the first protrusion 5417 may also be directly used as the supporting portion 5419 for use, so as to achieve a function of limiting the material bottle 542 in the standby position, and details are not described herein again.

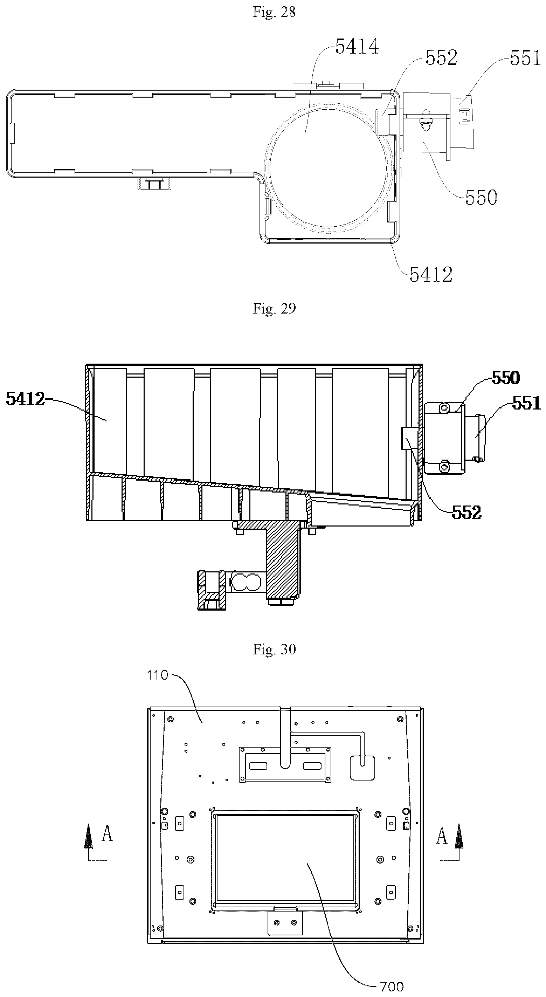

In other implementations, a supporting structure 550 that supports the material bottle 542 to cause the material bottle 542 to be in a supporting position may also be shown in Figs. 28 and 29. Specifically, the supporting structure 550 may be mounted on the limiting plate 5412 of the support rack 541, and includes an operation portion 551 and a telescopic portion 552. The operation portion 551 is located on a side of the limiting plate 5412 that is away from the accommodating portion 5413. The telescopic portion 552 is at least partially located in the accommodating portion 5413 in a telescoping manner. When operations such as pressing and/or rotation are performed on the operation portion 551, the telescoping of the telescopic portion 552 may be realized, such that the telescopic portion 552 is configured to support the material bottle 542 when being in an extended state, so as to cause the material bottle 542 to be in the standby position. When the material bottle 542 is adjusted to the working position, the operations such as pressing and/or rotation may further be performed on the operation portion 551, such that the telescopic portion 552 is in a contracted state without supporting the material bottle 542, and then the material bottle 542 can move downward to reach the working position.

Definitely, the limiting plate 5412 may also be an enclosed structure in a direction around a circumferential direction of the material bottle 542. Specifically, thus, when the printing material in the material bottle 542 leaks by accident, the limiting plate 5412 enclosed circumferentially can prevent the printing material from flowing to other positions to a certain extent, so as to improve cleanliness.

Further, referring to Figs. 14, 15, and 24, the liquid adding assembly 540 further includes a third sensor 547. After the material bottle 542 reaches the working position, the material bottle 542 triggers the third sensor 547, and the third sensor 547 generates a material bottle in-place sensing signal and sends the material bottle 542 in-place sensing signal to the control mechanism 600 of the three-dimensional printing device. The third sensor 547 may be a micro-switch. Through the mechanical structure interference between the micro-switch and the material bottle 542 mounted in place, a movable contact and a stationary contact of the micro-switch are pushed against each other to generate a signal, so as to determine whether the material bottle 542 is in place. The third sensor 547 may be disposed on the support rack 541, and may specifically disposed on the support plate 5411 of the support rack 541, or may also be disposed on the limiting plate 5412.

In an implementation, as shown in Fig. 25, the liquid adding assembly 540 further includes a material bottle identifier storing material bottle identifier information and a material bottle reader 548 configured to identifying the material bottle identifier information. The material bottle identifier is disposed on the material bottle 542. The material bottle reader 548 is disposed on the support rack 541. The material bottle identifier information is configured to record information of the printing material in the material bottle 542. The material bottle reader 548 is configured to read the information of the printing material in the material bottle 542 from the material bottle identifier information. Specifically, the material bottle identifier includes, but is not limited to, at least one of a two-dimensional code, a character code, a digital code, a bar code, a specially-made pattern, an NFC label, an RFID label, or an electronic chip. When the material bottle identifier is a two-dimensional pattern such as the two-dimensional code, the character code, the digital code, the bar code, and the specially-made pattern, the material bottle identifier may be directly sprayed or attached to the surface of the material bottle 542. When the material bottle identifier is a physical structure such as the NFC label, the RFID label, and the electronic chip, a holding groove for holding the material bottle identifier may be provided on the material bottle 542. Specifically, as shown in Fig. 100, when the material bottle 542 is mounted on the support rack 541 in place, the material bottle reader 548 is controlled by the control mechanism 600 of the three-dimensional printing device to cause the material bottle reader to communicate with the material bottle identifier, so as to read the information of the printing material in the material bottle 542 and feed it back to the control mechanism 600. When the control mechanism 600 receives abnormal information of the printing material in the material bottle 542, an alarm module of the three-dimensional printing device may be controlled to output alarms or information to the outside world. An operation mode of the alarm module includes, but is not limited to, a control screen or other modes such as ringing of bells, flashing lights, etc. for alarms or warnings.

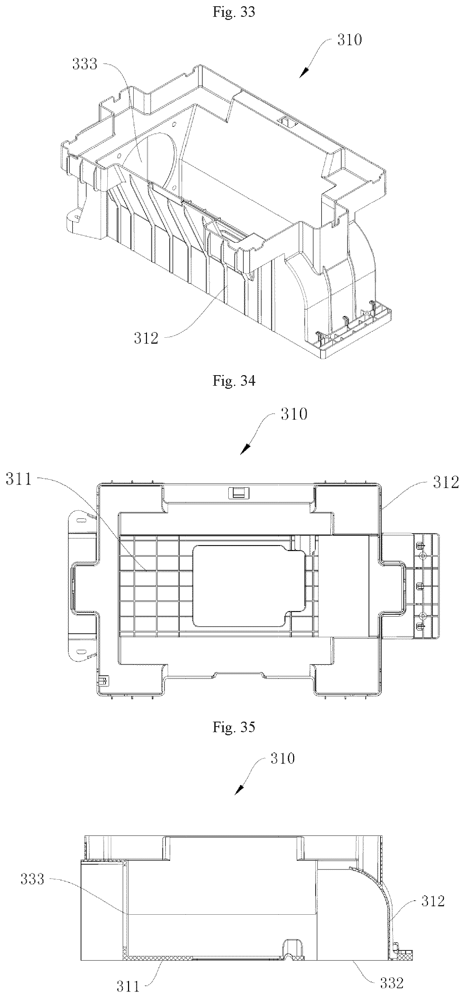

In an implementation, as shown in Figs. 30-35, the three-dimensional printing device further includes a screen mechanism 700, which is disposed on the base plate 110 and located between the material tray 200 and the illumination mechanism 300. The illumination mechanism 300 includes a shielding housing 310 and a light-emitting assembly 320. The shielding housing 310 includes a bottom plate 311 and a side wall 312. The screen mechanism 700 is disposed at the top of the shielding housing 310. The light-emitting assembly 320 is disposed on the bottom plate 311. The light-emitting assembly 320 and the screen mechanism 700 produce a lot of heat during operation, such that it is necessary to dispose a heat dissipation assembly 330 to dissipate heat inside a product.

Optionally, the heat dissipation assembly 330 includes a fan 331, an air inlet 332 provided on the bottom plate 311, and an air outlet 333 provided on the side wall 312. The air inlet 332 and the air outlet 333 are respectively located on two sides of the screen mechanism 700. The fan 331 is configured to drive airflow to enter the shielding housing 310 from the air inlet 332 and leave the shielding housing 310 from the air outlet 333. Due to a suction effect of the fan 331, a negative pressure environment is formed in the shielding housing 310, and external air enters the shielding housing 310 from the air inlet 332 and is discharged from the shielding housing 310 from the air outlet 333. In this process, the heat in the shielding housing 310 is transferred, and since the air inlet 332 and the air outlet 333 are respectively located on the two sides of the screen mechanism 700, an airflow path from the air inlet 332 to the air outlet 333 accelerates the flowing of air near the screen mechanism 700, facilitating the heat dissipation of the screen mechanism 700. It is to be noted that, the shielding housing 310 may be used as a portion of the frame 100, or may also be a structure that is disposed separately from the frame 100. A person skilled in the art may make specific choices as needed.

Further, the heat dissipation assembly 330 further includes a flow guide member 334. The flow guide member 334 has a flow guide surface 3341. The flow guide surface 3341 is configured to guide the airflow entering the shielding housing 310 through the air inlet 332 to the screen mechanism 700, and then to the air outlet 333. Since the air inlet 332 is provided on the bottom plate 311, the airflow at the air inlet 332 enters the shielding housing 310 generally in a vertical direction. The flow guide surface 3341 may guide the airflow entering the air inlet 332 to the screen mechanism 700 to realize targeted heat dissipation on the screen mechanism 700, and a wind guide surface can reduce wind resistance, causing the air to flow into the shielding housing 310 more easily, thereby reducing wind noise. The flow guide member 334 may be a structure that is disposed separately in the shielding housing 310, or may also be implemented by depending on the side wall 312 of the shielding housing 310, specifically by modifying the side wall 312.

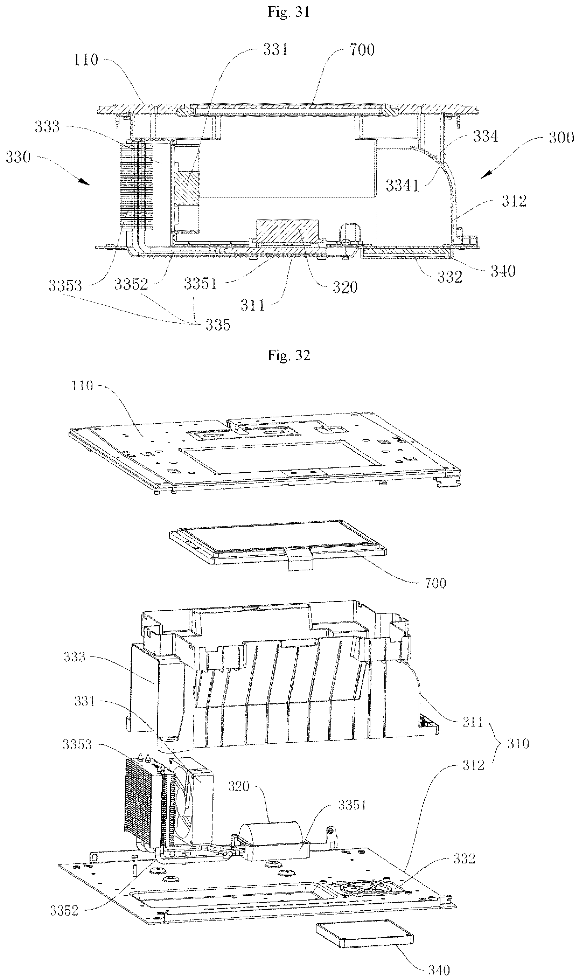

Further, the heat dissipation assembly 330 further includes a heat exchanger 335. The heat exchanger 335 includes an evaporation member 3351, a condensation member 3352, and a connection pipeline 3353. The evaporation member 3351 is disposed on the bottom plate 311 and configured to absorb heat emitted by the light-emitting assembly 320. The condensation member 3352 is disposed at the air outlet 333. The connection pipeline 3353 is configured to connect the evaporation member 3351 and the condensation member 3352. For example, the evaporation member 3351 may include a heat sink. The light-emitting assembly 320 is disposed on the heat sink. A plurality of channels 212 are provided in the heat sink. The condensation member 3352 may include a heat dissipation fin. One end of the connection pipeline 3353 may be embedded in the heat sink and communicates with the channels 212, and the other end may be embedded in the heat dissipation fin. By disposing the heat dissipation fin at the air outlet 333, sufficient heat exchange between the airflow at the air outlet 333 with the heat dissipation fin may be performed. The fan 331 is preferably disposed at the air outlet 333, so as to improve a heat exchange effect of the heat dissipation fin. The connection pipeline 3353 is preferably a copper tube, number of which may be selected according to requirements. For example, in this embodiment, 4 copper tubes are selected in Fig. 32.

Further, a filter is also disposed at the air inlet 332 of the heat dissipation assembly 330. The filter 340 is configured to filter dust carried in the air.

When the three-dimensional printing device of the embodiments of the present disclosure is a light-curing three-dimensional printing device, during 3D printing, the illumination mechanism 300 may project light toward the material tray 200 with the transparent bottom to cause the light-curing material between the forming platform 410 and the bottom of the material tray 200 to undergo the polymerization reaction, so as to obtain the cured sheet, the cured sheet is bonded on the forming platform 410, and by causing the forming platform 410 to move away from the bottom of the material tray 200 and continuously or discontinuously projecting the light toward the bottom of the material tray 200, layer-by-layer curing is realized, and a three-dimensional solid-state printed object is formed ultimately by the stacked cured sheets. The printing process requires high requirements for the fixation, leveling, material, and the like of the forming platform 410. Three-dimensional printing devices for 3D printing in the related art all use a rotary locking structure to fix the forming platform 410. However, for such fixation locking mode, on the one hand, worker assembly efficiency is relatively low, and on the other hand, a fixation effect is common in effectiveness and stability, which is difficult to meet use requirements.

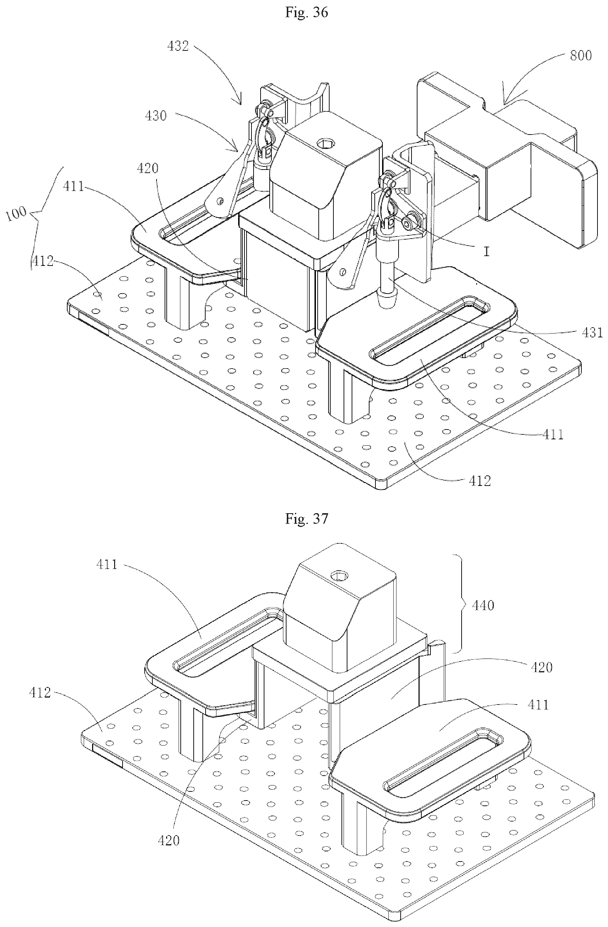

In order to solve the technical problem of a poor fixation effect of the forming platform and low assembly efficiency, as shown in Figs. 36-57, a locking mechanism and a platform mechanism 400, with a good fixation effect and high assembly efficiency, are provided in related implementations of the present disclosure.

In some implementations, as shown in Fig. 1 and Figs. 36-37, the present disclosure provides a locking mechanism 430 applied to the platform mechanism 400, and the platform mechanism applied to the three-dimensional printing device.

Specifically, the three-dimensional printing device includes the platform mechanism 400. The platform driving mechanism 800 is configured to drive the platform mechanism 400 to move. The platform mechanism 400 includes at least one of the forming platform 410, a platform fixing rack 420, the locking mechanism 430 configured to connect the forming platform 410 and the platform fixing rack 420, or a leveling assembly 440 configured to level the forming platform 410.

Furthermore, the forming platform 410 includes a platform body 412. The platform body 412 has the forming surface 4121. The forming surface 4121 has a rough region. A plurality of forming holes 4501 are provided on the forming platform 410. Each forming hole 4501 may run through the forming surface 4121. The rough region may be located in part or all of the region of the forming surface 4121 that is not provided with the forming holes 4501. Further, the rough region may be obtained through processing such as sand blasting, grinding, polishing, and the like.

In an implementation, the forming platform 410 may be hung on the platform fixing rack 420. It may be understood that, during printing, the forming surface 4121 of the platform body 412 needs to be parallel to the bottom of the material tray 200, that is, the forming platform 410 needs to be right hung on the platform fixing rack 420. After printing is completed once, the forming platform 410 and a printed object formed thereon may be adhered with printing materials. In this case, if the forming platform 410 is directly removed for cleaning, on one hand, the printing material is wasted, and on the other hand, in a process of transferring the forming platform 410, the adhered printing material is prone to drop on the ground or a table top, bringing inconvenience for cleaning.

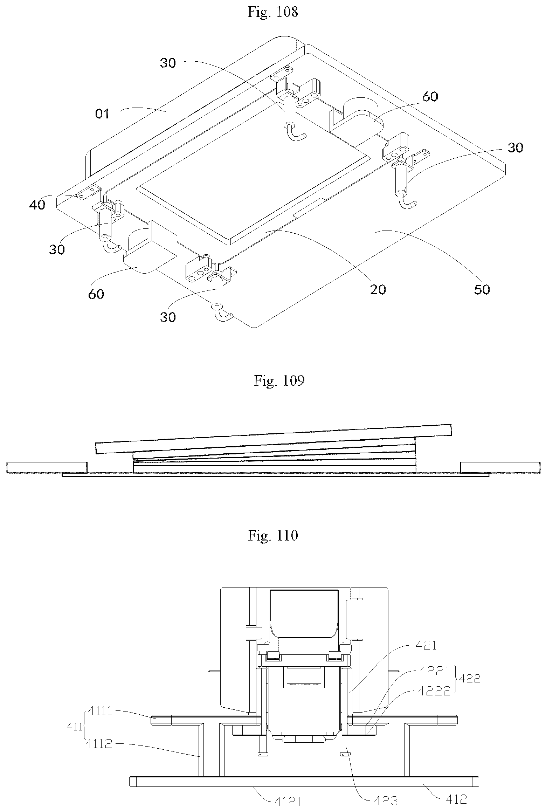

Based on this, referring to Figs. 110-111, in this implementation, the platform fixing rack 420 may include a main body portion 421, a hitching portion 422, and a limiting portion 423. The main body portion 421 is connected to the platform driving mechanism 800, and the hitching portion 422 and the limiting portion 423 are connected to the main body portion 421. It is to be noted that, there may be one or more hitching portions 422 or limiting portions 423, which may be specifically set according to a shape, construction, and the like of the forming platform 410.

Further, a fourth connecting member 411 of the forming platform 410 may include a lapping portion 4111 and a connection portion 4112. The lapping portion 4111 is connected to the platform body 412 through the connection portion 4112. Specifically, the platform body 412 may be lapped on the hitching portion 422 through the lapping portion 4111, so as to be hung on the platform fixing rack 420. Therefore, in some implementations, the forming platform 410 may be locked by operating the locking mechanism 430. In some implementations, a leveling operation may be performed on the forming platform 410 through the leveling assembly 440.

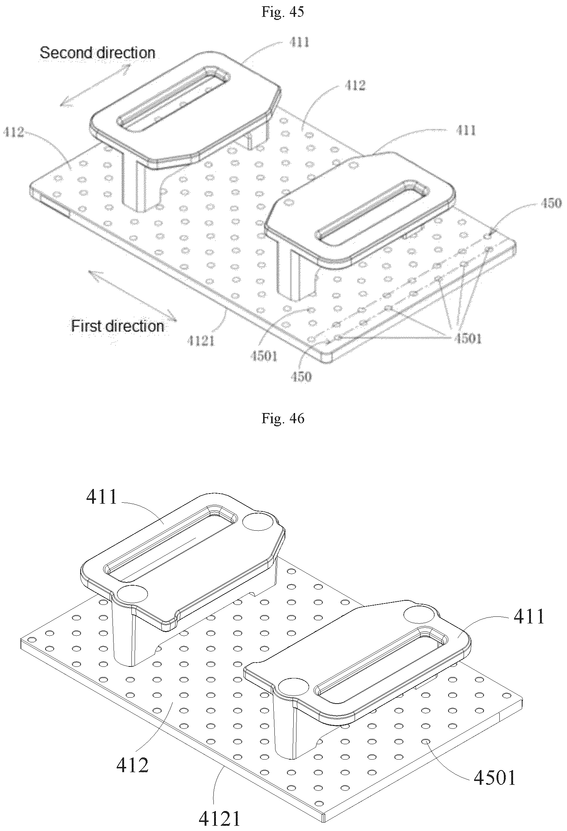

Specifically, the number of both the fourth connecting member 411 and hitching portion 422 is two, and the fourth connecting members and the hitching portions are in one-to-one correspondence. The two fourth connecting members 411 may be disposed at intervals. During the mounting of the forming platform 410, the two lapping portions 4111 can be respectively lapped on the corresponding hitching portions 422 by passing through the main body portion 421 through a gap between the two fourth connecting members 411. In one application scenario, as shown in Fig. 45, in a direction perpendicular to a mounting direction of the forming platform 410, the two lapping portions 4111 are disposed symmetrically. In this case, the forming platform 410 may be hung on the hitching portions 422 on two sides of the forming platform 410, so as to realize the mounting of the forming platform 410. In another application scenario, as shown in Fig. 46, in the direction perpendicular to a mounting direction of the forming platform 410, the lapping portion 4111 is designed asymmetrically, that is, one side gap may allow the main body portion 421 to pass through, and the other side is designed such that a gap between the two lapping portions 4111 does not allow the main body portion 421 to pass through. Therefore, the forming platform 410 may be hung on the hitching portion 422 only on the side where the gap allows the main body portion 421 to pass through, so as to realize the mounting of the forming platform 410. In the application scenario, it may be implemented by disposing a protrusion structure on a side of the lapping portion 4111 toward the other lapping portion 4111.

In one application scenario, there are two hitching portions 422, which are respectively disposed on two sides of the main body portion 421. There are also two lapping portions 4111, which respectively correspond to the main body portion 421. When printing is required, the two lapping portions 4111 may be respectively correspondingly lapped on the two hitching portions 422. After the printing is completed once, one of the lapping portions 4111 may be lapped on the corresponding hitching portion 422. It may be understood that, in this case, the platform body 412 is obliquely hung on the platform fixing rack 420. Therefore, the printing material adhering to the forming platform 410 and the printed object may drop in the material tray 200, thereby reducing the waste and pollution of the printing material.

It is to be noted that, when only one lapping portions 4111 is lapped on the corresponding hitching portion 422, the limiting portion 423 of the platform fixing rack 420 may limit a tilt angle of the forming platform 410, so as to avoid unstable shaking of the forming platform 410. The hitching portion 422 and the limiting portion 423 may be independent components, and are assembled together. Definitely, the hitching portion and the limiting portion may also be an integrated structure that is formed through integrated molding, which is not limited herein.

Further, the hitching portion 422 may include a hitching surface 4221 and an abutment surface 4222 opposite to the hitching surface 4221. The hitching surface 4221 may be a surface of the hitching portion 422 that faces away from the material tray 200. The abutment surface 4222 may be a surface of the hitching portion 422 that faces toward the material tray 200. When the forming platform 410 is hitched on the hitching portion 422, the lapping portion 4111 is lapped on the hitching surface 4221 of the hitching portion 422.

In one application scenario, the limiting portion 423 may be disposed on a side of the abutment surface 4222, and extends in a direction of the hitching surface 4221 that faces toward the abutment surface 4222. Specifically, when one of the lapping portions 4111 is lapped on the corresponding hitching portion 422, the limiting portion 423 may limit the movement of the lapping portion 4111 by abutting against the other lapping portion 4111, so as to limit the tilt angle of the forming platform 410.

In another application scenario, the limiting portion 423 may be disposed on a side of the hitching surface 4221, may definitely be disposed on the hitching surface directly, or may also be disposed spaced apart from the hitching surface 4221. Specifically, when one of the lapping portions 4111 is lapped on the corresponding hitching portion 422, the limiting portion 423 may limit the tilt angle of the forming platform 410 by abutting against a side of the limiting portion 423 that is away from the hitching portion 422.

Further, a shape of the limiting portion 423 may be a plate, a column, etc., and is not limited herein.

In the three-dimensional printing device provided in the present disclosure, in some implementations, the forming platform 410 may be fixed on the platform fixing rack 420 conveniently, or be unlocked from the platform fixing rack 420, through the locking mechanism 430. In some implementations, the forming platform 410 may be conveniently leveled by the leveling assembly 440. In some implementations, the distribution uniformity of the forming holes 4501 may be improved through the arrangement of the forming holes 4501 on the forming platform 410, thereby improving printing efficiency and the quality of printed products.

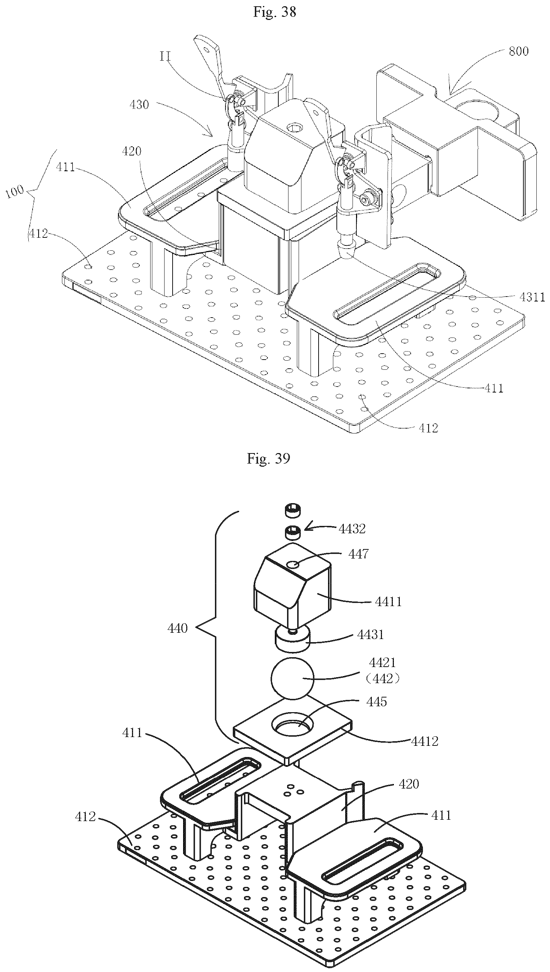

As shown in Figs. 36 and 38, the platform fixing rack 420 is connected to the platform driving mechanism 800. The platform fixing rack 420 facilitates the fixation of the forming platform 410 on the platform driving mechanism 800. The locking mechanism 430 is mounted on the platform fixing rack 420. A user may realize a detachable connection between the platform fixing rack 420 and the forming platform 410 through the locking mechanism 430, then the platform driving mechanism 800 drives the forming platform 410 to perform displacement, and adjustment in a distance between the forming platform 410 and the material tray 200 is realized ultimately.

A horizontal degree of the forming platform 410 relative to the material tray 200 is conveniently adjusted by leveling the forming platform 410 using the leveling assembly 440. Convenience during the using of the three-dimensional printing device is further improved.

The platform mechanism 400 is moved by the platform driving mechanism 800 to adjust a distance with the material tray 200 in the three-dimensional printing device. The forming platform 410 is locked on the platform fixing rack 420 by the locking mechanism 430 or unlocked from the platform fixing rack 420, so as to improve the convenience during the assembly of the forming platform 410, as well as the stability and reliability of the forming platform 410 during operation. Fig. 36 shows a state that the forming platform 410 is locked on the platform fixing rack 420 by the locking mechanism 430. Fig. 38 shows a state that the forming platform 410 is released during the unlocking of the locking mechanism 430.

In the three-dimensional printing device, the formation of a printed product is affected by a parallelism between the bottom surface of the material tray 200 (as shown in Fig. 1) that carries the printing material and the forming surface of the side of the forming platform 410 that faces toward the material tray 200. When the parallelism cannot meet requirements, the forming platform 410 and/or the material tray 200 needs to be adjusted.

As shown in Fig. 37 and Figs. 39-44, according to an implementation of the present disclosure, the leveling assembly 440 includes an adjustment rack 441, an angle assembly 442, and a limiting mechanism 443. The adjustment rack 441 is connected to the platform driving mechanism 800. The adjustment rack 441 is provided with an adjustment cavity 444. The adjustment cavity 444 has a through opening 445 facing the platform fixing rack 420. The angle assembly 442 is rotatably provided in the adjustment cavity 444. The angle assembly 442 is connected to the platform fixing rack 420. The limiting mechanism 443 abuts against the angle assembly 442. The limiting mechanism 443 is configured to define a rotation angle of the angle assembly 442 relative to the adjustment cavity 444 after rotation.

As shown in Figs. 36-37, and Figs. 39-41, since the adjustment rack 441 is connected to the platform driving mechanism 800, and the angle assembly 442 is connected to the platform fixing rack 420, after the locking mechanism 430 locks the forming platform 410 on the platform fixing rack 420, the platform fixing rack 420 and the forming platform 410 may be driven to move through the rotation of the angle assembly 442, and after the angle assembly 442 rotates a certain angle relative to the adjustment cavity 444, the rotation angle of the angle assembly 442 relative to the adjustment cavity 444 may be limited by the limiting mechanism 443, so as to fix the platform fixing rack 420 and the forming platform 410 at the rotated position, such that the parallelism between the forming platform 410 and the material tray 200 may be adjusted, thereby improving the quality and accuracy of products printed by the three-dimensional printing device.

In an implementation, the angle assembly 442 may be designed as a plate. The plate is disposed in the adjustment cavity 444. A hinge shaft is provided between a middle portion of the plate and the adjustment rack 441. The plate is connected to the platform fixing rack 420. The limiting mechanism 443 includes telescoping rods disposed on two ends of the plate. The plate forms a "seesaw" structure with the two telescoping rods and the hinge shaft. When lengths of the telescoping rods on the two ends of the plate are adjusted, the two ends of the plate rotate relative to the hinge shaft, and then drive the platform fixing rack 420 to deflect, and the forming platform 410 deflects synchronously. When the forming platform 410 deflects to a target angle, the lengths of the telescoping rods are kept at the current lengths, thereby achieving the purpose of adjusting the parallelism degree of the forming surface of the forming platform 410 relative to the bottom surface of the material tray 200.

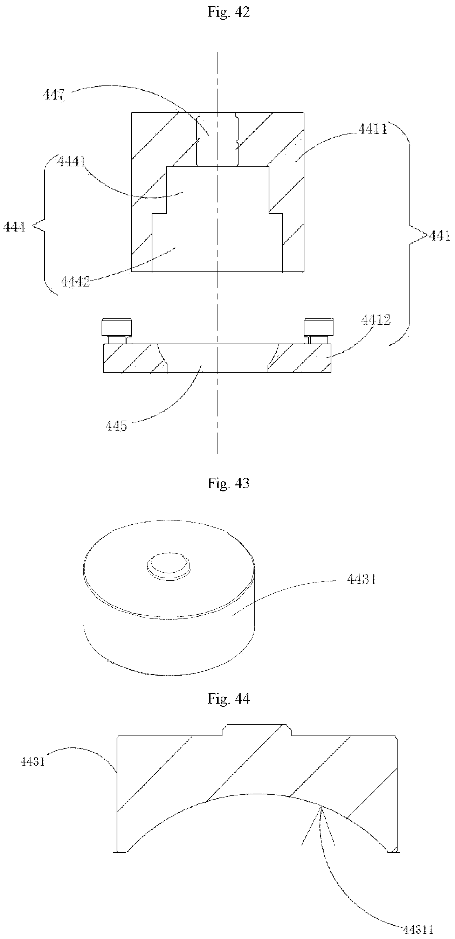

In an implementation, as shown in Fig. 39 and Fig. 42, the adjustment rack 441 includes a box body 4411 and a cover body 4412, which are connected to each other. The cover body 4412 is located on a side of the box body 4411 that faces toward the platform fixing rack 420. The box body 4411 and the cover body 4412 form the adjustment cavity 444 together. The angle assembly 442 is connected to the platform fixing rack 420 through the through opening 445.

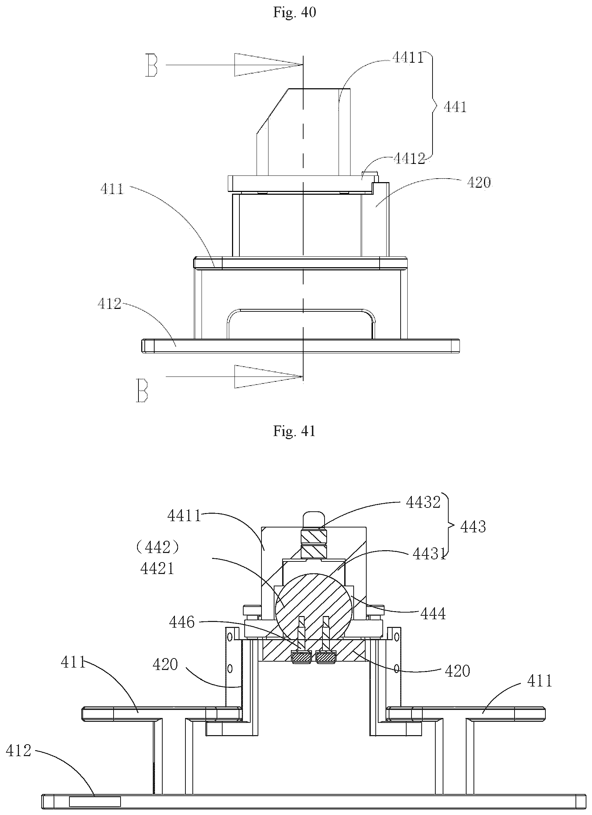

According to an implementation of the present disclosure, as shown in Fig. 39 and Fig. 41, the angle assembly 442 includes a universal ball joint 4421. The universal ball joint 4421 is connected to the platform fixing rack 420 through the through opening 445. The limiting mechanism 443 abuts against the universal ball joint 4421 to define a rotation angle of the universal ball joint 4421 relative to the adjustment cavity 444. The leveling assembly 440 includes a third connecting member 446, which is connected between the platform fixing rack 420 and the universal ball joint 4421.

As shown in Fig. 41, at least part of the universal ball joint 4421 is connected to the platform fixing rack 420 by passing through the through opening 445. The platform fixing rack 420 is fixedly connected to the universal ball joint 4421 through the third connecting member 446. The universal ball joint 4421 may rotate relative to the adjustment cavity 444 within a set angle range, such that the user conveniently adjusts the platform fixing rack 420.

As shown in Figs. 41-42, the universal ball joint 4421 may rotate in the adjustment cavity 444 in the box body 4411. The universal ball joint 4421 is connected to the platform fixing rack 420 through the through opening 445. During assembly, the universal ball joint 4421 is rotatably fixed in the adjustment cavity 444, then the box body 4411 and the cover body 4412 are fixed through bolts, and the platform fixing rack 420 is fixedly connected to the universal ball joint 4421 through the third connecting member 446. Through the box body 4411 and the cover body 4412, the user conveniently assembles the leveling assembly 440, and assembly efficiency is improved. Then, the limiting mechanism 443 is used to limit the rotation angle of the universal ball joint 4421 relative to the adjustment cavity 444.

It is to be noted that, the universal ball joint 4421 only needs to rotate relative to the adjustment cavity 444 within a preset angle range, and the range of an rotating angle may be adjusted according to actual use, this is not specifically limited in the present disclosure.

In an embodiment, the third connecting member 446 may be designed as a bolt. If the bolt is long enough, the universal ball joint 4421 may be fixedly connected to the platform fixing rack 420, such that the universal ball joint 4421 and the platform fixing rack 420 may be in a contact state or an indirect contact state. In order to improve an effect of fixedly connecting the universal ball joint 4421 and the platform fixing rack 420, a plurality of third connecting members 446 may be arranged, and may be adjusted flexibly.

In another embodiment, a contact plane is provided on a side of the universal ball joint 4421 that faces toward the platform fixing rack 420. A contact area between the universal ball joint 4421 and the platform fixing rack 420 is increased through the contact plane. The plurality of third connecting members 446 may be arranged. The plurality of third connecting members 446 are arranged at intervals on the contact plane between the universal ball joint 4421 and the platform fixing rack 420, so as to improve an effect of fixing the universal ball joint 4421 and the platform fixing rack 420, causing the platform fixing rack 420 to synchronously rotate with the rotation of the universal ball joint 4421, and then the parallelism degree of the forming surface of the forming platform 410 relative to the bottom surface of the material tray 200 is adjusted.

In an implementation, a diameter of the universal ball joint 4421 is greater than a maximum aperture of the through opening 445. Thus, during using, on one hand, the position of the universal ball joint 4421 in the adjustment cavity 444 may be limited through the through opening 445, and on the other hand, the stability of the universal ball joint 4421 during rotation relative to the adjustment cavity 444 may also be improved.

In an implementation, as shown in Figs. 40-42, a first limiting hole 447 is provided on a side of the adjustment rack 441 that is away from the platform fixing rack 420. The first limiting hole 447 may run through the adjustment rack 441. The limiting mechanism 443 includes an abutment member 4431 and a control member 4432. The abutment member 4431 is disposed in the adjustment cavity 444. The abutment member 4431 abuts against a side of the angle assembly 442 that is away from the platform fixing rack 420. The control member 4432 is movably disposed in the first limiting hole 447. The control member 4432 is detachably mounted to the adjustment rack 441. One end of the control member 4432 abuts against the abutment member 4431.

As shown in Figs. 40-42, the first limiting hole 447 may be disposed on the top of the adjustment rack 441, or the first limiting hole 447 is disposed on a circumferential side of the adjustment rack 441. The abutment member 4431 is disposed in the adjustment cavity 444 of the adjustment rack 441, and the abutment member 4431 abuts against the angle assembly 442. Then, an abutment force between the angle assembly 442 and the abutment member 4431 is controlled by the control member 4432, so as to limit a position of the angle assembly 442 relative to the adjustment cavity 444. After the angle assembly 442 drives the platform fixing rack 420 to rotate to a preset angle, a position of the control member 4432 is limited by the first limiting hole 447, so as to abut the control member 4432 against the abutment member 4431. By fixing the angle assembly 442 in an adjusted position, the angle assembly 442 is prevented from rotating relative to the adjustment cavity 444 during printing, and a limiting effect of the control member 4432 to the abutment member 4431 is improved through the first limiting hole 447.

Specifically, the first limiting hole 447 may be a threaded hole, and the control member 4432 may be a bolt cooperated with the threaded hole. Through a screwing connection relationship between the threaded hole and the bolt, the position of the control member 4432 in the first limiting hole 447 may be adjusted, and then the abutment force between the abutment member 4431 and the angle assembly 442 may be increased by adjusting the control member 4432 to approach the abutment member 4431, so as to keep the rotation angle of the angle assembly 442, or the abutment force between the abutment member 4431 and the angle assembly 442 is reduced by adjusting the control member 4432 to move away from the abutment member 4431, so as to release the abutment between the abutment member 4431 and the angle assembly 442.

Further, the abutment member 4431 may be disposed on the side of the angle assembly 442 that faces away from the platform fixing rack 420. The first limiting hole 447 is provided at the top of the adjustment rack 441, and the through opening 445 is provided at the bottom of the adjustment rack 441. The control member 4432 passes through the first limiting hole 447. An abutment force between the abutment member 4431 and the universal ball joint 4421 is adjusted through the control member 4432, and a rotation angle between the universal ball joint 4421 and the cover body 4412 can be fixed, so as to keep the tilt angles of the platform fixing rack 420 and the forming platform 410 relative to the material tray 200.

As shown in Fig. 41 and Figs. 43-44, in an embodiment, a side of the abutment member 4431 that faces toward the angle assembly 442 has an abutment wall 44311. Relative rotation of the angle assembly 442 in the adjustment cavity 444 is avoided through the abutment wall 44311. The abutment wall 44311 matches a shape of the outer surface of the angle assembly 442, so as to increase a force contact area between the abutment wall 44311 and the angle assembly 442, thereby further improving a limiting position effect of the control member 4432 to the angle assembly 442.

In an example, the abutment wall 44311 is an arc-shaped wall of which shape is consistent with a shape of an arc-shaped surface of the universal ball joint 4421, such that during the rotation of the universal ball joint 4421, the abutment wall 44311 can abut against an outer surface of the universal ball joint 4421.

As shown in Fig. 42, the adjustment cavity 444 includes a first limiting cavity 4441 away from the through opening 445 and a second limiting cavity 4442 close to the through opening 445. The abutment member 4431 is disposed in the first limiting cavity 4441, and the angle assembly 442 is fixed in the second limiting cavity 4442 in a limiting manner through the abutment member 4431. In a process of adjusting the rotation angle of the universal ball joint 4421 relative to the second limiting cavity 4442, the abutment member 4431 is always limited in the first limiting cavity 4441, such that after the control member 4432 passes through the first limiting hole 447, a force abutment position between the control member 4432 and the abutment member 4431 is always the same, causing a direction of force applied to the universal ball joint 4421 by the control member 4432 to remain unchanged, thereby improving the limiting effect on the universal ball joint 4421. Further, a leveling effect of the leveling assembly 440 to the forming platform 410 is improved.

As an example, the abutment member 4431 may be a crosser, or a metal material such as aluminum alloy and the like, and is not specifically limited herein.

It is to be noted that, when the forming platform 410 needs to be leveled during actual use, the control member 4432 may be rotated first. For example, the control member 4432 may be rotated out of the first limiting hole 447 to release the abutment member 4431, so as to release the angle assembly 442, such that the angle assembly 442 is in a rotatable state in the adjustment cavity 444, and then the forming platform 410 is rotated to meet a requirement for the parallelism degree between the forming platform and the material tray 200. In this process, the forming platform 410 may drive the platform fixing rack 420 to cause the angle assembly 442 to rotate a certain angle. After adjustment, the control member 4432 may be further rotated into the first limiting hole 447, until the abutment member 4431 is tightly abutted such that the abutment member 4431 tightly abuts against the angle assembly 442, causing the angle assembly 442 to be limited at the rotated position, thereby completing leveling.

Definitely, the forming platform 410 may also be leveled by using other leveling modes. For example, the leveling assembly 440 may include a reference sensor and a leveling sensor. The two sensors may be two sensors that can sense poses of corresponding objects, for example, a position sensor, a displacement sensor, etc. The reference sensor is disposed on a reference member of the three-dimensional printing device, and is configured to sense position information of the reference member. The leveling sensor is disposed on the forming platform 410, and is configured to sense position information of the forming platform 410. As the reference member of the three-dimensional printing device is relatively stable, the reference member may be used as a reference standard for other components of the three-dimensional printing device. When the forming platform 410 needs to be leveled, the forming platform 410 only needs to be adjusted to match the position information of the reference member that is sensed by the reference sensor.

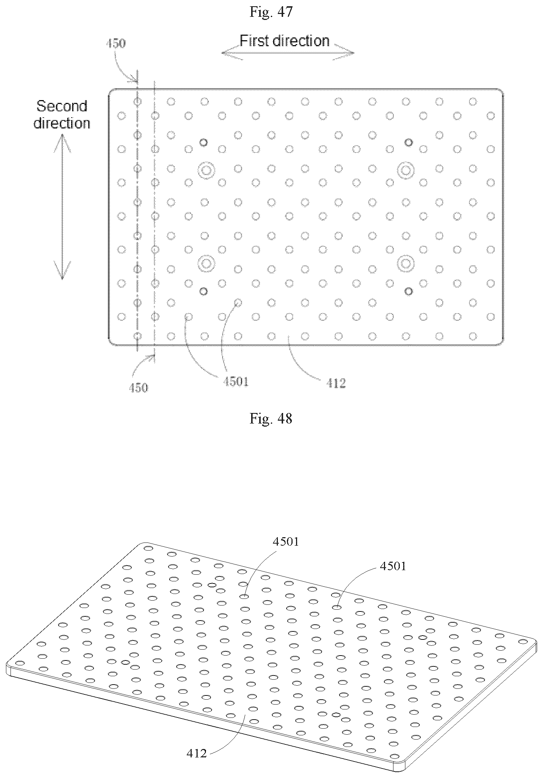

In an implementation, as shown in Figs. 45-47, the forming platform 410 includes the fourth connecting member 411 and the platform body 412. The fourth connecting member 411 is configured to be connected to the platform fixing rack 420. The platform body 412 is connected to the fourth connecting member 411, and defines a plurality of forming hole groups 450 arranged at intervals in a first direction. The forming hole groups 450 include a plurality of forming holes 4501 arranged at intervals in a second direction. In the first direction, the forming holes 4501 in the adjacent forming hole groups 450 are arranged in a staggered manner. There is an included angle greater than zero between the first direction and the second direction. The included angle may be 15°, 30°, 45°, 60°, 75°, etc., and is not limited herein. As shown in Fig. 48, in an application scenario, the included angle is 60°. In this case, a distance between the adjacent forming holes 4501 is the same. The arrangement of the forming holes 4501 has high uniformity. The apparatus can cause the printing material between the platform body 412 and the bottom of the material tray 200 to be able to be discharged smoothly when the forming platform 410 is pressed during printing, facilitating the proceeding of liquid discharging.

As shown in Figs. 45 and 47, as an example, the first direction is a length direction of the forming platform 410, and the second direction is a width direction of the forming platform 410. The forming hole groups 450 are arranged at intervals in the first direction, such that in the second direction, the forming holes 4501 in the adjacent forming hole groups 450 are arranged in a staggered manner, and the forming holes 4501 can be distributed on the platform body 412 of the forming platform 410 more uniformly.

An arrangement mode for holes usually used in the related art is in an array distribution along the length and width of the forming platform 410. While staggered arrangement of holes of adjacent rows/columns is used in the embodiments of the present disclosure, since a designed printing bottom plate is generally in a regular shape during 3D printing, and complies with the length-width extending direction of the forming platform 410, which easily causes situations that there are many holes corresponding to some side of the printing bottom plate of the printed object during printing, or there is no holes. That is to say, the distribution of the forming holes 4501 of the corresponding forming platform 410 is not uniform enough, which affects a production yield of printing and printing quality to a certain extent. If the holes are designed to be arranged in a staggered manner, and since the arrangement of the forming holes 4501 does not completely comply with the length-width extending direction of the platform, the distribution of the holes covered by the bottom plate is more uniform, such that the production yield of printing and printing quality can be improved.

Referring to Figs. 36, 38, and 49, in order to improve the stability and assembly efficiency of a fixed connection between the platform fixing rack 420 and the forming platform 410, the locking mechanism 430 provided in the present disclosure includes a locking member 431 and a transmission assembly 432. The locking member 431 has an abutment end 4311. The transmission assembly 432 has at least two transmission members. An end of one of the transmission members is movably connected to the platform fixing rack 420, and the other transmission member is movably connected to the locking member 431. A first hinge shaft 4321 is provided between the two transmission members. When the first hinge shaft 4321 is located in a locking position I, the abutment end 4311 abuts the forming platform 410 against the platform fixing rack 420, so as to limit relative displacement between the forming platform 410 and the platform fixing rack 420.

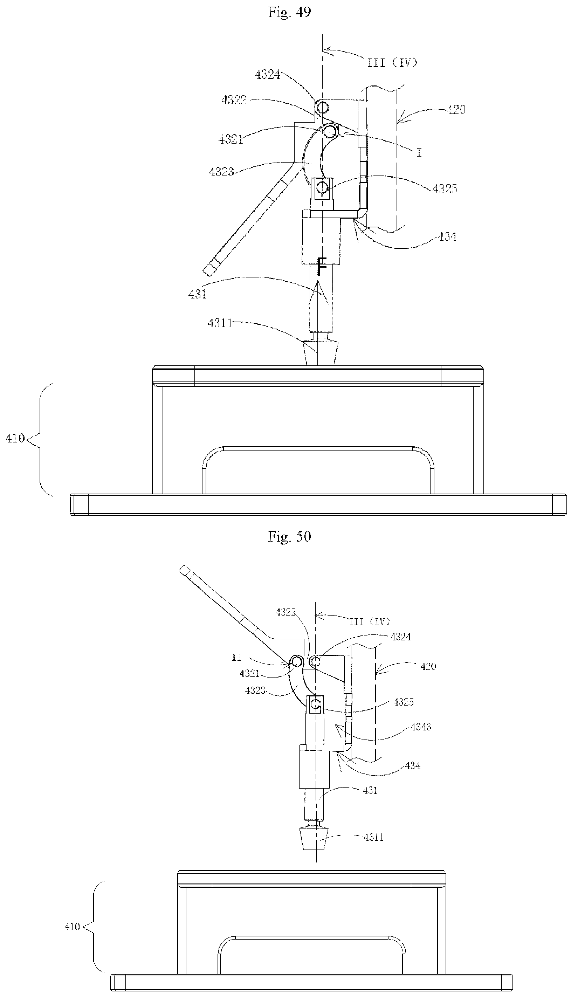

Further, as shown in Fig. 49, one end of the transmission assembly 432 is movably connected to the platform fixing rack 420, and the other end is movably connected to the locking member 431. Furthermore, the at least two transmission members are movably hinged through the first hinge shaft 4321. Therefore, through the rotation of the two transmission members relative to the first hinge shaft 4321, a position of the first hinge shaft 4321 is adjusted to adjust a position of the abutment end 4311 of the locking member 431 relative to the platform fixing rack 420, such that when the first hinge shaft 4321 is in the locking position I, the abutment end 4311 abuts the forming platform 410 against the platform fixing rack 420, so as to limit the relative displacement between the forming platform 410 and the platform fixing rack 420, thereby realizing the locking of the forming platform 410.

It is to be noted that, in this implementation, when the first hinge shaft 4321 is in the locking position I, the abutment end 4311 of the locking member 431 applies a force facing toward the platform fixing rack 420 to the forming platform 410, such that the forming platform 410 is locked on the platform fixing rack 420. It may be understood that, the forming platform 410 simultaneously applies a reverse acting force F to the abutment end 4311 of the locking member 431. Based on the composition of the locking mechanism 430 in this implementation, the reverse acting force F is further transferred to the first hinge shaft 4321 through the locking member 431 and at least one of the two transmission members, and the first hinge shaft 4321 can continuously remain in the locking position I. Further, even if the abutment end 4311 is applied with a force that causes the abutment end to move away from the forming platform 410 so as to release the forming platform 410, the locking of the abutment end 4311 to the forming platform 410 cannot open, but instead causes the mechanical locking and fixation of the abutment end to the forming platform 410 to be more firm and reliable, thereby improving the reliability of the three-dimensional printing device during actual use.

As shown in Figs. 38 and 50, in an implementation, the first hinge shaft 4321 also has an unlocking position II. The transmission assembly 432 is configured so that the abutment end 4311 is away from the forming platform 410 when the first hinge shaft 4321 is in the unlocking position II. In the present disclosure, when the two transmission members of the transmission assembly 432 rotate relative to the first hinge shaft 4321, the first hinge shaft 4321 is switched between the locking position I and the unlocking position II. When the first hinge shaft 4321 is switched from the locking position I to the unlocking position II, the abutment end 4311 is away from the forming platform 410 to release the locking of the forming platform 410.

In the present disclosure, the abutment end 4311 being away from the forming platform 410 may refer to a contact between the abutment end 4311 and the surface of the forming platform 410. However, an interactive force between the abutment end and the forming platform is zero, or the abutment end 4311 and the forming platform 410 are in a non-contact state.

Through the above, when the three-dimensional printing device needs to operate, the forming platform 410 may be placed on the platform fixing rack 420, and the locking mechanism 430 locks the forming platform 410 on the platform fixing rack 420 by moving the first hinge shaft 4321 to the locking position I. After the operation is completed, the first hinge shaft 4321 is moved to the unlocking position II such that the locking mechanism 430 releases the forming platform 410 from the platform fixing rack 420, facilitating the changing, maintenance, etc. of the forming platform 410 by an operator.

As shown in Figs. 49-52, in an implementation, the two transmission members include a first transmission member 4322 and a second transmission member 4323. A second hinge shaft 4324 is provided between the first transmission member 4322 and the platform fixing rack 420, such that the first transmission member 4322 may rotate relative to the second hinge shaft 4324. A third hinge shaft 4325 is provided between the second transmission member 4323 and the locking member 431, such that the second transmission member 4323 may rotate relative to the third hinge shaft 4325. An axis of the first hinge shaft 4321, an axis of the second hinge shaft 4324, and an axis of the third hinge shaft 4325 are parallel to each other. Meanwhile, the first transmission member 4322 and the second transmission member 4323 may rotate relative to the first hinge shaft 4321. The locking position I and the unlocking position II are respectively located on two sides of a central plane III. The central plane III should be understood as a plane passing through the axis of the second hinge shaft 4324 and the axis of the third hinge shaft 4325. That is to say, the first hinge shaft 4321 moves on the two sides of the central plane III. The abutment end 4311 is pulled to be close to or away from the forming platform 410 through the first transmission member 4322 and the second transmission member 4323.

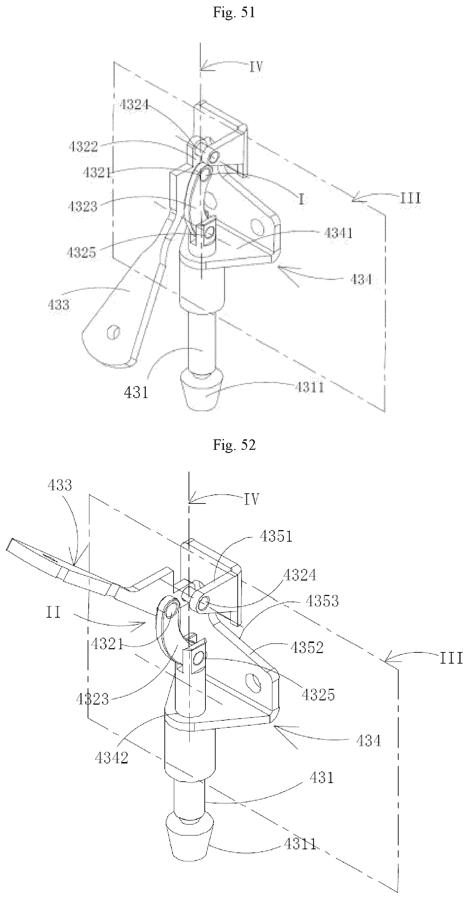

As an example, as shown in Fig. 49 and Fig. 51, the locking position I is located in a dead-center position of one side of the central plane III of the second hinge shaft 4324 and the third hinge shaft 4325. As shown in Fig. 50 and Fig. 52, the unlocking position II is located in a activity region of the other side of the central plane III. The first hinge shaft 4321 may be moved to the locking position I of one side of the central plane III by applying an external force to the first hinge shaft 4321, such that the locking mechanism 430 locks the forming platform 410 on the platform fixing rack 420. The first hinge shaft 4321 may also be moved to the unlocking position II of the other side of the central plane III by applying the external force to the first hinge shaft 4321, causing the abutment end 4311 to be away from the forming platform 410, thereby releasing the forming platform 410 from the platform fixing rack 420.

In the present disclosure, a preset path IV of the locking member 431 may be a straight line, and the preset path IV may be located in the central plane II or parallel to the central plane III. By applying a driving force to the first hinge shaft 4321, the first transmission member 4322 and the second transmission member 4323 rotate relative to the first hinge shaft 4321. Synchronously, the first transmission member 4322 rotates relative to the second hinge shaft 4324, and the second transmission member 4323 rotates relative to the third hinge shaft 4325. When the first hinge shaft 4321 is moved to the dead-center position of one side of the central plane III under the action of the driving force, in this case, the first hinge shaft 4321 is located in the locking position I, the abutment end 4311 abuts against the forming platform 410, and the forming platform 410 applies the reverse acting force F to the locking member 431. Since a direction of the force of the reverse acting force F is the same as the preset path IV, the reverse acting force F is further transferred to the first hinge shaft 4321 through the locking member 431 and the second transmission member 4323. Since the first hinge shaft 4321 is located in the dead-center position of one side of the central plane III, the force applied to the first hinge shaft 4321 by the reverse acting force F does not have a component force facing toward the unlocking position II, but instead has a component force causing the first hinge shaft 4321 to face toward the locking position I. Therefore, according to a direction of the component force, the reverse acting force F can cause the first hinge shaft 4321 to continuously remain in the locking position I, thereby improving the stability of fixing the forming platform 410 and the platform fixing rack 420.

When the first hinge shaft 4321 is moved to the other side of the central plane III under the action of the driving force, in this case, the first hinge shaft 4321 is in the unlocking position II, the unlocking position II is located in the activity region of the other side of the central plane III, and in this case, the abutment end 4311 is away from the forming platform 410.

As shown in Fig. 49, when the first hinge shaft 4321 is located in the locking position I, as described above, the forming platform 410 applies the reverse acting force F to the locking member 431 such that the first hinge shaft 4321 remains in the locking position I. In this state, if the force for moving the first hinge shaft 4321 to the unlocking position II is not applied, the first hinge shaft 4321 always remains in the locking position I, causing the forming platform 410 and the platform fixing rack 420 to always remain in a locking state.

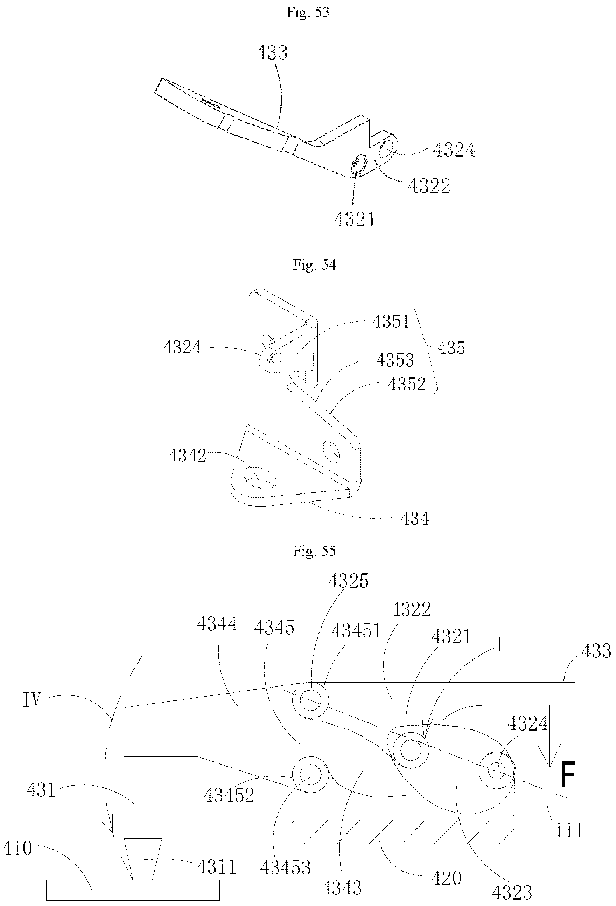

As shown in Fig. 53, in an implementation, the locking mechanism 430 further includes a force applying member 433. The force applying member 433 is connected to the first hinge shaft 4321 to apply an external force to the first hinge shaft 4321, so as to drive the first hinge shaft 4321 to move between the unlocking position II and the locking position I. When the three-dimensional printing device needs to operate, the first hinge shaft 4321 is driven by the force applying member 433 to move to the locking position I, so as to lock the forming platform 410 on the platform fixing rack 420. After operation is completed, the first hinge shaft 4321 is moved to the unlocking position II by the force applying member 433 such that the locking mechanism 430 releases the forming platform 410 from the platform fixing rack 420, facilitating the adjustment of the position of the first hinge shaft 4321 by the user.

In some implementations, the force applying member 433 may be designed as a handle. An end of the handle is in hinged joint with the first hinge shaft 4321. The user may drive the first hinge shaft 4321 to move through the handle, so as to cause the first hinge shaft 4321 to switch between the unlocking position II and the locking position I, thereby improving convenience of the user during using.

The force applying member 433 and the first transmission member 4322 may be of an integrated structure. Specifically, the force applying member and the first transmission member may be formed through integrated molding, or are fixed together after being separately formed. Therefore, when the first hinge shaft 4321 is driven to move by the force applying member 433, the first hinge shaft 4321 rotates around the axis of the second hinge shaft 4324, causing the movement of the first hinge shaft 4321 to be more stable, thereby improving the stability and reliability of the operation of the entire locking mechanism 430.

Further, the handle may extend toward a side where the unlocking position II is located, that is to say, the handle and the unlocking position II are caused to be on the same side of the central plane III, thereby improving the convenience of the user during actual use. Definitely, in other implementations, the handle is not limited to extend along the side where the unlocking position II is located, and may also extend in other directions, which is not specifically limited herein.

It is to be noted that, the force applying member 433 may be manually driven by the operator, or may also be connected to an automatic driving mechanism, such that automatic driving is realized, and the locking and unlocking of the forming platform 410 by the locking mechanism 430 are automatically controlled.

As shown in Figs. 49-52 and 54, in order to improve the effect of locking the forming platform 410, in an implementation, the locking mechanism 430 further includes a limiting member 434. An end of the limiting member 434 is connected to the platform fixing rack 420. The locking member 431 is limited to move along the preset path IV by the limiting member 434, so as to limit the abutment end 4311 to be able to only move in a fixed direction relative to the forming platform 410, such that when the first hinge shaft 4321 is located in the locking position I, there is no displacement in other directions between the abutment end 4311 and the forming platform 410.

In an implementation, the limiting member 434 includes a third limiting plate 4341. The third limiting plate 4341 is provided with a positioning hole 4342. One end of the third limiting plate 4341 is fixedly connected to the platform fixing rack 420, and the other end extends in a direction away from the platform fixing rack 420, such that the locking member 431 may movably penetrate in the positioning hole 4342, so as to define the abutment end 4311 to move in an extending direction of the positioning hole 4342. The extending direction of the positioning hole 4342 may be understood as an axial direction of the positioning hole 4342.

In an embodiment, the third limiting plate 4341, the locking member 431 moving along the preset path IV, and the platform fixing rack 420 form a locking cavity 4343, and the locking position I is located in the locking cavity 4343. As shown in Figs. 49-52, the preset path IV may be parallel to the central plane III or located in the central plane III. The preset path IV may be consistent with a relative displacement direction of the platform fixing rack 420 and the forming platform 410. As an example, the direction of the preset path IV may be set to be perpendicular to a direction of a locking surface of the forming platform 410. Therefore, when the locking mechanism 430 is in a locking state, an axial direction of the abutment end 4311 is vertical to the locking surface, a direction of the reverse acting force F of the forming platform 410 on the abutment end 4311 is vertical to the locking surface and faces upward, and after the reverse acting force is transferred to the first hinge shaft 4321 of which axis is located in the locking position I along the locking member 431 and the second transmission member 4323, the direction of the force inclines toward one side of the central plane III, such that the first hinge shaft 4321 can always remain in the locking position, thereby improving the effect of locking the forming platform 410.

As shown in Figs. 55-56, in one embodiment of the present disclosure, the limiting member 434 includes a connecting rod 4344 and an assembly portion 4345 connected to one end of the connecting rod 4344. The locking member 431 is connected to the other end of the connecting rod 4344. The assembly portion 4345 includes a first assembly position 43451 and a second assembly position 43452, which are arranged at intervals. The third hinge shaft 4325 is provided between the first assembly position 43451 and one transmission member, and a fourth hinge shaft 43453 is provided between the second assembly position 43452 and the platform fixing rack 420, so as to limit the movement of the abutment end 4311 along the preset arc-shaped path IV using an axis of the fourth hinge shaft 43453 as the center of a circle.

As an example, the locking cavity 4343 is enclosed by the assembly portion 4345, the central plane III, and the platform fixing rack 420, and the locking position I is located in the locking cavity 4343. The locking position I is located in the locking cavity 4343 on a side of the central plane III that is close to the platform fixing rack 420.

Referring to Fig. 54, in an implementation, the locking mechanism 430 further includes a mounting rack 435. Through the mounting rack 435, other components of the locking mechanism 430 such as the third limiting plate 4341, the transmission assembly 432, the locking member 431, the force applying member 433, etc. may be mounted. Specifically, the mounting rack 435 includes a lifting lug 4351 and an extension portion 4352, which are integrally connected. The lifting lug 4351 and the limiting member 434 are respectively disposed on two ends of the extension portion 4352. The lifting lug 4351 and the first transmission member 4322 are in hinged joint with the second hinge shaft 4324. The extension portion 4352 has a mounting surface 4353 that is connected to the platform driving mechanism 800 of the three-dimensional printing device.

As shown in Figs. 49-52 and 54, the platform fixing rack 420 is connected to the platform driving mechanism 800, and the locking mechanism 430 is connected to the platform driving mechanism 800 through the mounting rack 435. When the three-dimensional printing device operates, after the platform fixing rack 420 and the forming platform 410 are locked by the locking mechanism 430, the platform driving mechanism 800 can drive the locking mechanism 430, the platform fixing rack 420, and the forming platform 410 to synchronously move.

In an example, the locking cavity 4343 is constituted among the lifting lug 4351, the extension portion 4352, the limiting member 434, and the locking member 431 moving along the preset path IV, and the locking position I is located in the locking cavity 4343, such that a space for the first hinge shaft 4321 to move between the locking position I and the unlocking position II may be provided by the locking cavity 4343.

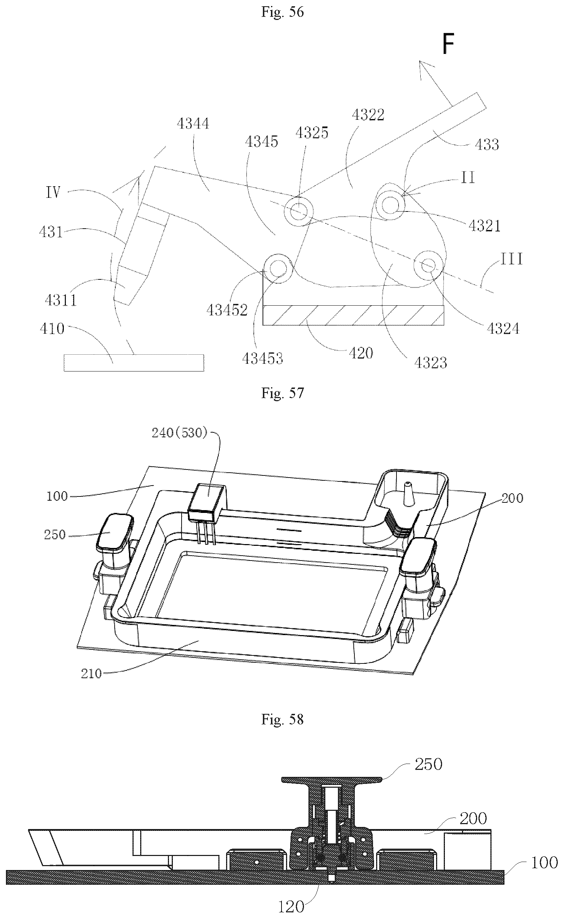

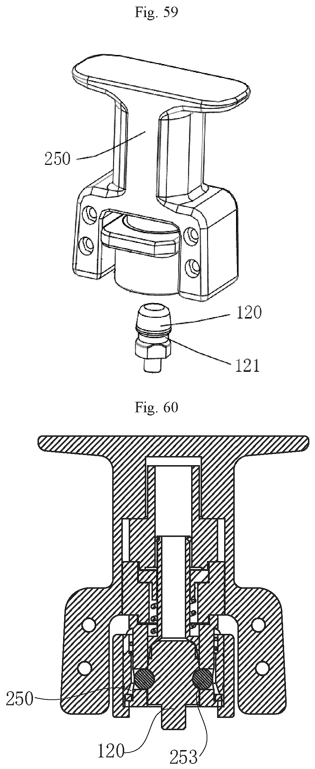

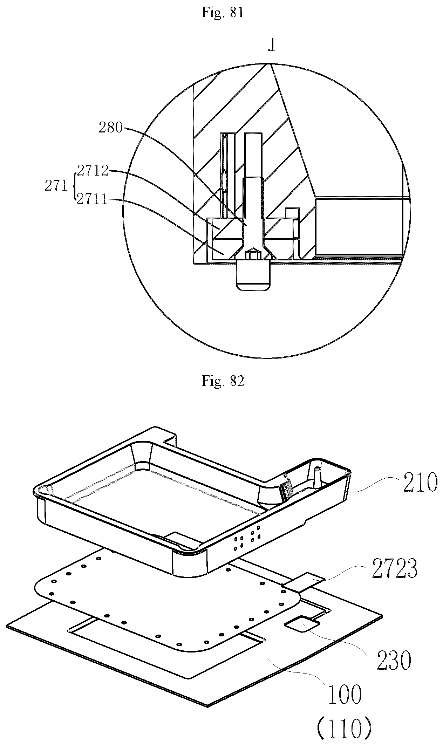

As shown in Fig. 1, a mode often used by a light-curing three-dimensional printing device is that the illumination mechanism 300 projects light toward the material tray 200 with the transparent bottom to cause the printing material 900 between the forming platform 410 and the bottom of the material tray 200 to undergo a polymerization reaction, so as to obtain a cured sheet, the cured sheet is bonded on the forming platform 410, and by causing the forming platform 410 to move away from the bottom of the material tray 200 and simultaneously causing the illumination mechanism 300 to intermittently or uninterruptedly project the light toward the bottom of the material tray 200, layer-by-layer curing is realized, and a three-dimensional solid-state printed object is finally formed by the stacked cured sheets, which requires high requirements for the fixation of the material tray 200, the model tightening of a release film, the monitoring of material liquid levels, etc. Most devices in the related art use a rotary locking structure to fix the material tray 200. Such locking mode need the user to turn a knob for a plurality of times to lock the material tray 200, resulting in an increase in operation steps of the device, thus reducing operation efficiency. Based on this, as shown in Figs. 57-89, the three-dimensional printing device of the embodiments of the present disclosure is further improved below with reference to the descriptions of the drawings.

In an implementation, the three-dimensional printing device includes a frame 100 and a material tray 200. The frame 100 includes a base plate 110 and a clamping member 120. The material tray 200 is detachably disposed on the base plate 110 of the frame 100. A clamping assembly 250 is disposed on the material tray 200. The clamping member 120 is detachably in clamping connection with the clamping assembly 250.

According to the material tray 200 of the embodiments of the present disclosure, the clamping assembly 250 is disposed on the material tray 200. The clamping member 120 is disposed on the frame 100. The clamping assembly 250 is provided with a mounting chamber 251 and an accommodating groove 252, which communicate with each other. The mounting chamber 251 has an opening communicating with the outside. A movable locking portion 253 is disposed in the accommodating groove 252. A limiting groove 121 cooperated with the locking portion 253 is provided on the clamping member 120. When the material tray 200 is mounted on the frame 100, the clamping member 120 is located in the mounting chamber 251, and part of the locking portion 253 is clamped in the limiting groove 121. The locking portion 253 is configured to be able to retract the accommodating groove 252 toward a direction away from the limiting groove 121.

According to the material tray 200 of the embodiments of the present disclosure, when the material tray 200 is mounted on the frame 100, the clamping member 120 is located in the mounting chamber 251. When the material tray 200 needs to be dismounted from the frame 100, the locking portion 253 retracts the accommodating groove 252 toward the direction away from the limiting groove 121, to avoid the clamping member 120, so as to cause the clamping member 120 to be separated from the clamping assembly 250. When the material tray 200 is mounted on the frame 100, the clamping member 120 extends into the mounting chamber 251, and part of the locking portion 253 extends out of the accommodating groove 252 and is snapped into the limiting groove 121, such that the mounting of the material tray 200 and the frame 100 can be rapidly dismounted, and thus is convenient in locking and not easy to loosen.

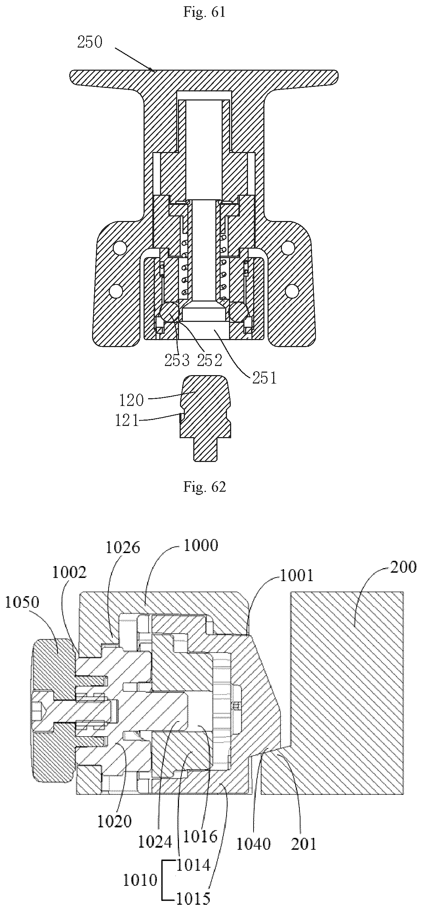

In an implementation, as shown in Figs. 62-65, the locking structure of this embodiment includes a housing 1000, a locking assembly 1010, and a transmission structure 1020.

Specifically, the housing 1000 has a first opening 1001. The locking assembly 1010 is disposed on a side in the housing 1000 that is close to the first opening 1001. The transmission structure 1020 is rotatably disposed in the housing 1000, and a first end of the transmission structure 1020 abuts against a first end of the locking assembly 1010. When the transmission structure 1020 rotates, the locking assembly 1010 is driven to move at the first opening 1001 such that a second end of the locking assembly 1010 is locked or unlocked with the material tray 200.

Specifically, when the transmission structure 1020 rotates, the locking assembly 1010 may be driven to move at the first opening 1001. By changing a rotation direction of the transmission structure 1020, a movement direction of the locking assembly 1010 can be changed, the transmission structure 1020 drives the second end of the locking assembly 1010 to move out of the first opening 1001 and to be locked with the material tray 200, and the transmission structure 1020 changes the rotation direction to drive the second end of the locking assembly 1010 to retract into the housing 1000, so as to be unlocked with the material tray 200. The transmission structure 1020 may be manually driven to rotate, or the transmission structure 1020 may also be driven to rotate through a power portion such as an electric motor. In this way, a transverse force is converted into a longitudinal force, such that the operation efficiency of the user to lock or unlock the material tray 200 can be improved, the device is simple in structure, convenient in locking, and not easy to loosen.

It may be understood that, the housing 1000 has a hollow cavity, and the locking assembly 1010 and the transmission structure 1020 both are located in the hollow cavity. The hollow cavity communicates with the first opening 1001. The locking assembly 1010 and the transmission structure 1020 are arranged in sequence in an axial direction of the housing 1000. The locking assembly 1010 is disposed on a side of the transmission structure 1020 that is close to the first opening 1001.

The housing 1000 may be configured to be in a shape such as a cube, a cuboid, a cylinder, etc., and the present disclosure is not limited thereto.

The locking assembly 1010 being locked with the material tray 200 may be in clamping connection, threaded connection, abutted connection, or the like.

Furthermore, the locking structure 1 may be used to lock a material tray, a platform, a case door, or the like, and the present disclosure is not limited thereto.

According to the locking structure 1 of the embodiments of the present disclosure, when the transmission structure 1020 rotates, the locking assembly 1010 may be driven to move at the first opening 1001. In this way, the transverse force is converted into the longitudinal force, such that the operation efficiency of the user to lock or unlock the material tray 200 can be improved, the device is simple in structure, convenient in locking, and not easy to loosen.

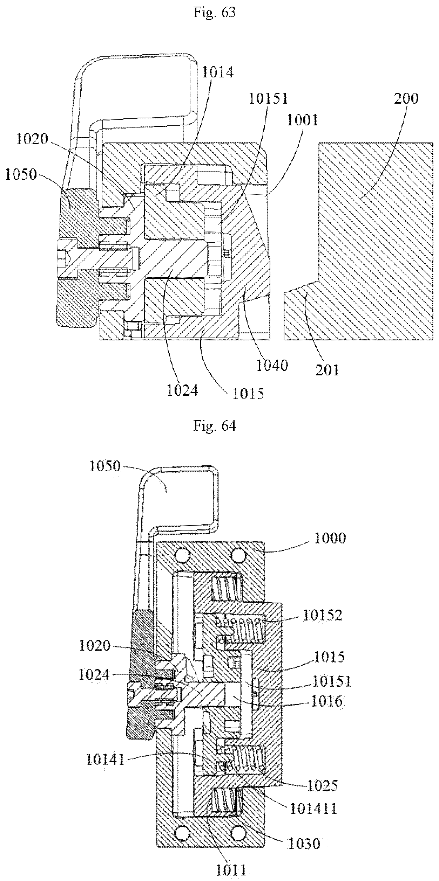

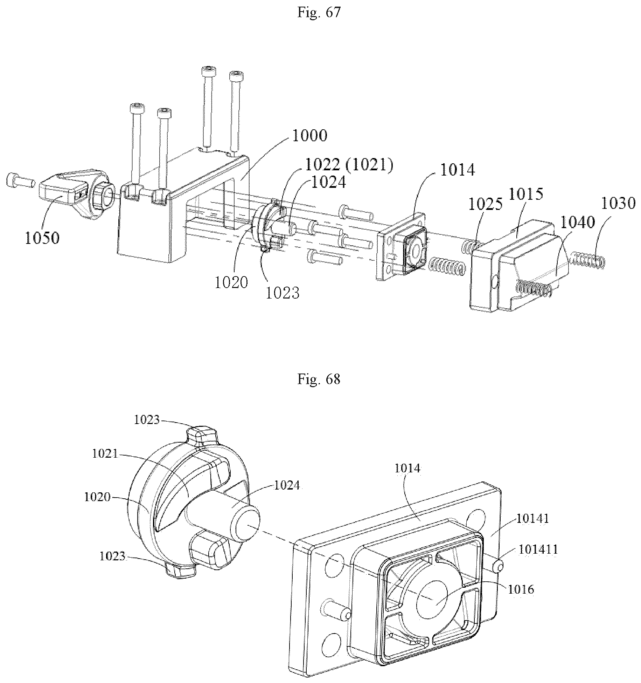

As shown in Figs. 64 and 67, the locking structure 1 of the embodiments of the present disclosure further includes a resetting assembly 1030. A first boss portion 1011 is provided on a side of the locking assembly 1010 that is away from the first opening 1001. The resetting assembly 1030 is disposed between the housing 1000 and the first boss portion 1011.

That is to say, when the transmission structure 1020 drives the locking assembly 1010 to move toward the material tray 200 at the first opening 1001, the resetting assembly 1030 is gradually compressed, until the locking assembly 1010 is locked with the material tray 200, and the resetting assembly 1030 is in a compressed state. When the transmission structure 1020 changes the rotation direction to reduce and even eliminate a compressive force on the locking assembly 1010, the resetting assembly 1030 has a tendency to extend a reset motion, so as to drive the locking assembly 1010 to move in the direction away from the material tray 200. In this way, through the driving of the resetting assembly 1030, unlocking can be conveniently realized during the unlocking of the locking assembly 1010 and the material tray 200, thereby improving operation convenience.

The resetting assembly 1030 includes a spring. The spring may be configured to be one of a tension spring, a compression spring, a torsional spring, and a rubber spring, which is not limited in the present disclosure, and may be designed according to requirements.

In order to cause the movement of the unlocking and resetting of the locking assembly 1010 to be more balanced, in some embodiments, the resetting assemblies 1030 are disposed on both sides of the locking assembly 1010 that are symmetrical to each other in the axial direction. In this way, the force on the locking assembly 1010 may be more balanced to prevent stagnation in the movement of the locking assembly 1010 in the housing 1000.

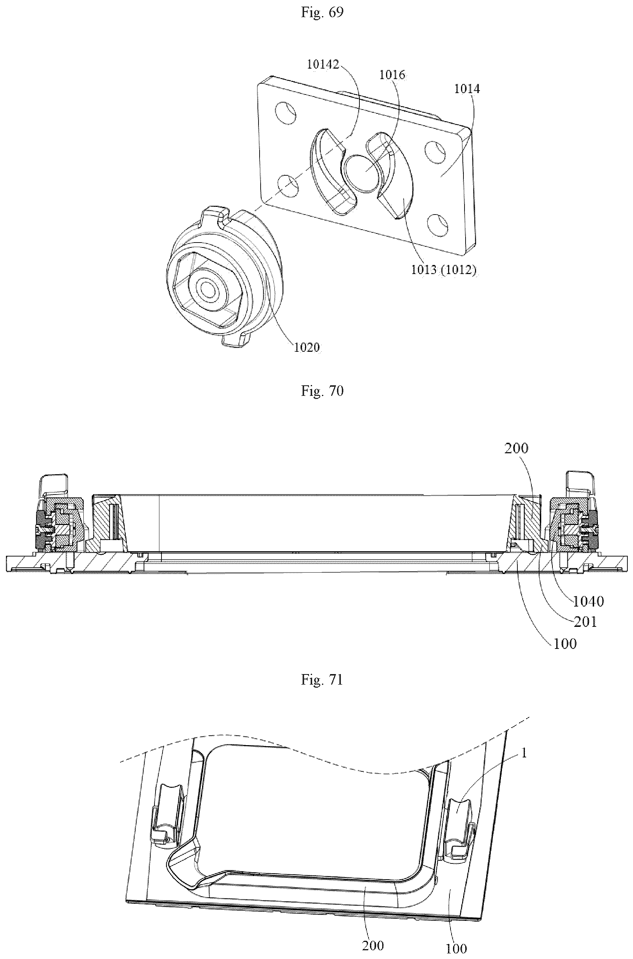

As shown in Figs. 68 and 69, in some embodiments, a plurality of pushing blocks 1021 are disposed on one of the first end of the transmission structure 1020 and the first end of the locking assembly 1010, and the other one is provided with an abutment portion 10142 and a plurality of accommodating notches 1012. The accommodating notches 1012 and the abutment portion 10142 are located on the same side. The pushing blocks 1021 are rotatably disposed in the accommodating notches 1012. When the pushing blocks 1021 rotate to the abutment portion 10142, the second end of the locking assembly 1010 is locked with the material tray 200; and when the pushing blocks 1021 rotate into the accommodating notches 1012, the second end of the locking assembly 1010 is unlocked with the material tray 200.

It may be understood that, the first end of the locking assembly 1010 faces toward the transmission structure 1020, and the first end of the transmission structure 1020 faces toward the locking assembly 1010. In some embodiments, the plurality of pushing blocks 1021 are disposed on the first end of the transmission structure 1020, and the first end of the locking assembly 1010 is provided with the abutment portion 10142 and the plurality of accommodating notches 1012. In some embodiments, the first end of the transmission structure 1020 is provided with the abutment portion 10142 and the plurality of accommodating notches 1012, and the plurality of pushing blocks 1021 are disposed on the first end of the locking assembly 1010.

Description is performed below, for example, the plurality of pushing blocks 1021 are disposed on the first end of the transmission structure 1020, and the first end of the locking assembly 1010 is provided with the abutment portion 10142 and the plurality of accommodating notches 1012.

The pushing blocks 1021 correspond to the accommodating notches 1012 on a one-to-one basis. When the transmission structure 1020 rotates, and when the pushing block 1021 rotates from being abutted against the abutment portion 10142 to being in the accommodating notch 1012, the accommodating notch 1012 provides a movement space for the resetting of the locking assembly 1010, and the locking assembly 1010 is unlocked with the material tray 200 under the driving of the resetting assembly 1030. When the pushing block 1021 rotates from being in the accommodating notch 1012 to being separated from and abutted against the abutment portion 10142, the locking assembly 1010 is locked with the material tray 200 under the compression of the transmission structure 1020. When the pushing block 1021 abuts against the abutment portion 10142, one side of the pushing block 1021 abuts against the housing 1000, and the other side abuts against the abutment portion 10142, such that self-locking can be formed, and is not easy to loosen.

It is to be noted that, when the material tray 200 needs to be removed, the transmission structure 1020 may be controlled to rotate to a resetting start position, that is, one end of the pushing block 1021 is about to enter a position of the accommodating notch 1012. In this case, under a thrust effect of the resetting assembly 1030, the pushing block 1021 slides into the accommodating notch 1012, and the locking assembly 1010 is automatically reset, such that the locking assembly 1010 is separated from the material tray 200, so as to realize unlocking. Automatic resetting is realized through the resetting assembly 1030, simple and labor-saving operations are realized, and efficiency is improved at the same time.

It may be understood that, in order to cause the pushing block 1021 to be stably changed from being abutted against the abutment portion 10142 to being embedded in the accommodating notch 1012 during rotation, or changed from being embedded in the accommodating notch 1012 to being abutted against the abutment portion 10142, the plurality of accommodating notches 1012 extend in a circumferential direction of the locking assembly 1010 and are spaced apart from each other, the abutment portion 10142 is disposed between any two adjacent accommodating notches 1012.

In addition, it may be understood that, in a radial direction, a width of the accommodating notch 1012 is greater than a width of the pushing block 1021, such that it can ensure that the pushing block 1021 is smoothly moved into the accommodating notch 1012.

As shown in Figs. 68 and 69, in some embodiments, a side of the pushing block 1021 that is close to the accommodating notch 1012 is provided with a first guiding slope. Through the arrangement of the first guiding slope, a guiding effect is achieved in the process of moving the pushing block 1021 from being abutted against the abutment portion 10142 to being embedded in the accommodating notch 1012, or moving out of the accommodating notch 1012 to abut against the abutment portion 10142, the pushing block 1021 and the accommodating notch 1012 are forced and relatively move in the axial direction, so as to reduce movement difficulty of the pushing block 1021, such that the movement of the pushing block 1021 at different positions is more stable and smooth, thereby preventing stagnation.

It is to be noted that, a tilt angle of the first guiding slope may be set according to requirements, for example, 5°, 10°, 15°, 20°, 25°, 30°, etc., as long as a guiding function may be realized.

In some embodiments, in a rotation direction separating from the accommodating notch 1012, a distance between the first guiding slope and the transmission structure 1020 is gradually shortened. In this way, the transmission structure 1020 can convert the transverse force into the longitudinal force through a small wedge-shaped angle. When the transmission structure 1020 is manually rotated by the user, the user can achieve a large locking force through a small operating force. When the transmission structure 1020 is driven to rotate by the drive portion, the drive portion may achieve the large locking force by outputting a small torque. The drive portion with small power can be selected to realize the miniaturization of the locking structure 1, and at the same time, the locking structure 1 is simple in structure, convenient in locking, and not easy to loosen.

It is to be noted that, "the rotation direction separating from the accommodating notch 1012" refers to a rotation direction in which the pushing block 1021 moves from the accommodating notch 1012 to the abutment portion 10142.

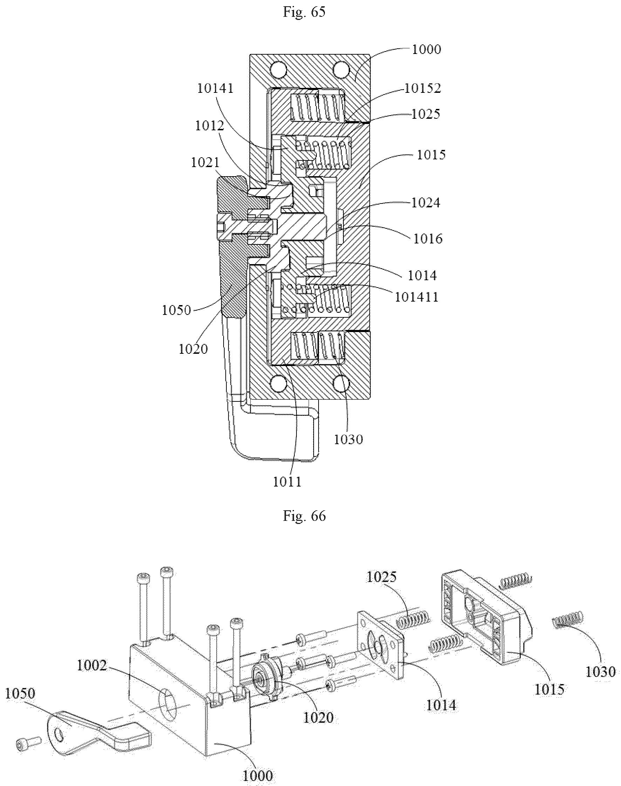

As shown in Figs. 65, 68, and 69, in some embodiments, the pushing block 1021 is a wedge-shaped block 1022, and in an extending direction of the wedge-shaped block 1022, a width of the wedge-shaped block 1022 is equal in all places. The accommodating notch 1012 is a wedge-shaped groove 1013, and a depth of the accommodating notch 1012 matches the pushing block 1021. When the transmission structure 1020 rotates, in the process from locking to unlocking the locking assembly 1010, since the wedge-shaped groove 1013 has a slope, the wedge-shaped block 1022 is forced to move in the axial direction, and the transmission structure 1020 can convert the transverse force into the longitudinal force through a small wedge-shaped angle. When the transmission structure 1020 is manually rotated by the user, the user can achieve a large locking force through a small operating force. When the transmission structure 1020 is driven to rotate by the drive portion, the drive portion may achieve the large locking force by outputting a small torque. The drive portion with small power can be selected to realize the miniaturization of the locking structure 1. At the same time, the locking structure 1 is simple in structure, convenient in locking, and not easy to loosen.

According to the locking structure 1 of the embodiments of the present disclosure, in some other embodiments, an inner thread is provided on one of the first end of the transmission structure 1020 and the first end of the locking assembly 1010, and the other one is provided with an outer thread. The inner thread is in threaded connection with the outer thread. In this way, the first end of the transmission structure 1020 and the first end of the locking assembly 1010 are driven through a threaded connection, such that the transverse force is converted into the longitudinal force, and a large locking force can be achieved through a small operating force.

For example, the some embodiments, a threaded hole is provided on one of the first end of the transmission structure 1020 and the first end of the locking assembly 1010, and the other one is provided with a screw rod. The screw rod is in threaded connection with the threaded hole. The transmission structure 1020 may be in a transmission connection with the drive portion, and the transmission structure 1020 is driven to rotate through the acting force of the drive portion. The drive portion may be configured to be an electric motor.

As shown in Figs. 62 and 68, in some embodiments, the transmission structure 1020 is provided with a first limiting structure 1023, the housing 1000 is provided with a second limiting structure 1026, and the second limiting structure 1026 is configured to define a rotation range of the first limiting structure 1023.

That is to say, if there is one second limiting structure 1026 disposed on the housing 1000, and when the transmission structure 1020 rotates to cause the first limiting structure 1023 to rotate to a first position, the first limiting structure 1023 abuts against one side of the second limiting structure 1026, so as to prevent the first limiting structure 1023 from continuously rotating. After the transmission structure 1020 changes the rotation direction, and when the first limiting structure 1023 rotates to a second position, the first limiting structure 1023 abuts against the other side of the second limiting structure 1026, so as to prevent the transmission structure 1020 from continuously rotating. Therefore, the rotation range of the first limiting structure 1023 is defined by setting an extending length of the second limiting structure 1026 in the circumferential direction.

If there are two second limiting structures 1026 disposed on the housing 1000, the two second limiting structures 1026 are spaced apart from each other. When the transmission structure 1020 rotates to cause the first limiting structure 1023 to rotate to the first position, the first limiting structure 1023 abuts against one side of the second limiting structure 1026. After the transmission structure 1020 changes the rotation direction, and when the first limiting structure 1023 rotates to the second position, the first limiting structure 1023 abuts against the other second limiting structure 1026, so as to prevent the transmission structure 1020 from continuously rotating. Therefore, the rotation range of the first limiting structure 1023 is defined by setting positions of the two second limiting structures 1026.

The first limiting structure 1023 may be configured as a baffle block, and the second limiting structure 1026 may also be configured as a baffle block, so as to simplify structure arrangement. Definitely, specific structures of the first limiting structure 1023 and the second limiting structure 1026 are not limited in the present disclosure. The first limiting structure 1023 and the second limiting structure 1026 may also be configured as protrusions.

As shown in Figs. 62-67, in some embodiments, the locking assembly 1010 includes a buffer member 1014 and a pressing member 1015. The first end of the locking assembly 1010 is an end of the buffer member 1014 that is close to the transmission structure 1020, the second end of the locking assembly 1010 is an end of the pressing member 1015 that is close to the material tray 200, and the first boss portion 1011 is disposed on the pressing member 1015. The pressing member 1015 is provided with a first guide groove 10151, and the buffer member 1014 is movably disposed in the first guide groove 10151. That is to say, the buffer member 1014 is directly cooperated with the transmission structure 1020. For example, the pushing block 1021 or the accommodating notch 1012 is provided on the buffer member 1014. The first guide groove 10151 plays a role in limiting and guiding the buffer member 1014, such that the buffer member 1014 always remains in the first guide groove 10151 when the buffer member 1014 moves relative to the pressing member 1015, so as to prevent separation from the first guide groove 10151 or dislocation with the pressing member 1015. The transverse force applied by the transmission structure 1020 is converted into an axial force through the buffer member 1014 and transfer same to the pressing member 1015. Through a force transmission effect of the buffer member 1014, axial movement may be realized. Compared to a formation mode of integrating the buffer member 1014 and the pressing member 1015, this can reduce requirements for the formation accuracy and assembly accuracy of the pressing member 1015.

As shown in Figs. 64 and 65, in some embodiments, the pressing member 1015 is provided with a second guide groove, a second boss portion 10141 is provided on the buffer member 1014, the second boss portion 10141 is opposite to an opening of the second guide groove, and an elastic member 1025 is disposed between the second guide groove and the second boss portion 10141. Through the buffer effect of the elastic member 1025 on the pressing member 1015 and the buffer member 1014, the mating between the buffer member 1014 and the elastic member 1025 can provide an axial displacement allowance, such that the requirements for the formation accuracy and assembly accuracy of the pressing member 1015 are reduced, and an impact caused by assembly errors between the buffer member 1014 and the pressing member 1015 is also reduced.

Two ends of the elastic member 1025 respectively abuts against a bottom wall of the second guide groove and the second boss portion 10141. The second guide groove plays a role in guiding and limiting the elastic member 1025 to cause the elastic member 1025 to be compressed or extend in the axial direction of the second guide groove, such that stagnation between the buffer member 1014 and the pressing member 1015 caused by deviation when the elastic member 1025 is compressed or extends is prevented.

The elastic member 1025 may be configured as a conical spring, a cylindrical helical spring, a rectangular spring, or a cantilever elastic piece structure, may be designed according to requirements, is not limited in the present disclosure, and preferably selects the rectangular spring. Due to the large rigidity of the rectangular spring, while a buffer effect is achieved, the impact caused by assembly errors between the buffer member 1014 and the pressing member 1015 can be further reduced, and at the same time, a rigid weak structure (e.g., a handle) in the assembly is protected and prevented from being damaged by an unexpected force due to structure stagnation.

As shown in Figs. 62, 63, and 70, in some embodiments, the material tray 200 is provided with a first locking portion 201, and the second end of the locking assembly 1010 is provided with a second locking portion 1040. When the second end of the locking assembly 1010 is locked with the material tray 200, the first locking portion 201 is in clamped connection with the second locking portion 1040. In this way, when the first locking portion 201 is in clamped connection with the second locking portion 1040, the locking structure 1 and the material tray 200 are not easy to loosen, such that the stability of the material tray 200 during operation can be ensured. When the locking structure 1 needs to be unlocked with the material tray 200, the first locking portion 201 is also easily separated from the second locking portion 1040, such that convenient locking and dismounting is realized, and operation convenience is improved.

As shown in Figs. 62, 63, and 70, in some embodiments, the first locking portion 201 is provided with a second guiding slope, the second locking portion 1040 is provided with a third guiding slope, and when the second end of the locking assembly 1010 is locked with the material tray 200, the second guiding slope abuts against the third guiding slope. It may be understood that, a limiting effect can be achieved when the second guiding slope mutually abuts against the third guiding slope. In the process that the locking assembly 1010 changes from a locking state to an unlocking state, a guiding effect is achieved in the process that the second guiding slope and the third guiding slope are separated from each other, to reduce the difficulty of separation, so as to reduce abrasion between the first locking portion 201 and the second locking portion 1040. In the process that the locking assembly 1010 changes from the unlocking state to the locking state, the guiding effect is achieved in the process that the second guiding slope and the third guiding slope are close to each other, to reduce the difficulty of mutual abutment, so as to reduce the abrasion between the first locking portion 201 and the second locking portion 1040.

It may be understood that, tilt angles of the second guiding slope and the third guiding slope may be same or different. Preferably, the tilt angles of the second guiding slope and the third guiding slope are the same. In this way, when the second guiding slope mutually abuts against the third guiding slope, a contact area between the second guiding slope and the third guiding slope can be increased, such that the locking structure 1 is more stable, not easy to shake or loose when locking the material tray 200. For example, the tilt angles of the second guiding slope and the third guiding slope relative to a horizontal plane both are 5°, 10°, 15°, 20°, 25°, 30°, etc. which are only examples for description in the present disclosure, without limitation, and may be set according to requirements.

As shown in Figs. 64 and 65, according to the locking structure 1 of the embodiments of the present disclosure, the locking assembly 1010 is provided with a third guide groove 1016, a first guide post 1024 is disposed on the transmission structure 1020, and the first guide post 1024 rotatably penetrates the third guide groove 1016. Through the mating between the third guide groove 1016 and the first guide post 1024, the third guide groove 1016 plays a role in limiting and guiding the first guide post 1024, such that when the transmission structure 1020 rotates relative to the locking assembly 1010, and the transmission structure 1020 converts the transverse force into the axial force for moving the locking assembly 1010 in the axial direction, the first guide post 1024 and the third guide groove 1016 can be cooperated with each other to achieve the effect of guiding and limiting the movement of the locking assembly 1010, so as to prevent stagnation with the housing 1000 or the transmission structure 1020 due to offset during the movement of the locking assembly 1010 in the axial direction.

As shown in Figs. 64 and 65, in some embodiments, a second guide post 101411 is disposed on the second boss portion 10141, and the second guide post 101411 penetrates the second guide groove. The second guide post 101411 plays a role in guiding the elastic member 1025, so as to prevent stagnation due to the offset during the compression and extending of the elastic member 1025.

As shown in Figs. 62-66, according to the locking structure 1 of the embodiments of the present disclosure, the housing 1000 also has a second opening 1002, a drive portion 1050 is disposed outside the housing 1000, and part of the drive portion 1050 is connected to the transmission structure 1020 by penetrating the second opening 1002. The drive portion 1050 may be a handle, and the handle is designed such that the user can conveniently rotate the transmission structure 1020 according to a required direction by operating the handle. When locking is required, the handle is rotated to driven the transmission structure 1020 to rotate, such that the transmission structure 1020 drives the locking assembly 1010 to move to be locked with the material tray 200. When unlocking is required, the handle is rotated to drive the transmission structure 1020 to rotate reversely, such that the transmission structure 1020 drives the locking assembly 1010 to move to be separated from the material tray 200. The drive portion 1050 can increase a moment operated by the user, such that the user may drive the transmission structure 1020 to rotate by applying a small acting force.

In some embodiments, the drive portion 1050 is provided with anti-slip grains or anti-slip protrusions. In this way, a friction force when the user grabs the drive portion 1050 may be increased to prevent the user from slipping with the drive portion 1050.

Fig. 70 is a cross-sectional view of a local structure of the three-dimensional printing device.

As shown in Figs. 70 and 71, the three-dimensional printing device of the present disclosure includes the frame 100. A material tray and the locking structure 1 are disposed on the frame 100. The housing 1000 is fixed on the frame 100. The material tray is the material tray 200.

As shown in Fig. 71, the material tray and the locking structure 1 are spaced apart from each other in a horizontal direction, and the transmission structure 1020 drives the locking assembly 1010 to move in the horizontal direction, so as to be close to or away from the material tray.

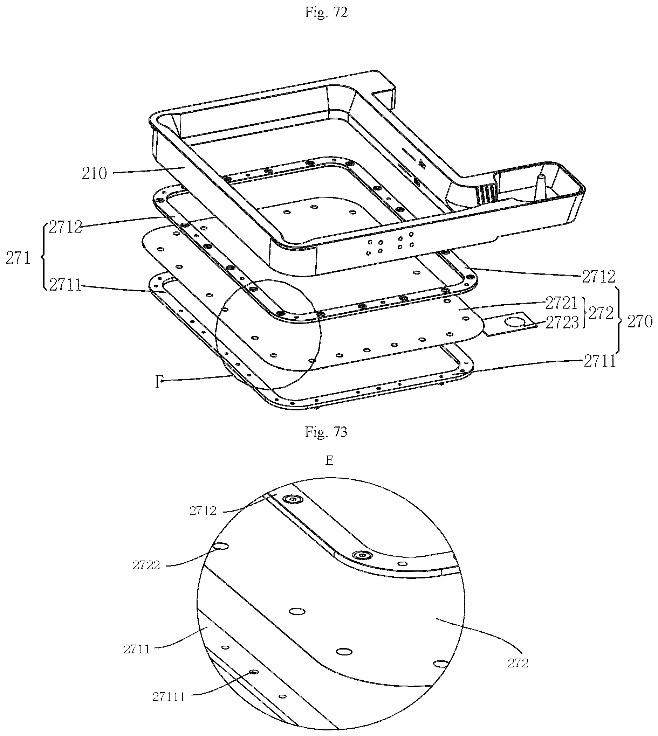

As shown in Figs. 72-75, in some embodiments, the material tray 200 includes a material tray frame 210 and a release film assembly. The release film assembly 270 is detachably disposed on the material tray frame 210. The release film assembly 270 includes a fixed rack assembly 271 and a release film 272 fixed on the fixed rack assembly 271. The fixed rack assembly 271 includes a first fixed rack 2711 and a second fixed rack 2712, which are detachably connected to each other. The release film 272 is fixed between the first fixed rack 2711 and the second fixed rack 2712. The release film 272 may be tightened by the first fixed rack 2711 and the second fixed rack 2712. When the release film 272 needs to be changed, the release film assembly 270 may be directly changed only by dismounting the release film assembly 270, or after the release film assembly 270 is dismounted, the first fixed rack 2711 and the second fixed rack 2712 may further be separated, so as to change the release film 272.

In some embodiments, the release film 272 includes a release film body 2721. The release film body 2721 is provided with an assembly hole 2722, one of the first fixed rack 2711 and the second fixed rack 2712 is provided with a second limiting hole 27111, a limiting post 27121 is disposed on the other one, and the limiting post 27121 penetrates the assembly hole 2722 and the second limiting hole 27111.

It may be understood that, this means that the limiting post 27121 may be disposed on the first fixed rack 2711, and the second limiting hole 27111 is provided on the second fixed rack 2712; or the second limiting hole 27111 may also be provided on the first fixed rack 2711, and the limiting post 27121 is disposed on the second fixed rack 2712.

When the release film 272 needs to be fixed in the fixed rack assembly 271, the assembly hole 2722 of the release film 272 is first sleeved on the limiting post 27121, and then the limiting post 27121 penetrates the second limiting hole 27111, so as to realize the assembly of the first fixed rack 2711 and the second fixed rack 2712. On one hand, through the mating of the limiting post 27121, the assembly hole 2722, and the second limiting hole 27111, the release film 272 can be fixed, and on the other hand, through the mating of the limiting post 27121, the assembly hole 2722, and the second limiting hole 27111, the release film 272 can be positioned, so as to achieve a fool-proofing effect, such that assembly may be in place without adjusting the release film 272, and the dislocation of the release film 272 in the fixed rack assembly 271 is prevented.

In some embodiments, there are a plurality of assembly holes 2722, and the plurality of assembly holes 2722 are arranged in a circumferential direction of the release film body 2721.

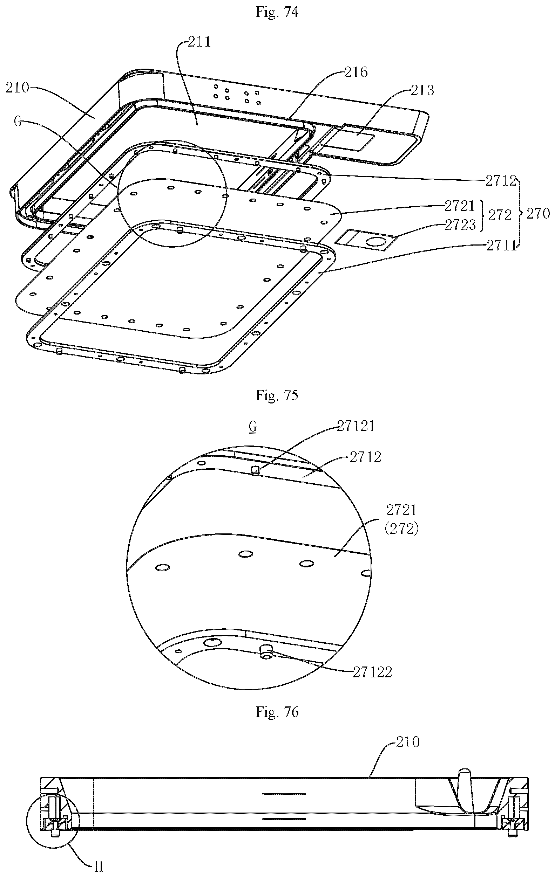

As shown in Figs. 74 and 75, in some embodiments, the second fixed rack 2712 is located on a side of the release film 272 that is away from the base plate 110. At least one support post 27122 is disposed on a side of the first fixed rack 2711 that is away from the second fixed rack 2712. The support post 27122 bears against the base plate 110 to cause the release film 272 to be spaced apart from the base plate 110. In this way, when the fixed rack assembly 271 is placed on the base plate 110, the release film 272 can be spaced apart from the base plate 110, so as to prevent the release film 272 from generating electrostatic adsorption with the base plate 110, thus affecting a formation effect of the printed object, and the base plate 110 or components mounted on the base plate 110 can also be prevented from damaging the release film 272 to a certain extent.

The plurality of support posts 27122 may also be disposed on the side of the first fixed rack 2711 that is away from the second fixed rack 2712. The plurality of support posts 27122 are uniformly distributed in a circumferential direction of the first fixed rack 2711.

Definitely, the manner of disposing the support post 27122 is not limited to the above. For example, in some embodiments, the support post may be disposed on the material tray frame 210, and may be specifically disposed on a side of the material tray frame 210 that faces toward the base plate 110.

Further, in an application scenario, the base plate 110 may be provided with a support groove corresponding to the support post 27122. When the material tray 200 is mounted on the frame 100, the support posts may be respectively correspondingly inserted in the corresponding support grooves, such that the material tray 200 can be further positioned and limited, thereby improving the stability of the material tray 200.

Referring to Figs. 76-77, in some embodiments, a convex strip 27123 is disposed on one of the first fixed rack 2711 and the second fixed rack 2712, the other one is provided with a first groove 27112 matching the convex strip 27123, and the convex strip 27123 is embedded in the first groove 27112. Specifically, the convex strip 27123 and the first groove 27112 may be respectively surrounded in a circumferential direction of the corresponding fixed rack and are correspondingly arranged. Therefore, the release film 272 can be further tightened by the first fixed rack 2711 and the second fixed rack 2712, and the release film 272 may be jointly pressed in the first groove 27112 with the convex strip 27123. In the embodiments shown in Figs. 76-77, the first groove 27112 is provided on the first fixed rack 2711, and the convex strip 27123 is provided on the second fixed rack 2712. Alternatively, the convex strip 27123 is provided on the first fixed rack 2711, and the first groove 27112 is provided on the second fixed rack 2712.

In an embodiment, the material tray frame 210 is provided with a snap-fit groove 215 circumferentially extending along the material tray frame 210, the snap-fit groove 215 has an opening in a direction close to the base plate 110, and the fixed rack assembly 271 is embedded in the snap-fit groove 215. A limiting card is disposed in the snap-fit groove 215, and the limiting card bears against the fixed rack assembly 271. The fixed rack assembly 271 is embedded in the snap-fit groove 215, and the limiting card limits the fixed rack assembly 271, so as to prevent the separation of the fixed rack assembly 271.

The material tray frame 210 is also provided with an avoidance space, and the avoidance space communicates with the snap-fit groove 215 and is located on a side of the second fixed rack 2712 that is away from the first fixed rack 2711. It may be understood that, the avoidance space may be provided at the periphery of the material tray frame 210, and the avoidance space may be at least partially located on the side of the second fixed rack 2712 that is away from the first fixed rack 2711. When the fixed rack assembly 271 needs to be dismounted from the snap-fit groove 215, a fixture is inserted in the avoidance space to ejects the fixed rack assembly 271 from the snap-fit groove 215, so as to dismount the fixed rack assembly 271 from the snap-fit groove 215.

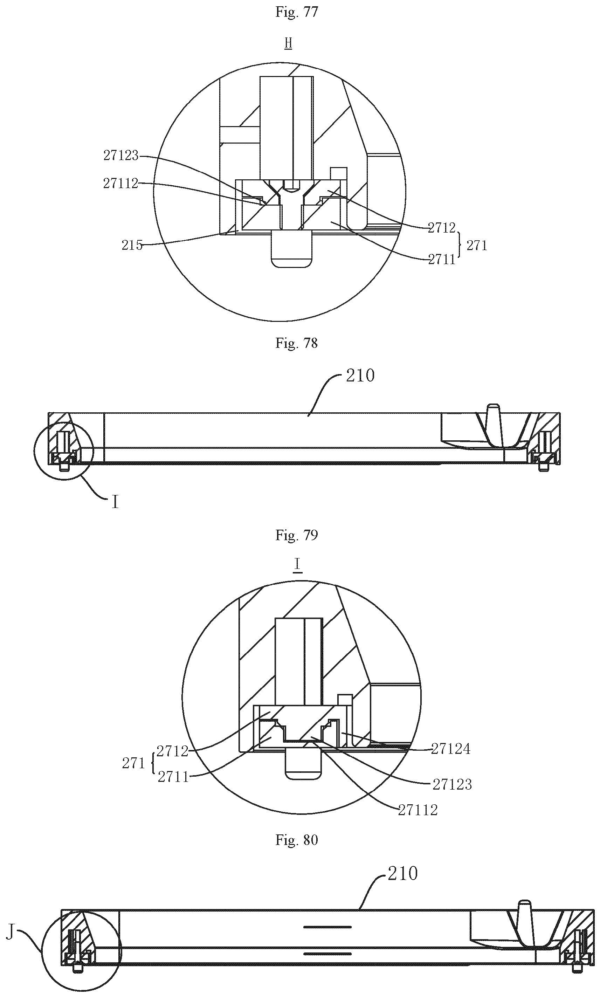

As shown in Figs. 78-79, a flange 27124 is disposed on the inner circumferential edge of the second fixed rack 2712, and the flange 27124 bears against the first fixed rack 2711 and is flush with a surface of a side of the first fixed rack 2711 that is away from the second fixed rack 2712. In this way, the release film 272 is sandwiched between the flange 27124 and the first fixed rack 2711, and is tightened and flattened under the action of the flange 27124. In an application scenario, when the release film assembly 270 is mounted on the material tray frame 210, a bottom edge of the material tray frame 210 is flush with or nearly flush with the side of the first fixed rack 2711 that is away from the second fixed rack 2712. Therefore, when the mounting is completed, the release film 272 is not subjected to, or is only marginally subjected to the tightening of the edge of the material tray frame 210 again.

Furthermore, the material tray frame 210 further includes a first sealing ring. The first sealing ring is located between the fixed rack assembly 271 and the material tray frame 210. The fixed rack assembly 271 includes a second sealing ring, and the second sealing ring is located between the first fixed rack 2711 and the second fixed rack 2712. The leakage of the printing material can be prevented by disposing the first sealing ring and the second sealing ring.

In another embodiment, as shown in Figs. 80-81, the release film assembly 270 is mounted on the material tray frame 210 through a fastener 280. The bottom of the material tray frame 210 is attached to and then connected to an upper surface of the second fixed rack 2712 through the fastener 280. In this way, when the fixed rack assembly 271 needs to be dismounted, the fastener 280 only needs to be loosened to conveniently dismount the fixed rack assembly 271.

In an application scenario, an inner circumferential edge of the first fixed rack 2711 is flush with an inner circumferential edge of the second fixed rack 2712. In this way, when the release film assembly 270 is mounted in the material tray frame 210, the material tray frame 210 is attached to inner peripheries of the first fixed rack 2711 and the second fixed rack 2712, such that the release film 272 is sandwiched between the material tray frame 210 and the first fixed rack 2711, and is tightened again by the material tray frame 210 in addition to being subjected to the tightening action of the first fixed rack 2711 and the second fixed rack 2712.

As shown in Figs. 72, 74, and 82-83, in some embodiments, the release film 272 includes a release film body 2721 and a release film identifier 2723 connected to the release film body 2721. The material tray frame 210 defines a primary groove 211, a channel 212, and a secondary groove 213 of the material tray 200. The release film body 2721 is embedded in the primary groove 211, and the release film identifier 2723 is embedded in the secondary groove 213. A release film reader 230 is disposed on the frame 100, and the release film identifier 2723 is disposed opposite to the release film reader 230.

The release film identifier 2723 on the release film 272 is configured to record information of the release film 272, for example, the service life of the release film 272, the number of times for use, etc. When the release film assembly 270 is mounted in the material tray frame 210, the release film identifier 2723 may read a label on the release film 272. The structure is rational in arrangement, such that a read-write distance of the release film reader 230 is guaranteed, missed reading is prevented, and according to related information of the release film 272 that is read, the changing of the release film 272 can be guided.

Further, the release film identifier 2723 may be at least one of a two-dimensional code, a character code, a digital code, a bar code, a specially-made pattern, an NFC label, an RFID label, or an electronic chip. When the release film identifier 2723 is the NFC label, the release film reader 230 may be an NFC reader. Specifically, as shown in Fig. 100, when the material tray 200 is mounted on the base plate 110 of the frame 100, the release film reader 230 is controlled by the control mechanism 600 of the three-dimensional printing device, to cause the release film reader to communicate with the release film identifier 2723, so as to read the service life of the release film 272 and feed back same to the control mechanism 600. Moreover, every time the three-dimensional printing device prints a layer, or before or after a printed object is printed, the control mechanism 600 may control the NFC reader to perform NFC with an NFC label, so as to write the number of times for use to the NFC label.

When the control mechanism 600 receives that the number of times for use of the release film 272 has been reached, has reached the service life, or is about to reach the service life, an alarm module of the three-dimensional printing device may be controlled to output alarms or information to the outside world. A specific operation mode of the alarm module includes, but is not limited to, a control screen or other modes such as ringing of bells, flashing lights, etc. for alarms or warnings, so as to remind timely changing of the corresponding release film 272. In addition, since the NFC label can automatically record the number of times for use of the release film 272, when the release film 272 is used on different three-dimensional printing devices, the release film reader 230 can also acquire the number of times for use of the release film 272 from the release film identifier 2723, so as to know the remaining service life of the release film 272.

Definitely, in other embodiments, positions and communication timing of the release film identifier 2723 and the release film reader 230 are not limited by the above manner, as long as a communication between the release film identifier and the release film reader can be realized. In some other embodiments, the release film identifier 2723 may also be of other types, for example, at least one of the two-dimensional code, the character code, the digital code, the bar code, the specially-made pattern, the NFC label, the RFID label, or the electronic chip. In addition, the release film identifier 2723 may also have no recording function of its own, but after the release film reader 230 identifies the release film identifier 2723, the control mechanism 600 connected to the release film reader 230 records the use of the release film 272. Definitely, the release film identifier 2723 may not be limited to only record the number of times for use of the corresponding release film 272, and may also record other identity information of the corresponding release film 272 according to requirements, such as numbers, materials, time for leaving factory, manufacturers, etc., which may specifically set according to actual use requirements, and is not specifically limited herein.

In an embodiment, the material tray frame 210 is provided with a liquid pouring port, and the liquid pouring port communicates with the primary groove 211, facilitating the pouring of the printing material in the primary groove 211 of the material tray 200. The liquid pouring port may be located at a top edge of the material tray frame 210, or may also be located at a non-edge portion. There may be one or more liquid pouring ports. When there are a plurality of liquid pouring ports, the liquid pouring ports are arranged at intervals in the circumferential direction of the material tray frame 210. Definitely, in some application scenarios, the liquid pouring port may also be located at the secondary groove 213 and communicates with the secondary groove 213, and is not specifically limited herein.

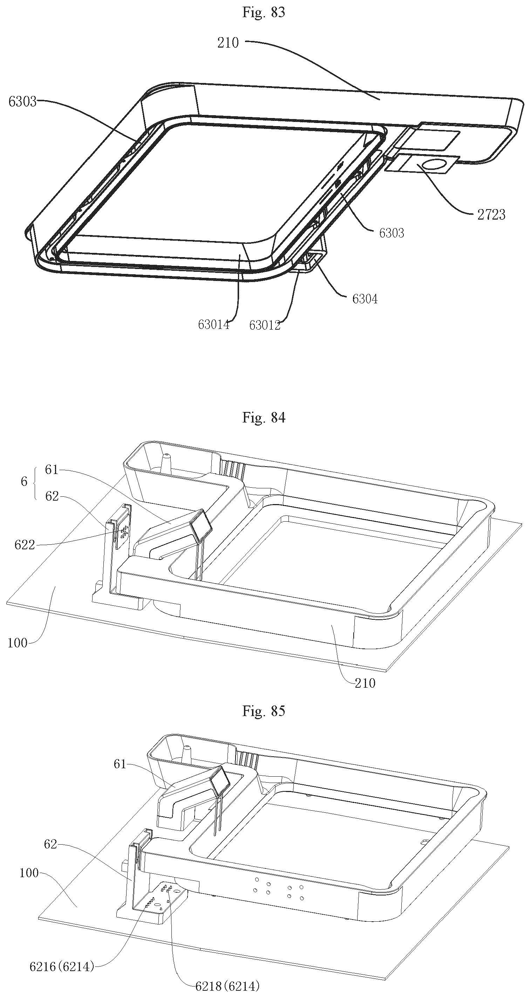

Referring to Figs. 83-90, 100, and 116-118, the present disclosure provides a functional mechanism 6, which is used for the three-dimensional printing device. The three-dimensional printing device includes a frame 100. The functional mechanism 6 includes a detachable fixed base 61 and a connector base 62 fixed disposed on the frame 100. The fixed base 61 includes a functional module 611 and a first connector 612 electrically connected to the functional module 611. A control mechanism 600 is disposed in the frame 100 or the connector base 62. A second connector 621 electrically connected to the control mechanism 600 is disposed in the connector base 62. When the fixed base 61 is mounted on the frame 100, the fixed base 61 abuts against the connector base 62 such that the first connector 612 is electrically connected to the second connector 621.

It is to be noted that, the fixed base 61 is detachably mounted on the frame 100, the fixed base 61 may be directly mounted on the frame 100, or the fixed base 61 may also be mounted on other components and then mounted on the frame 100 through other components.

When the fixed base 61 is mounted on the frame 100, the fixed base 61 abuts against the connector base 62, such that the first connector 612 is electrically connected to the second connector 621, the functional module 611 is electrically conductive to the control mechanism 600, and the control mechanism 600 may control the functional module 611 to execute a corresponding operation instruction. When the functional module 611 needs to be dismounted from the frame 100, it may be realized by only removing the fixed base 61 from the frame 100, such that dismounting from the frame 100 can be rapidly realized, thereby simplifying disassembly and assembly steps, saving operation time, and facilitating the later changing of damaged components. In addition, through the above, complicated routing can be reduced, the structure of the functional mechanism 6 is simplified, and the three-dimensional printing device.

In some embodiments, one of the fixed base 61 and the connector base 62 is provided with a first limiting protrusion, and the other one is provided with a first limiting groove. The fixed base 61 is configured to be detachably connected to the connector base 62 through the mating between the first limiting protrusion and the first limiting groove. The first limiting protrusion may be disposed on the fixed base 61, and the connector base 62 is provided with the first limiting groove; and alternatively, the fixed base 61 is provided with the first limiting groove, and the other is provided with the first limiting protrusion.

Specifically, the number of the first limiting protrusions and the first limiting grooves may be two, such that the fixed base 61 is conveniently positioned while the fixed base 61 is mounted on the connector base 62.

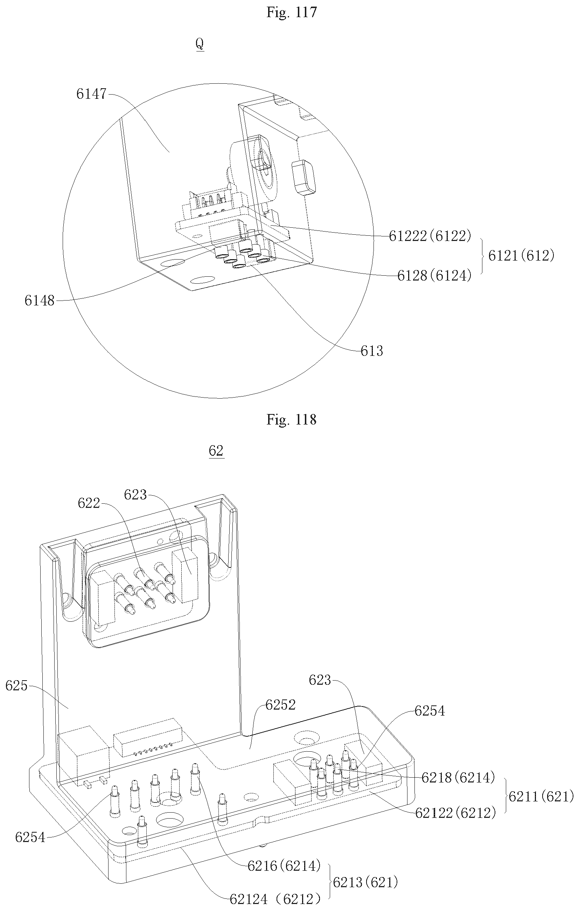

As shown in Figs. 117 and 118, in some embodiments, a first magnet 613 is disposed on one of the fixed base 61 and the connector base 62, and a second magnet 623 is disposed on the other one. The fixed base 61 is configured to be detachably connected to the connector base 62 through adsorption between the first magnet 613 and the second magnet 623.

The first magnet 613 and the second magnet 623 are disposed opposite to each other and are adsorbable. Adsorption is performed through the mating of the first magnet 613 and the second magnet 623, such that the connection stability of the fixed base 61 and the connector base 62 can be guaranteed. When the fixed base 61 is mounted on the connector base 62, the loosening and shaking between the fixed base 61 and the connector base 62 can be prevented. When the fixed base 61 needs to be moved, the fixed base 61 may be dismounted only by overcoming an adsorption magnetic force between the first magnet 613 and the second magnet 623, such that dismounting and mounting processes are all simplified, thereby improving the use convenience of the user.

In addition, the first magnet 613 may be disposed on the fixed base 61, and the second magnet 623 is disposed on the connector base 62; and alternatively, the second magnet 623 may also be disposed on the fixed base 61, and the first magnet 613 is disposed on the connector base 62. When the first magnet 613 is disposed on the fixed base 61, the first magnet 613 may be disposed in the fixed base 61, or an outer housing of the fixed base 61 is the first magnet 613; and when the second magnet 623 is disposed on the fixed base 61, the second magnet 623 may be disposed in the fixed base 61, or the outer housing of the fixed base 61 is the second magnet 623.

It is to be noted that, one of the first magnet 613 and the second magnet 623 may be a magnet, and the other one is a substance such as ferroalloy, nickel alloy, and cobalt alloy that may be adsorbed by the magnet; and alternatively, both of the first magnet 613 and the second magnet 623 are magnets.

That is to say, in some embodiments, one of the fixed base 61 and the connector base 62 is provided with the first limiting protrusion, and the other one is provided with the first limiting groove. In some embodiments, the first magnet 613 is disposed on one of the fixed base 61 and the connector base 62, and the second magnet 623 is disposed on the other one. In some embodiments, one of the fixed base 61 and the connector base 62 is provided with the first limiting protrusion, and the other one is provided with the first limiting groove; and the first magnet 613 is disposed on one of the fixed base 61 and the connector base 62, and the second magnet 623 is disposed on the other one.

As shown in Fig. 118, a third connector 622 electrically connected to the control mechanism 600 is also disposed in the connector base 62. The third connector 622 is used as a standby connector, and thus may be connected to other modules for upgrading.

As shown in Figs. 83 and 117-118, the first connector 612 includes a first connector circuit board 6122 and a first connection portion 6124 integrated on the first connector circuit board 6122, and the second connector 621 includes a second connector circuit board 6212 and a second connection portion 6214 integrated on the second connector circuit board 6212. When the fixed base 61 is mounted on the frame 100, the first connection portion 6124 electrically abuts against the second connection portion 6214. Through such arrangement, the first connection portion 6124 and line control of the first connection portion 6124 can be respectively integrated on the first connector circuit board 6122, and the second connection portion 6214 and line control of the second connection portion 6214 are integrated on the second connector circuit board 6212, such that routing and extra design are simplified, modular assembly can be realized, convenient production assembly is realized, and later changing for damages is facilitated.

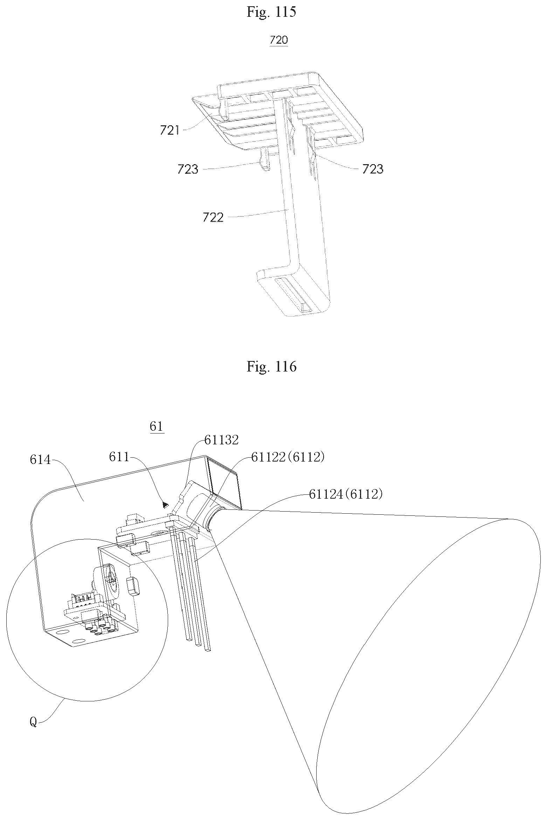

As shown in Figs. 116-118, in some embodiments, the fixed base 61 includes a first housing 614; the first housing 614 defines a first mounting cavity 6147 and a first hole 6148 communicating with the first mounting cavity 6147; the functional module 611 and the first connector 612 are disposed in the first mounting cavity 6147; and the first connection portion 6124 is at least partially exposed from the first hole 6148. The connector base 62 includes a second housing 625; the second housing 625 defines a second mounting cavity 6252 and a second hole 6254 communicating with the second mounting cavity 6252; the second connector 621 is disposed in the second mounting cavity 6252; and the second connection portion 6214 is at least partially exposed from the second housing. In this way, the functional module 611 and the first connector 612 are protected by the first housing 614, so as to prevent dust and foreign objects, water vapor, etc. from damaging the functional module 611 and the first connector 612. The second connector 621 is protected by the second housing 625, so as to prevent the dust and foreign objects, water vapor, etc. from damaging the second connector 621.

As shown in Figs. 83-86 and 118, in some embodiments, the three-dimensional printing device further includes a material tray 200 detachably disposed on the frame 100. The functional module 611 includes a heating module. The heating module is configured to heat the material tray 200, so as to heat the printing material in the material tray 200. The first connector 612 includes a first heating connector 6123; the first connector circuit board 6122 includes a first heating connector circuit board 61232; and the first connection portion 6124 includes a first heating connection portion 6126. The second connector 621 includes a second heating connector 6213; the second connector circuit board 6212 includes a second heating connector circuit board 62124; and the second connection portion 6214 includes a second heating connection portion 6216. The material tray 200 includes a material tray frame 210. The first housing 614 includes the material tray frame 210 and a cover housing 6141, which are cooperated with each other. The material tray frame 210 defines the first mounting cavity 6147, and the cover housing 6141 defines the first hole 6148. When the material tray 200 is mounted on the frame 100, the first heating connection portion 6126 electrically abuts against the second heating connection portion 6216. The heating module may specifically be in the form of sheets, wires, etc. A heating principle may be electric heating, infrared heating, microwave heating, etc., which is not limited herein.

Since an impact of an ambient temperature on the formation quality of the printing material is taken into consideration during printing, when being used at some low ambient temperatures, the printing material may be heated to ensure that printing is performed normally. In the present disclosure, through the arrangement of the heating module, the printing material in the material tray 200 may be heated. By designing the first heating connection portion 6126 to abut against and be electrically conductive to the second heating connection portion 6216, the heating module can be conveniently dismounted from the frame 100. When the heating module is mounted in the material tray 200, and the material tray 200 is mounted on the frame 100, the first heating connection portion 6126 abuts against and is electrically conductive to the second heating connection portion 6216. When the material tray 200 is dismounted from the frame 100, the first heating connection portion 6126 is separated from the second heating connection portion 6216 without complex wire disconnection and connection steps, such that disassembly and assembly processes between the heating module and the frame 100 are simplified. The first heating connection portion 6126 and the second heating connection portion 6216 have a plurality of forms, for example, one of them is in a contact type, and the other is in a thimble type.

As shown in Figs. 83-86 and 90, in some embodiments, the first mounting cavity 6147 includes a fixed groove 6303 and a mounting groove 6304. The material tray frame 210 includes a body portion 63012 and a protrusion portion 63014. The body portion 63012 defines the fixed groove 6303 circumferentially extending along the body portion 63012. The protrusion portion 63014 defines the mounting groove 6304 communicating with the fixed groove 6303. The heating module is embedded in the fixed groove 6303. The first heating connector 6123 is embedded in the mounting groove 6304. Therefore, when the material tray frame 210 is mounted on the frame 100, whether the first heating connector 6123 and the second heating connector 6213 are mounted in place may be determined by means of aligning the protrusion portion 63014 and the connector base 62, such that the process of mounting and aligning the material tray frame 210 is simplified.

As shown in Figs. 84-85 and 116-118, in some embodiments, the three-dimensional printing device further includes the material tray 200 disposed on the frame 100. The functional module 611 further includes a detection module. The detection module is configured to detect the printing material in the material tray 200. The first connector 612 includes a first detection connector 6121, the first connector circuit board 6122 includes a first detection connector circuit board 61222, and the first connection portion 6124 includes a first detection connection portion 6128. The second connector 621 includes a second detection connector 6211, the second connector circuit board 6212 includes a second detection connector circuit board 62122, and the second connection portion 6214 includes a second detection connection portion 6218. The fixed base 61 is detachably mounted on the material tray 200. When the material tray 200 is mounted on the frame 100, the first detection connection portion 6128 electrically abuts against the second detection connection portion 6218.

As shown in Figs. 83 and 84, in some embodiments, the protrusion portion 63014 is adjacently connected to the fixed base 61. In this way, when the fixed base 61 is mounted on the material tray 200, a positioning and mistake-proofing effect on the mounting of the fixed base 61 can be generally achieved through the protrusion portion 63014, thereby simplifying the mounting process and difficulty.

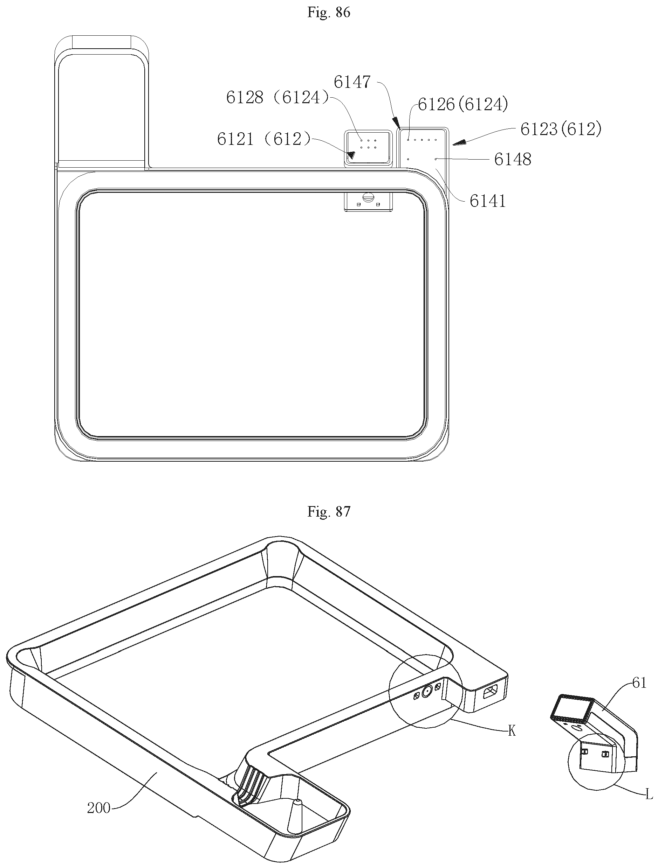

As shown in Figs. 87-89, in some embodiments, one of the fixed base 61 and the material tray 200 is provided with a second limiting protrusion 615, and the other one is provided with a second limiting groove 6302. The fixed base 61 is configured to be detachably connected to the material tray 200 through the mating between the second limiting protrusion 615 and the second limiting groove 6302.

The second limiting protrusion 615 may be disposed on the fixed base 61, and the material tray 200 is provided with the second limiting groove 6302; and alternatively, the fixed base 61 may also be provided with the second limiting groove 6302, and the material tray 200 is provided the second limiting protrusion 615.

Specifically, the number of both the second limiting protrusions 615 and the second limiting grooves 6302 can be two, such that the fixed base 61 is conveniently positioned while the fixed base 61 is mounted on the material tray 200.

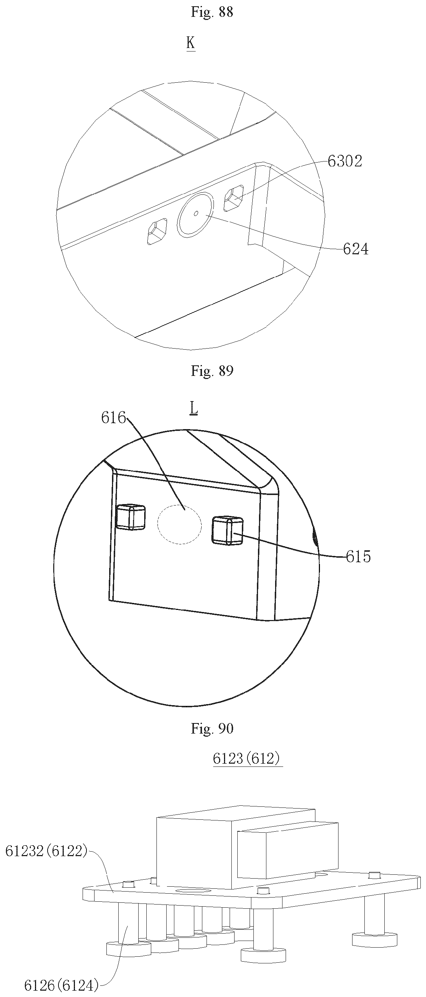

As shown in Fig. 88, in some embodiments, a third magnet 616 is disposed on the fixed base 61, and a fourth magnet 624 is disposed on the material tray 200. The fixed base 61 is configured to be detachably connected to the material tray 200 through adsorption between the third magnet 616 and the fourth magnet 624.

The third magnet 616 and the fourth magnet 624 are disposed opposite to each other and are adsorbable. Adsorption is performed through the mating of the third magnet 616 and the fourth magnet 624, such that the connection stability of the fixed base 61 and the material tray 200 can be guaranteed. When the fixed base 61 is mounted on the material tray 200, the loosening and shaking between the fixed base 61 and the material tray 200 can be prevented. When the fixed base 61 needs to be moved, the fixed base 61 may be dismounted only by overcoming an adsorption magnetic force between the third magnet 616 and the fourth magnet 624, such that dismounting and mounting processes are all simplified, thereby improving the use convenience of the user.

In addition, the third magnet 616 may be disposed in the fixed base 61, or the outer housing of the fixed base 61 is the third magnet 616; and when the fourth magnet 624 is disposed on the fixed base 61, the fourth magnet 624 may be disposed in the fixed base 61, or the outer housing of the fixed base 61 is the fourth magnet 624.

One of the third magnet 616 and the fourth magnet 624 may be a magnet, and the other one is a substance such as ferroalloy, nickel alloy, and cobalt alloy that may be adsorbed by the magnet; and alternatively, both of the third magnet 616 and the fourth magnet 624 are magnets.

It is to be noted that, the fourth magnet 624 and the second limiting grooves 6302 are located at the periphery of the material tray frame 210. Correspondingly, the third magnet 616 and the second limiting protrusion 615 are both located on a side of the periphery of the fixed base 61 that faces toward the material tray frame 210.

Definitely, the mounting modes, structures, and positions of the material tray frame 210 and the fixed base 61 are not limited herein. In an embodiment, the fourth magnet 624 and the second limiting grooves 6302 are located on an upper edge of the material tray frame 210, that is, a side of the material tray frame 210 that is away from the base plate 110. Correspondingly, the third magnet 616 and the second limiting protrusion 615 are located on a side of an upper edge of the fixed base 61 that faces toward the material tray frame 210.

As shown in Figs. 116-117, in some embodiments, the detection module includes a detection circuit board 61132 and a detection assembly 6112 integrated on the detection circuit board 61132. The first housing 614 also defines an avoidance port communicating with the first mounting cavity 6147. The detection assembly 6112 is exposed from the avoidance port. The detection circuit board 61132 is electrically connected to the first detection connector circuit board 61222. The detection assembly 6112 is exposed from the avoidance port to detect the printing material in the material tray 200. Therefore, the detection module can be protected by the first housing 614, and the detection assembly 6112 can detect the printing material.

In addition, by respectively integrating the detection assembly 6112 and the first detection connector 6121 on the detection circuit board 61132 and the first detection connector circuit board 61222, the detection circuit board 61132 and the first detection connector circuit board 61222 are operated stably and have strong anti-interference abilities.

As shown in Figs. 116-117, in some embodiments, the functional module 611 includes a temperature detection module and/or a liquid level detection module. For the temperature detection module, the detection assembly 6112 includes a temperature detection probe 61122, and the first housing 614 is constructed as a bent structure such that the temperature detection probe 61122 is opposite to an inner bottom wall of the material tray 200. For the liquid level detection module, the detection assembly 6112 includes a liquid level detection probe 61124, and the liquid level detection probe 61124 is constructed to extend into the material tray 200. The first housing 614 is constructed as the bent structure such that the temperature detection probe 61122 is opposite to the inner bottom wall of the material tray 200, thus, the temperature detection probe 61122 can detect the printing material in the material tray 200 more accurately. Since the temperature detection probe 61122 indirectly measures a temperature of the printing material in the material tray 200 without directly coming into contact with the printing material, a detection result of the temperature detection probe 61122 is more accurate by designing the temperature detection probe 61122 to be opposite to the inner bottom wall of the material tray 200.

It is to be noted that, the temperature detection probe 61122 being opposite to the inner bottom wall of the material tray 200 includes the temperature detection probe 61122 being vertically opposite to and obliquely opposite to the inner bottom wall of the material tray 200. Compared to the temperature detection probe being vertically opposite to the inner bottom wall of the material tray, a detection range of the temperature detection probe 61122 is larger when the temperature detection probe being obliquely opposite to the inner bottom wall of the material tray, such that the detection result is more accurate.

As shown in Figs. 84-85 and 116, in some embodiments, the detection assembly 6112 includes the liquid level detection probe 61124. The liquid level detection probe 61124 is in contact with the printing material to detect a liquid level of the printing material. During printing, printing liquid is stored in the material tray frame 210 of the three-dimensional printing device. With the printing proceeds, the printing material in the material tray frame 210 is continuously consumed. The liquid level detection module is configured to detect changes in the liquid level in the material tray frame 210, and feeds a liquid level signal back to a control unit. When the liquid level in the material tray frame 210 does not meet a preset liquid level, printing cannot be performed, the three-dimensional printing device may be controlled by the control unit to stop printing, and printing is performed again after the printing liquid in the material tray frame 210 is fully supplemented. Alternatively, before one-time printing starts or after one-time printing ends, the control unit control a liquid level sensor to detect the liquid level of the printing material in the material tray frame 210, so as to determine whether the printing material needs to be added to the material tray frame 210.

As shown in Figs. 84-85 and 116-117, in some embodiments, the detection assembly 6112 includes the temperature detection probe 61122. Since during printing, for different materials and different use environments, temperature ranges required to be maintained in the material tray frame 210 are also different, the temperature in the material tray frame 210 needs to be detected in real time, regularly or irregularly by the temperature detection module, such that the temperature is prevented from being too high to cause surface agglomeration, resulting in incapability of printing, and the occurrence of the warping and deformation of components for printing due to a too low temperature is also prevented.

In an embodiment, the three-dimensional printing device provided in the present disclosure includes at least one functional mechanism 6.

Specifically, when the fixed base 61 is mounted on the frame 100, the fixed base 61 abuts against the connector base 62, such that the first connector 612 is electrically connected to the second connector 621, the functional module 611 is electrically conductive to the control mechanism 600, and the control mechanism 600 may control the functional module 611 to execute a corresponding operation instruction. When the functional module 611 needs to be dismounted from the frame 100, it may be realized by only removing the fixed base 61 from the frame 100, such that dismounting from the frame 100 can be rapidly realized, thereby simplifying disassembly and assembly steps, saving operation time, and facilitating the later changing of damaged components.

In the related art, the screen mechanism of the three-dimensional printing device may select an LCD, LED, or OLED screen. When the screen mechanism needs to be changed due to careless damages, more components need to be removed when the screen mechanism is changed. For example, in a three-dimensional printing device of a desktop-level LCD model, the LCD screen is largely damaged due to long-time direct irradiation of a high-energy ultraviolet light source. Based on this, the LCD screen is a consumable part for the type of the three-dimensional printing device, and may also be regarded as a consumable material. In the related art, a quick disassembly and quick replacement mechanism for the screen mechanism is not designed. When the screen mechanism has reached the service life and needs to be changed, most of the components of the machine need to be dismounted, which costs working hours and causes secondary damages to the assembly accuracy of the machine, leading to large adverse effects on a final machine.

Based on this, an embodiment of the present disclosure further provides a screen mechanism 700. In the screen mechanism 700, a screen assembly can be conveniently dismounted, thereby simplifying the assembly and disassembly process.

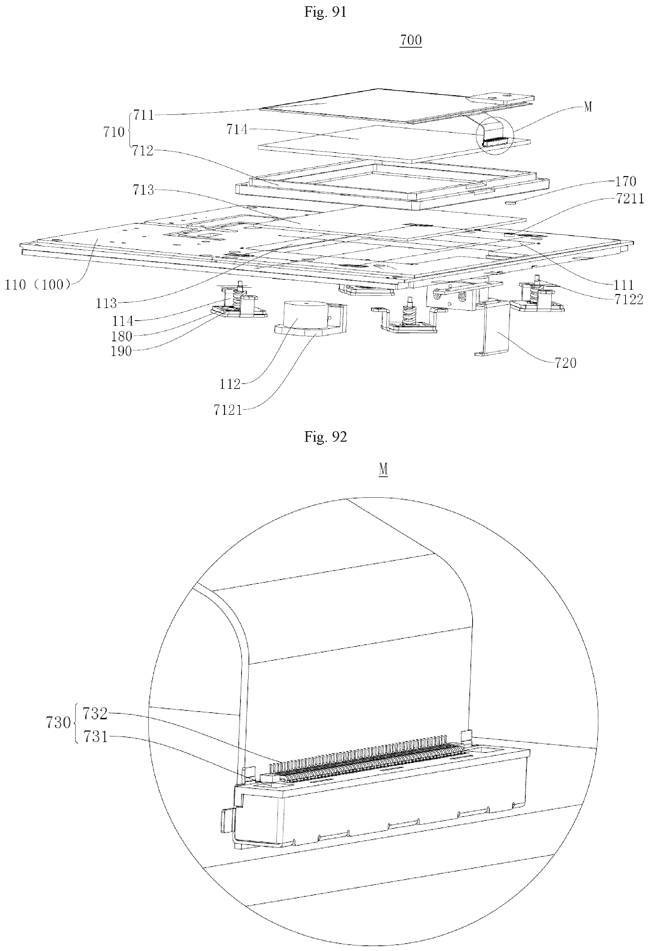

The screen mechanism 700 applied to the three-dimensional printing device in the embodiments of the present disclosure is described below with reference to Figs. 91-98. The three-dimensional printing device generally includes the screen mechanism 700, a material tray frame 210, and a platform mechanism 400. The screen mechanism 700 includes a screen assembly 710. The material tray frame 210 is disposed above the screen mechanism 700. The material tray frame 210 is connected to the screen assembly 710. A detachable release film assembly 270 is disposed in the material tray frame 210. The platform mechanism 400 is movably disposed above the material tray frame 210. A forming platform 410 of the platform mechanism 400 includes a forming surface 4121. The screen assembly 710 includes a screen 711. The material tray frame 210 is configured to hole a printing material required for printing, which may be specifically a liquid light-curing material. Through the control of the screen 711, ultraviolet light transmitted in a display region causes the light-curing material on the screen 711 to receive a radiation energy and then undergo a polymerization reaction, so as to change from a liquid state to a solid state, and the light-curing material is cured and coagulated on the forming surface 4121 of the forming platform 410. When being converted from the liquid state to the solid state, the light-curing material is bonded to the release film assembly 270. After a radiation curing layer of the light-curing material is peeled from the release film assembly 270 by driving the forming platform 410 to move in a Z-axis direction, a certain distance is moved upward, and at the same time, the liquid light-curing material flows back to fill this distance space, and then the light-curing material is continuously radiated, so as to form a complete printed object layer by layer.

The material tray frame 210 has a bottom that is at least partially transparent. The material tray frame 210 is configured to hold the light-curing material. The light-curing material includes any liquid material for easy light curing, for example, light-curing resin liquid, or resin liquid doped with mixed materials such as additives, dyes, pigments, etc. The material tray frame 210 may be completely transparent or transparent only at the bottom. By disposing the release film assembly 270 in the material tray frame 210, a printed intermediate product can be peeled rapidly, thereby improving printing efficiency and printing quality.

As shown in Figs. 91-94, 96, and 98, the screen mechanism 700 according to the embodiments of the present disclosure includes the screen assembly 710, a control unit, and a supporting member 720. The control unit may be the control mechanism 600 in the foregoing embodiments.

Specifically, the frame 100 defines an accommodating cavity and a through opening 111 communicating with the accommodating cavity. The through opening 111 is provided on the base plate 110. The screen assembly 710 is disposed on the frame 100, and may specifically be disposed on the base plate 110; the screen assembly 710 is electrically connected to a first connection end 730 through a first connection line; and the first connection end 730 is located in the accommodating cavity. The control mechanism 600 is disposed in the accommodating cavity. The control mechanism 600 is electrically connected to a second connection end through a second connection line; and the second connection end and the first connection end 730 are connected in an insertion manner. The supporting member 720 is movably disposed on the frame 100, and may be specifically disposed on the base plate 110; part of the supporting member 720 extends into the accommodating cavity via the through opening 111 so as to support the second connection end; and the supporting member 720 is configured to be able to move toward a direction away from the accommodating cavity.

Specifically, the screen assembly 710 is disposed outside the accommodating cavity. The screen assembly 710 is electrically connected to the first connection end 730 through the first connection line. The control mechanism 600 is electrically connected to the second connection end through the second connection line. The second connection end is connected to and is electrically conductive to the first connection end 730 in an insertion manner, such that the screen assembly 710 is electrically conductive to the control mechanism 600. The supporting member 720 is movably disposed on the frame 100. When the screen assembly 710 needs to be dismounted, the supporting member 720 is moved to cause the supporting member 720 to drive the first connection end 730 and the second connection end to move toward the through opening 111, so as to conveniently moving the first connection end 730 and the second connection end out of the accommodating cavity, facilitating rapid separation and insertion, and thereby dismounting and changing the screen assembly 710. After the first connection end 730 of the screen assembly 710 required to be changed is connected and mounted to the second connection end in an insertion manner, and the supporting member 720 is then moved to place the first connection end 730 and the second connection end into the accommodating cavity. The screen assembly 710 includes the screen 711.

It may be understood that, a driving mechanism may be disposed to drive the supporting member 720 to move, or the supporting member 720 may also be moved manually.

According to the screen mechanism 700 in the embodiments of the present disclosure, when the screen assembly 710 needs to be dismounted, the supporting member 720 is moved to cause the supporting member 720 to drive the first connection end 730 and the second connection end to move toward the through opening 111, facilitating the movement of the first connection end 730 and the second connection end from the accommodating cavity for separation, and thereby dismounting and changing the screen assembly 710. After the first connection end 730 of the screen assembly 710 required to be changed is connected and mounted to the second connection end in an insertion manner, and the supporting member 720 is then moved to place the first connection end 730 and the second connection end into the accommodating cavity. Therefore, the screen assembly 710 is conveniently dismounted and changed, thereby simplifying the assembly and disassembly process.

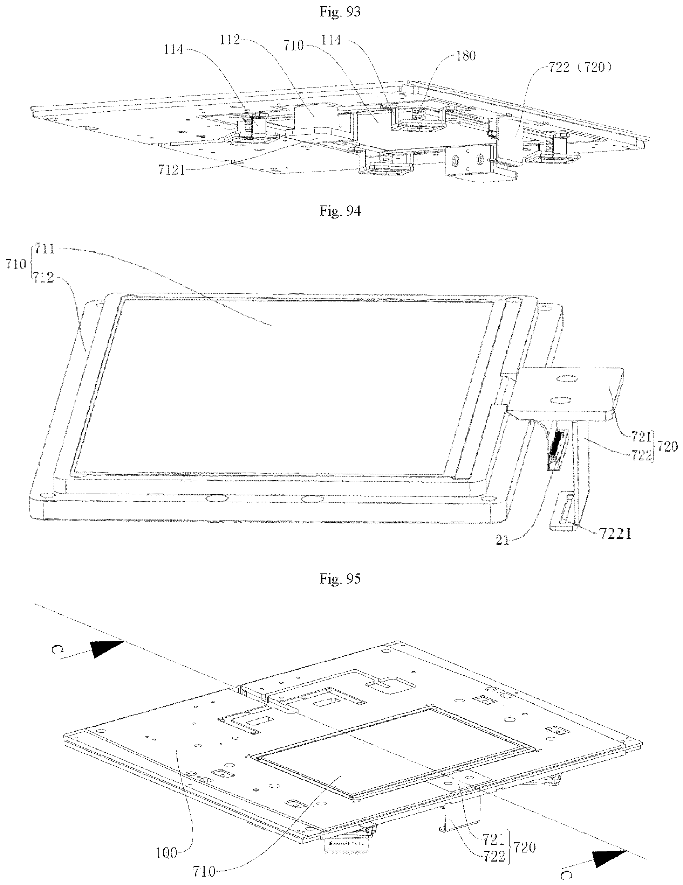

As shown in Figs. 91, 93, and 94, according to the screen mechanism 700 in the embodiments of the present disclosure, the supporting member 720 includes a cover portion 721 and a mounting portion 722, which are connected to each other. The cover portion 721 covers the through opening 111, the mounting portion 722 is provided with a mounting hole 7221, and the second connection line penetrates the mounting hole 7221. The mounting hole 7221 may be a hole that has a complete peripheral wall, as shown in Fig. 94, or may also be a hole that only has partial peripheral wall, as shown in Fig. 99, which is not specifically limited herein. It is to be noted that, when a connector of the first connection line is large, the mounting hole 7221 as shown in Fig. 99 facilitates the mounting of the connection line.

According to the screen mechanism 700 in the embodiments of the present disclosure, by disposing the cover portion 721 to cover the through opening 111, on one hand, electrical components in the accommodating cavity are prevented from being exposed externally, so as to prevent safety accidents, and on the other hand, the cover portion 721 is used to cover the through opening 111, dust impurities are prevented from entering to affect the normal operation of the screen mechanism 700.

In some embodiments, a first magnetic member 170 is disposed on the frame 100, a second magnetic member 7211 is disposed on the cover portion 721, and the first magnetic member 170 and the second magnetic member 7211 are disposed opposite to each other and are adsorbable. Therefore, the stability between the base plate 110 and the cover portion 721 can be guaranteed. When the cover portion 721 covers the through opening 111, the first magnetic member 170 and the second magnetic member 7211 are adsorbed to prevent the cover portion 721 from loosening and shaking. When the cover portion 721 needs to be removed, the cover portion 721 may be dismounted only by forcibly overcoming magnetic attraction between the first magnetic member 170 and the second magnetic member 7211, such that dismounting and mounting processes are simplified, thereby improving the use convenience of the user.

It is to be noted that, one of the first magnetic member 170 and the second magnetic member 7211 may be a magnet, and the other one is a substance such as ferroalloy, nickel alloy, and cobalt alloy that may be adsorbed by the magnet; and alternatively, both of the first magnetic member 170 and the second magnetic member 7211 are magnets.

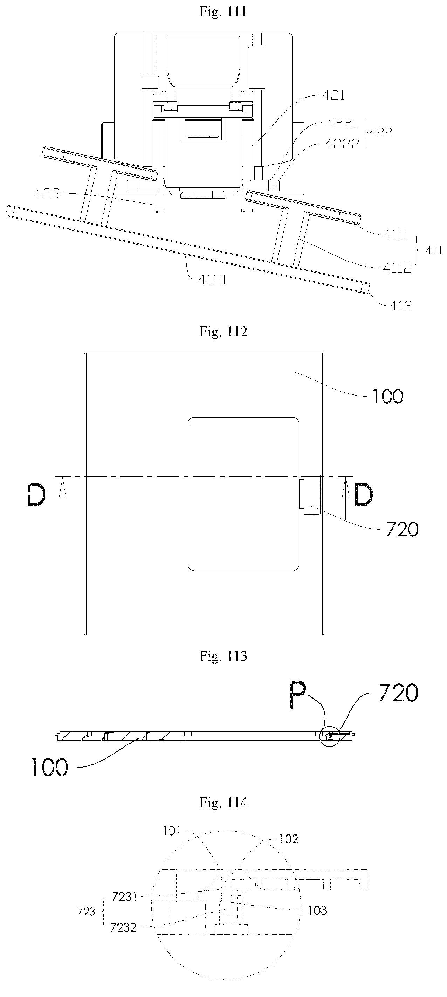

In some embodiments, in combination with Figs. 112 and 115, the supporting member 720 may include an insertion buckle 723. the frame 100 is provided with an insertion hole corresponding to the insertion buckle 723. The supporting member 720 is detachable relative to the frame 100 through the mating between the insertion buckle 723 and the insertion hole. Specifically, the insertion buckle 723 may be inserted in the corresponding insertion hole, or pulled out from the corresponding insertion hole. There may be one or more of the insertion buckles 723 and the insertion holes. In the embodiments shown in the above figures, four insertion buckles 723 spaced apart from each other are arranged on the cover portion 721 of the supporting member 720. Correspondingly, four corresponding insertion holes are provided in corresponding positions on the frame 100. Considering based on mutual cooperation between structures, two of the insertion buckles 723 are disposed in a connection position of the cover portion 721 and the mounting portion 722, and extend in an extending direction of the mounting portion 722. Definitely, adjustment may also be performed according to actual requirements in other embodiments, and is not limited herein.

Further, the insertion buckle 723 may include an insertion portion 7231 and an insertion protrusion 7232. Correspondingly, an inner wall surface of the insertion hole may have an insertion surface corresponding to the insertion portion 7231, and an avoidance surface corresponding to the insertion protrusion 7232. It is to be noted that, in a process of inserting the insertion buckle 723 into the insertion hole, under an abutment action of the insertion surface, the insertion protrusion 7232 produces corresponding elastic deformation for avoidance, until the insertion protrusion 7232 moves to the avoidance surface where it may return to its original shape and is in clamped connection with the avoidance surface, thereby completing insertion. In a process of pulling the insertion buckle 723 out of the insertion hole, the insertion protrusion 7232 slides to abut against the insertion surface in an avoidance direction of the avoidance surface and produces elastic deformation for avoidance, and then continuously slides along the insertion surface until the insertion buckle is pulled out of the insertion hole.

As shown in Figs. 91 and 92, according to the screen mechanism 700 in the embodiments of the present disclosure, a first cooperating portion 731 and an inserting pin 732, which are spaced, are disposed on the first connection end 730; an inserting hole and a second cooperating portion, which are spaced, are disposed on the second connection end; and the inserting pin 732 is inserted in the inserting hole, and the first cooperating portion 731 is cooperated with the second cooperating portion in a clamping manner. Therefore, through the mating between the inserting pin 732 and the inserting hole, the first connection end 730 can be electrically connected to the second connection end. Through the clamped connection between the first cooperating portion 731 and the second cooperating portion, the first connection end 730 is stably connected to the second connection end, so as to prevent the first connection end 730 and the second connection end from loosening, thus resulting in poor contact.

It may be understood that, structures of the first cooperating portion 731 and the second cooperating portion have various forms. For example, the first cooperating portion 731 is constructed as two opposite limiting grooves, the second cooperating portion is constructed as two opposite elastic buckles, and the elastic buckles are constructed as pressing structures. The second cooperating portion may be pressed into the first cooperating portion 731 through pressing in a vertical direction. When the first connection end 730 and the second connection end needs to be separated, the first cooperating portion 731 and the second cooperating portion may be separated by pressing the elastic buckles.

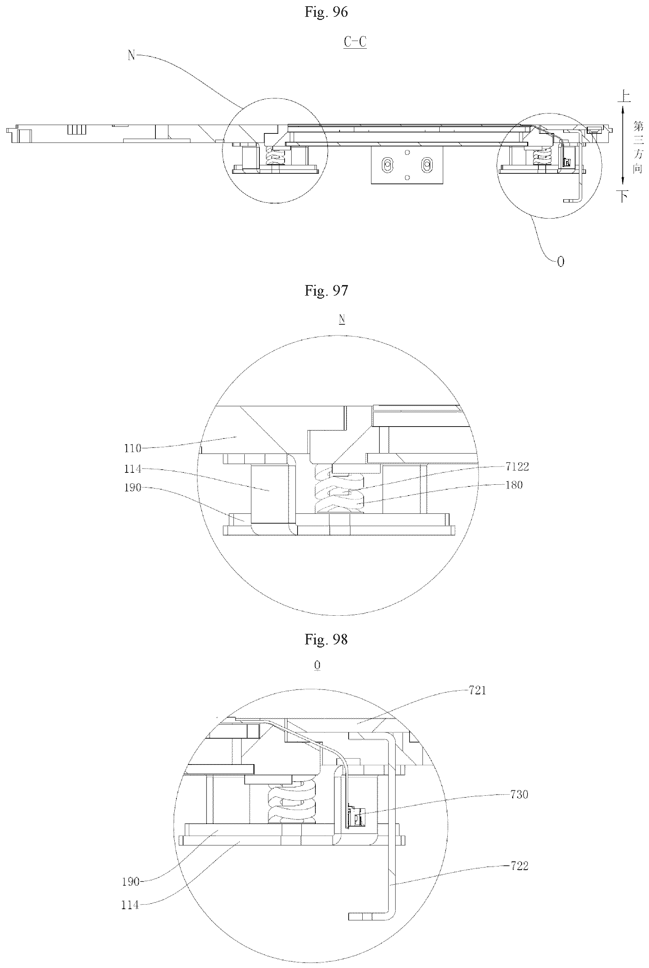

As shown in Figs. 91 and 95-96, according to the screen mechanism 700 in the embodiments of the present disclosure, the screen assembly 710 is movably disposed on the frame 100 in a third direction. The screen assembly 710 includes a mounting support 712 and a screen 711 fixed on the mounting support 712. A reset member 180 is also disposed on the frame 100; and the reset member 180 abuts against between the mounting support 712 and the frame 100 in the third direction. Generally, the third direction is the vertical direction. Through such arrangement, the screen 711 may float up and down, and pressure applied by the forming platform to the screen 711 may be buffered, so as to prevent the screen 711 from being damaged. Generally, the screen assembly 710 includes a Fresnel screen 713, a glass cover plate 714, and the screen 711, which are stacked in sequence from bottom to top. Fig. 96 shows the third direction. In this embodiment, the third direction is the vertical direction.

In some embodiments, the plurality of reset members 180 are arranged on the frame 100 in the circumferential direction, and the plurality of reset members 180 are uniformly distributed.

As shown in Figs. 91, 96, 97, and 100, in some embodiments, a pressure sensor 190 is also disposed on the frame 100, and the reset member 180 abuts against the pressure sensor 190.

In some embodiments, a first adsorption portion 7121 is disposed on the mounting support 712; a second adsorption portion 112 is disposed on the base plate 110; and the first adsorption portion 7121 and the second adsorption portion 112 are opposite to each other and are adsorbable. One of the first adsorption portion 7121 and the second adsorption portion 112 is an electromagnet, and the other one is a substance such as ferroalloy, nickel alloy, and cobalt alloy that may be adsorbed by the magnet; and alternatively, both of the first adsorption portion 7121 and the second adsorption portion 112 are electromagnets.

During printing, the forming platform 410 needs to move downward to the material tray frame 210, there is a certain flatness error in the forming surface 4121 of the forming platform 410, for example, there are situations that the left side is low and the right side is high, the left side is high and the right side is low, the front is high and the rear is low, or the front is low and the rear is high. When the forming surface 4121 of the forming platform 410 is tightly attached to the bottom of the material tray frame 210, the material tray frame 210 is pushed to move downward, so as to push the screen assembly 710 under the material tray frame 210, thereby triggering the reset member 180 to tilt downward and triggering the pressure sensor 190. In this case, the pressure sensor 190 records a maximum displacement amount and minimum displacement amount based on measured data, and transmits same to the control mechanism 600. If the maximum displacement amount exceeds a preset interval, the control mechanism 600 controls the alarm module to perform alarm prompt.

If the maximum displacement amount meets the preset interval, in this case, whether the minimum displacement amount has reached the preset interval is read. If the minimum displacement amount has reached the preset interval, it may be determined that all portions of the forming platform 410 touch the bottom of the material tray frame 210. In this case, the forming surface 4121 of the forming platform 410 is maintained to be parallel to the bottom of the material tray frame 210 and the screen 711, respectively, exposure processing is performed, and a first layer printed object is printed. After the first layer is printed, the forming platform 410 gradually rises, the pressure sensor 190 and the reset member 180 are restored to remain in positions of the first printing, and the forming surface 4121 of the forming platform 410 is separated from the bottom surface of the material tray frame 210. A second layer continues to be printed. When the second layer is printed, during the descending of the forming platform 410, the pressure sensor 190 records a displacement amount, and at the same time, the reset member 180 gradually restores a certain amount of displacement to an original position. The above printing is repeated, and when a nth layer is reached, in this case, the material tray frame 210 and the screen 711 have restored to an initial position, the forming platform 410 has printed a three-dimensional object with enough error amounts, and zero searching is completed. After zero searching is completed, through the mating between the first adsorption portion 7121 and the second adsorption portion 112, the screen 711 is locked, facilitating subsequent official printing.

As shown in Figs. 95 and 96, in some embodiments, a guiding post 7122 is disposed on the mounting support 712. The guiding post 7122 is spaced apart from the pressure sensor 190. The reset member 180 includes a spring. The spring is sleeved on the guiding post 7122. Therefore, the spring ca be guided by the guiding post 7122 on one hand, and there may also be a space allowing the spring to be compressed.

As shown in Fig. 91, in some embodiments, the frame 100 includes a case body and a base plate 110. The base plate 110 and the case body define an accommodating cavity together. The base plate 110 is provided with a guiding groove 113 that runs through in the third direction. The screen assembly 710 is movably clamped in the guiding groove 113. The screen assembly 710 is guided by the guiding groove 113, such that the screen assembly 710 is prevented from deviating during zero searching, leading to stagnation, and thus failing to reset.

As shown in Figs. 91, 93, and 94, in some embodiments, a fixed rack 114 is disposed on a side of the base plate 110 that is away from the mounting support 712; the fixed rack 114 is disposed opposite to the mounting support 712; and the pressure sensor 190 is disposed on the fixed rack 114. Therefore, through rational arrangement, the pressure sensor 190 is cooperated with the reset member 180, thereby simplifying structures and assembly processes.

The three-dimensional printing device in the embodiments of the present disclosure includes the screen mechanism 700, the material tray frame 210, and the platform mechanism 400. The material tray frame 210 is disposed above the screen mechanism 700. The material tray frame 210 is connected to the screen assembly 710. A detachable release film assembly 270 is disposed in the material tray frame 210. The platform mechanism 400 is movably disposed above the material tray frame. When the screen assembly 710 needs to be dismounted, the supporting member 720 is moved to cause the supporting member 720 to drive the first connection end 730 and the second connection end to move toward the through opening 111, facilitating the separation of the first connection end 730 from the second connection end, and thereby dismounting and changing the screen assembly 710. After the first connection end 730 of the screen assembly 710 required to be changed is connected and mounted to the second connection end in an insertion manner, and the supporting member 720 is then moved to place the first connection end 730 and the second connection end into the accommodating cavity. Therefore, the screen assembly 710 is conveniently dismounted and changed, thereby simplifying the assembly and disassembly process.

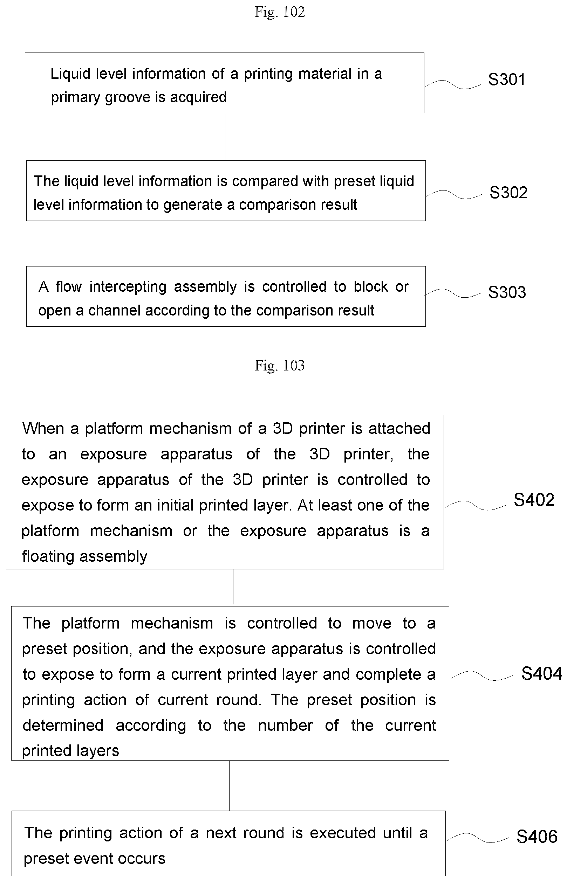

An embodiment of the present disclosure further provides a three-dimensional printing method, which can be applied to the three-dimensional printing device provided in the embodiments of the present disclosure. As shown in Figs. 101 and 102, the three-dimensional printing method includes an automatic liquid supplementing step S300. The automatic liquid supplementing step S300 includes the following steps.

At S301, liquid level information of a printing material in a primary groove 211 is acquired.

A detection assembly 530 is configured to acquire the liquid level information of the printing material in the primary groove 211. The liquid level information includes at least a liquid level value of the printing material in the primary groove 211. After acquiring the liquid level information, the detection assembly 530 transmits the liquid level information to a control mechanism 600 of the three-dimensional printing device, so as to control the control mechanism 600 to perform data processing and decision-making.

At S302, the liquid level information is compared with preset liquid level information to generate a comparison result.

The preset liquid level information may be set according to requirements and stored in a memory of the three-dimensional printing device. The preset liquid level information includes at least a preset liquid level value, and a preset liquid level interval. The control mechanism 600 calls the preset liquid level information stored in the memory of the three-dimensional printing device, and compares same with the liquid level information to generate the comparison result, so as to determine whether liquid needs to be added to the primary groove 211.

At S303, a flow intercepting assembly 510 is controlled to block or open a channel 212 according to the comparison result.

The control mechanism 600 controls the flow intercepting assembly 510 to block or open the channel 212 according to the comparison result. During the operation of the three-dimensional printing device, if a liquid level value corresponding to the liquid level information of the printing material in the current primary groove 211 acquired by the detection assembly 530 is higher than the preset liquid level value corresponding to the preset liquid level information, it indicates that the liquid level in the current primary groove 211 is high, the control mechanism 600 controls the flow intercepting assembly 510 to block the channel 212 between the secondary groove 213 and the primary groove 211 of the material tray 200, and the printing material in the secondary groove 213 cannot flow into the primary groove 211; and if the liquid level value corresponding to the liquid level information of the printing material in the current primary groove 211 acquired by the detection assembly 530 is less than the preset liquid level value corresponding to the preset liquid level information, it indicates that the liquid level in the current primary groove 211 is low, the flow intercepting assembly 510 is controlled to open the channel 212 between the secondary groove 213 and the primary groove 211 of the material tray 200, and the printing material in the secondary groove 213 flows into the primary groove 211, so as to add liquid to the primary groove 211. According to the three-dimensional printing method in this implementation, the flow intercepting assembly 510 may be controlled to block or open the channel 212 according to the liquid level information of the printing material in the primary groove 211. Therefore, the addition and supplementing of the printing material in the primary groove 211 may be realized automatically, thereby improving operation efficiency, and reducing manpower costs.

In an embodiment, the automatic liquid supplementing step S300 may be applied before the first printing of the three-dimensional printing device. Definitely, this embodiment is not limited to execute an automatic liquid supplementing operation before each printing starts, for example, a person skilled in the art may make specific settings as needed.

Specifically, when the automatic liquid supplementing step S300 may be applied before the first printing of the three-dimensional printing device, the preset liquid level information includes first preset liquid level information and second preset liquid level information. The first preset liquid level information includes at least a corresponding first preset liquid level value, and the second preset liquid level information includes at least a corresponding second preset liquid level value. In this case, the step of the controlling the flow intercepting assembly 510 to block or open the channel 212 according to the comparison result includes: the flow intercepting assembly 510 is controlled to open the channel 212 if the comparison result is that the liquid level value corresponding to the liquid level information is lower than the first preset liquid level value corresponding to the first preset liquid level information; and the flow intercepting assembly 510 is controlled to block the channel 212 if the comparison result is that the liquid level value corresponding to the liquid level information is higher than the second preset liquid level value corresponding to the second preset liquid level information, such that the three-dimensional printing device starts printing. A liquid level condition in the primary groove 211 that meets a first printing operation is defined by the first preset liquid level information and the second preset liquid level information. When the liquid level information meets the liquid level condition of the first printing operation, the three-dimensional printing device may start printing. If the liquid level information does not meet the liquid level condition of the first printing operation, the flow intercepting assembly 510 needs to be controlled to opening the channel 212, so as to add liquid to the primary groove 211. By means of this implementation, corresponding strategies may be executed for a low liquid level working condition and a high liquid level working condition in the primary groove 211 of the material tray 200 before the first printing. For example, if the liquid level value corresponding to the liquid level information is lower than a first preset liquid level value corresponding to the first preset liquid level information, which is the low liquid level working condition, and the corresponding execution strategy is to control the flow intercepting assembly 510 to open the channel 212 to add the liquid to the primary groove 211; and if the liquid level value corresponding to the liquid level information is higher than a second preset liquid level value corresponding to the second preset liquid level information, which is the high liquid level working condition, and the corresponding execution strategy is to control the flow intercepting assembly 510 to block the channel 212 to stop adding the liquid to the primary groove 211. The first preset liquid level information and the second preset liquid level information may be configured according to requirements.

Further, as shown in Fig. 101, before the automatic liquid supplementing step S300, the three-dimensional printing method further includes the following step.

At S200, whether a material bottle 542 is mounted in place is detected. If the material bottle 542 is mounted in place, the automatic liquid supplementing step S300 is executed; and if the material bottle 542 is not mounted in place, the channel 212 remains open.

Optionally, the detection of whether the material bottle 542 is in place may be implemented by a third sensor 547 of a liquid adding assembly 540. After the material bottle 542 is in place, the material bottle 542 triggers the third sensor 547, and the third sensor 547 generates a material bottle in-place sensing signal, and sends the material bottle in-place sensing signal to the control mechanism 600 of the three-dimensional printing device. The three-dimensional printing device continues to execute the subsequent automatic liquid supplementing step S300. The material bottle 542 being in place should be understood as the material bottle 542 reaching an working position. If the material bottle 542 is not in place, the material bottle 542 does not trigger the third sensor 547, the control mechanism 600 does not receive the material bottle in-place sensing signal, and the control mechanism 600 controls the flow intercepting assembly 510 to remain a state of opening the channel 212.

Optionally, the detection of whether the material bottle 542 is in place may be implemented by a material bottle identifier and a material bottle reader 548 of the liquid adding assembly 540. After the material bottle 542 is in place, the material bottle reader 548 senses the material bottle identifier, and the material bottle reader 548 generates the material bottle in-place sensing signal, and sends the material bottle in-place sensing signal to the control mechanism 600 of the three-dimensional printing device. The three-dimensional printing device continues to execute the subsequent automatic liquid supplementing step S30. If the material bottle 542 is not in place, the material bottle reader 548 cannot sense the material bottle identifier, the control mechanism 600 does not receive the material bottle in-place sensing signal, and the control mechanism 600 controls the flow intercepting assembly 510 to remain a state of opening the channel 212.

Further, when it is detected that the material bottle 542 is not mounted in place, the channel 212 remains open, and in this case, the following step is continuously executed.

At S210, comparing the liquid level information with third preset liquid level information, and providing prompt information if the liquid level value corresponding to the liquid level information is less than a third preset liquid level value corresponding to the third preset liquid level information, to remind the supplementing of the printing material, starting printing operation of the three-dimensional printing device if the liquid level value corresponding to the liquid level information is greater than or equal to the third preset liquid level value corresponding to the third preset liquid level information. The specific manner of outputting the prompt information includes, but is not limited to, interface display, sound prompt, and light prompt. In this implementation, a specific requirement that even if the material bottle 542 is not mounted in place, the three-dimensional printing device may still start a printing operation is provided. The third preset liquid level information may be configured according to requirements.

Further, as shown in Fig. 101, before the S200 of detecting whether the material bottle 542 is mounted in place, the three-dimensional printing method further includes the following step.

At S100, whether a material tray 200 is mounted in place is detected; if the material tray 200 is mounted in place, S200 is executed; and if the material tray 200 is not mounted in place, the prompt information is outputted to remind the material tray 200 that it is not in place. The specific manner of outputting the prompt information includes, but is not limited to, interface display, sound prompt, and light prompt.

In an embodiment, the automatic liquid supplementing step S300 may further be applied during the printing of the three-dimensional printing device. Definitely, this embodiment is not limited to execute the automatic liquid supplementing operation during printing, for example, a person skilled in the art may make specific settings as needed.

Specifically, when the automatic liquid supplementing step S300 may be applied to the printing of the three-dimensional printing device, the preset liquid level information may include fourth preset liquid level information. The fourth preset liquid level information includes at least a corresponding fourth preset liquid level value. In this case, S301 of acquiring the liquid level information of the printing material in the primary groove 211 includes: the liquid level information of the printing material in the primary groove 211 after peeling is completed during each printing process is acquired. S300 of controlling the flow intercepting assembly 510 to block or open the channel 212 according to the comparison result includes: the liquid level information is compared with the fourth preset liquid level information, and a next printing process is executed; the flow intercepting assembly 510 is controlled to keep the channel 212 to close if the liquid level value corresponding to the liquid level information is greater than or equal to the fourth liquid level value corresponding to the fourth preset liquid level information; and the flow intercepting assembly 510 is controlled to open with a first preset time if in the process of performing printing for a consecutive preset numbers of time, the liquid level values corresponding to the liquid level information are all less than the fourth liquid level value corresponding to the fourth preset liquid level information. The fourth preset liquid level information, the preset number of times, and the first preset time may be configured according to requirements.

In an embodiment, after automatic liquid supplementing in the foregoing embodiments is completed, the three-dimensional printing method further includes the following steps.

At S502, a temperature of the printing material in the material tray 200 is detected.

At S504, if the temperature is lower than a preset temperature, the printing material is heated.

In some application scenarios, an ambient temperature for three-dimensional printing is relatively low, causing the printing material to be difficult to meet a printing requirement at the ambient temperature; or due to the nature of a material itself, such as viscosity and the like, the printing requirement can be met with higher temperatures. In this case, the printing material may be heated to cause the printing material to meet requirements of users.

The above temperature sensor may be used to detect the temperature of the printing material, and the printing material may be heated by a heating module located in a fixed groove 216 of the material tray frame 210.

During heating, the printing material may be stirred. Specifically, stirring may be performed manually, or a specialized stirring mechanism may also be disposed, or an existing structure may also be used for execution. In an application scenario, a forming platform 410 may be controlled to move downward into the material tray 200 and enter the printing material. By controlling a lifting motion of the forming platform 410 to stir the printing material, the temperature of the printing material is more uniform, thereby improving heating efficiency.

Furthermore, after the printing material is heated and it is detected that the temperature of the printing material is not lower than the preset temperature, the printing material may be stopped to be heated and/or stirred, or heating and/or stirring may also be performed continuously.

In an application scenario, the preset temperature is the same as a target temperature. In this case, after the preset temperature is reached through heating, heating and stirring are stopped. In another application scenario, the target temperature is higher than the preset temperature. In this case, when the preset temperature is reached through heating but the target temperature is not reached, heating and stirring are performed continuously, or stirring may also be stopped after continuous stirring is performed for a certain period of time, so as to start the printing operation. Definitely, adjustment may also be performed according to actual use requirements, and is not specifically limited herein.

In an application scenario, after the printing operation is started, temperature detection may be performed on the printing material in real time or according to a preset frequency, and operations such as heating, temperature holding, and the like are performed according to a temperature detection result, such that the temperature of the printing material remains at the target temperature.

In an embodiment, as shown in Fig. 103, the present disclosure provides a three-dimensional printing method, which is used for zero searching control of a three-dimensional printing device, and may be specifically applied to any one of the above three-dimensional printing devices. An illumination mechanism of the three-dimensional printing device includes a light source and an exposure apparatus. The method includes the following step.

At S402, when a platform mechanism of the three-dimensional printing device is attached to the exposure apparatus of the three-dimensional printing device, the exposure apparatus of the three-dimensional printing device is controlled to transmit light to form an initial printed layer. At least one of the platform mechanism or the exposure apparatus is a floating assembly.

The exposure apparatus may be an exposure screen, for example, may be an LCD, an OLED screen, an LCOS screen, a micro light emitting diode (Micro-Led) screen, a Mini light emitting diode (Mini-Led) screen, a Silicon X-Tal Re-Flective Display (SXRD) screen, or the like. Further, the exposure apparatus may also refer to an exposure surface of light source projection. For example, on the basis of a projected light source, the exposure surface is a bottom surface of the material tray, and when the screens are used as display light sources, the exposure surface is a display surface of a screen. The floating assembly refers to a device that may occur displacement according to an external force. In this embodiment, at least one of the platform mechanism or the exposure apparatus is the floating assembly. In other words, based on the up and down movement of the platform mechanism, the platform mechanism may be movably disposed on a platform mounting structure in the vertical direction. The exposure apparatus may be movably disposed on a frame of the three-dimensional printing device in the vertical direction. For example, when only the exposure apparatus is the floating assembly, the platform mechanism descends and is in contact with the floating assembly. The floating assembly is displaced by the thrust of the platform mechanism, and is gradually attached to the platform mechanism. Further, when the exposure apparatus is the floating assembly, the exposure apparatus is movably disposed on a mounting base of the three-dimensional printing device in a first direction. The exposure apparatus includes a mounting support and a screen fixed on the mounting support. An elastic member is also disposed on the mounting base. The elastic member abuts against between the mounting support and the mounting base in the first direction. Based on this, the screen may float and change an inclination degree. Likewise, when the platform mechanism is the floating assembly, there is also a similar structure that causes the platform mechanism to be able to change the inclination degree within a certain interval. An attachment state refers to a state that an attachment degree between the two meets a setting requirement. A bottom structure of a material groove is further included between a forming surface of the platform mechanism in the present disclosure and the exposure apparatus.

Optionally, in this embodiment, the three-dimensional printing device may be a light-curing three-dimensional printing device. The light-curing three-dimensional printing device uses ultraviolet light or other light sources with specific wavelength ranges to radiate liquid photosensitive resin and trigger a photochemical reaction, such that the light-curing resin in an exposed region is formed through curing, and a three-dimensional object to be formed may be obtained through curing layer by layer. During the formation of the three-dimensional object layer by layer, the first formed cured layer needs to be firmly bonded to the forming surface of the forming platform as a formation foundation for subsequent layers.

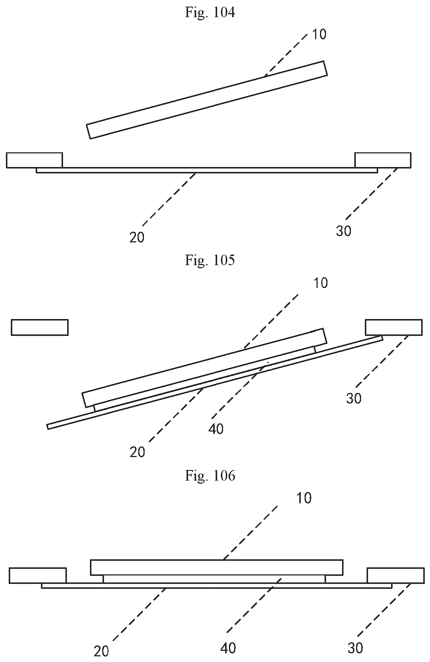

In this embodiment, that the platform mechanism of the three-dimensional printing device is attached to the screen of the three-dimensional printing device may be that the platform mechanism of the three-dimensional printing device is parallel or nearly parallel to the screen (i.e., an included angle between the platform mechanism and the screen is less than a preset value). As shown in Fig. 104, Fig. 104 shows that when the platform mechanism 10 is not parallel to the exposure apparatus 20, the exposure apparatus 20 is limited by a limiting portion 30. If the platform mechanism 10 in the related art is pressed, the exposure apparatus 20 is crushed or printing-curing-adhesive forces are inconsistent, possibly resulting in uneven adhesion. In the present disclosure, if an angle between the platform mechanism 10 and a horizontal plane cannot change, and an angle between the exposure apparatus 20 and the horizontal plane may change, when the platform mechanism 10 is attached to the exposure apparatus 20, the exposure apparatus 20 is subjected to a force applied by the platform mechanism 10 to deviate from an original position. As shown in Fig. 105, the exposure apparatus 20 is pressed by the platform mechanism 10 to move away from the initial position, and the first layer printed object 40 (or referred to as an initial printed layer) is formed. Fig. 106 shows that the platform mechanism 10 is parallel to the exposure apparatus, and the first layer printed object 40 is formed.

In this embodiment, if the platform mechanism 10 is attached to the exposure apparatus, the exposure apparatus of the three-dimensional printing device is controlled to transmit light to form the initial printed layer, for example, the initial printed layer 40 shown in Fig. 105.

In a specific example, before controlling the exposure apparatus of the three-dimensional printing device to transmit light to form the initial printed layer, the method further includes the following operation.

The platform mechanism is controlled to fristly move, until the platform mechanism is attached to the exposure apparatus. In the initial moving process, a material tray disposed between the platform mechanism and the exposure apparatus has no printing material.

Specifically, if the material tray disposed between the platform mechanism and the exposure apparatus stores the printing material (e.g., resin, etc.), the force on the exposure screen is large, which is easy to damage the exposure screen. If the material tray disposed between the platform mechanism and the exposure apparatus does not store the printing material, the force on the exposure apparatus (screen) by the platform mechanism is small, such that the screen may be effectively prevented from being damaged.

At S404, the platform mechanism is controlled to move to a preset position, and the exposure apparatus is controlled to transmit light to form a current printed layer and complete a printing action of current round. The preset position is determined according to the number of the current printed layer.

After the initial printed layer is printed, subsequent one or more printed layers may be printed continuously. The printing action of each layer may be explained as the printing action of one round, and the printing actions of a plurality of rounds indicate that a plurality of layers are printed. When the printing action of each round is executed, a position of the platform mechanism is adjusted first. Specifically, a position of the forming platform in the platform mechanism is adjusted to a preset position, and then the printing action of the current round is performed. The adjusted preset position is determined according to the number of the current printed layer. For example, after the initial printed layer is printed, and the printing of a second round is performed, the forming platform is adjusted upward with a distance of the thickness of one layer, to reach the preset position, so as to perform the printing of the second round. If the printing of a third round is performed, the forming platform is adjusted upward with a distance of the thicknesses of two layers compared to the position of the printing of the first round. That is to say, during the printing of each printing round, the forming platform is adjusted upward with a distance of the thicknesses of N-1 layers compared to the printing round of the initial printed layer, and N is the current printing round. For another example, after the initial printed layer is printed, and the printing of the second round is performed (i.e., when printing a second layer), the forming platform is controlled to move upward to the position according to the preset position in which the forming platform for printing the second layer is located in the three-dimensional printing device. When the printing of the Nth round is performed (i.e., when printing the Nth layer), the forming platform is controlled to move upward to the position according to the preset position in which the forming platform for printing the Nth layer is located in the three-dimensional printing device, and N is the current printing round.

It is to be noted that, the platform mechanism is controlled to move to the preset position, and any one of moving trajectories may be used in the art, as long as a finally stop position is the preset position, excess limitations are not made herein.

In a specific example, controlling the platform mechanism to move to the preset position includes the following operation.

An initial moving distance of the platform mechanism is acquired, and according to the initial moving distance and the number of the current printed layers, a platform driving mechanism of the three-dimensional printing device is controlled to move, such that the forming platform is moved to the preset position.

Specifically, the initial moving distance may be acquired by any manner in the art. For example, the initial moving distance is acquired by method such as a displacement sensor or the number of motor rotations, etc. Each printed layer corresponds to a specific layer thickness, and a target moving position (i.e., the preset position) of the forming platform may be determined according to the initial moving distance and the number of the printed layers. In this embodiment, the platform is controlled by a motor in the platform driving mechanism (or referred to as an elevating mechanism) and moved to the target position, such that a displacement amount can be accurately controlled.

At S406, the printing action of a next round is executed until a preset event occurs.

If the preset event is not triggered, the printing action is repeatedly performed according to rounds. The preset event needs to be set to stop the constant repetition of the printing actions. The preset event may be preset, and may also be adjusted according to actual situation after being set.

In the method, through the manner of printing in conjunction with the floating assembly, the forming surface of the platform mechanism remains parallel to the exposure apparatus, such that zero searching can be realized quickly and conveniently, thereby improving the printing quality of subsequent printing and reducing the probability of printing failures.

In this embodiment, whether the platform mechanism of the three-dimensional printing device is attached to the exposure apparatus of the three-dimensional printing device needs to be determined. Determination criteria may be confirmed based on one or more of the following magnitudes: a first displacement amount of the exposure apparatus, a first pressure level exerted on the exposure apparatus, a second displacement amount of the platform mechanism, and a second pressure level exerted on the platform mechanism.

If the angle between the platform mechanism and the horizontal plane cannot change (specifically, an angle between the forming platform of the platform mechanism and the horizontal plane cannot change), and the angle between the exposure apparatus and the horizontal plane may change, the exposure apparatus produces a displacement amount relative to an initial position, and the displacement amount is used as the first displacement amount. If the angle between the platform mechanism and the horizontal plane may change, and the angle between the exposure apparatus and the horizontal plane may not change, the platform mechanism produces a displacement amount relative to the preset position in which the platform mechanism should be located, and the displacement amount is used as the second displacement amount. It is to be noted that, the preset position in which the platform mechanism should be located may be known according to a controller of a printer. The second displacement amount may also be obtained according to a pressure sensor or a displacement sensor. Regardless of a changeable angle between the platform mechanism and the horizontal plane or a changeable angle between the exposure apparatus and the horizontal plane may change, the platform mechanism and the exposure apparatus exert an acting force on each other. The pressure applied to the exposure apparatus by the platform mechanism is the first pressure level, and the pressure applied to the platform mechanism by the exposure apparatus is the second pressure level.

In this embodiment, the first displacement amount and the second displacement amount both include the maximum displacement amount and the minimum displacement amount. During the downward moving of the platform mechanism, the maximum displacement amount and minimum displacement amount in the first displacement amount of the exposure apparatus (e.g., a screen) are acquired, and it is determined that the platform mechanism is attached to the exposure apparatus (e.g., the screen) when the maximum displacement amount meets a first condition and the minimum displacement amount meets a second condition; or during the downward moving of the platform mechanism, the maximum displacement amount and minimum displacement amount in the second displacement amount of the exposure apparatus are acquired, and it is determined that the platform mechanism is attached to the exposure apparatus when the maximum displacement amount meets a third condition and the minimum displacement amount meets a fourth condition.

The first displacement amount or the second displacement amount may be acquired by the displacement sensor. By disposing the displacement sensor on the exposure apparatus (e.g., the screen) or the platform mechanism, the first displacement amount of the exposure apparatus (e.g., the screen) or the second displacement amount of the platform mechanism is acquired. The first displacement amount or the second displacement amount may also be acquired by the pressure sensor. A pressure level exerted is determined by the pressure sensor, and then through a correspondence relationship between the pressure level and the displacement amount, the first displacement amount of the exposure apparatus (e.g., the screen) or the second displacement amount of the platform mechanism is determined.

For the acquired maximum displacement amount and minimum displacement amount of the first displacement amount, if the maximum displacement amount meets the first condition and the minimum displacement amount meets the second condition, it is considered that the platform mechanism is attached to the exposure apparatus (e.g., the screen). Alternatively, for the maximum displacement amount and minimum displacement amount of the second displacement amount, if the maximum displacement amount meets the third condition and the minimum displacement amount meets the fourth condition, it is considered that the platform mechanism is attached to the exposure apparatus (e.g., the screen).

In this embodiment, the first condition, the second condition, the third condition, and the fourth condition may include a range or include a threshold. In other words, the first condition includes falling into a first range or being less than a first threshold; the second condition includes falling into a second range or being greater than a second threshold; the third condition includes falling into a third range or being less than a third threshold; and the fourth condition includes falling into a fourth range or being greater than a fourth threshold. For example, if a range is included, the condition is considered to be met when the maximum displacement amount is located within one range and the minimum displacement amount is located within another range; and if a threshold is included, the condition is considered to be met when the maximum displacement amount is less than one threshold and the minimum displacement amount is greater than one threshold. It is to be noted that, if the first condition and the second condition are not met at the same time, zero searching control needs to be performed again. If the third condition and the fourth condition are not met at the same time, zero searching control needs to be performed again. An average value of the first range is greater than an average value of the second range, and the first threshold is greater than the second threshold. An average value of the third range is greater than an average value of the fourth range, and the third threshold is greater than the fourth threshold. Further, the second condition may further include a duration that the minimum displacement amount remains falling into the second range reaching a preset duration. The fourth condition may further include a duration that the minimum displacement amount remains falling into the fourth range reaching the preset duration. It is to be noted that, in a specific embodiment, in order to meet the first condition and the second condition, the following operations may be performed: controlling the platform mechanism to move downward, and judging whether the minimum displacement amount falls into the second range; if so, the platform mechanism is controlled to stop moving, and then determining whether the duration that the minimum displacement amount falls into the second range exceeds the preset duration; if no, the platform mechanism is controlled to rise or descend to cause the minimum displacement amount to fall into the second range, and if so, determining whether the maximum displacement amount falls into the first range or is greater than the first threshold. When the maximum displacement amount does not fall into the first range or is greater than the first threshold, zero searching fails. If the maximum displacement amount falls into the first range or is less than or equal to the first threshold, the exposure apparatus is controlled to transmit light to form the current printed layer, and the printing action of the current round is completed.

In this embodiment, whether the platform mechanism is attached to the exposure apparatus (e.g., the screen) is determined according to the first pressure level or the second pressure level. For example, the exposure apparatus is the screen, after the platform mechanism is in contact with the screen, the platform mechanism and the screen exert an acting force on each other. The pressure applied to the screen by the platform mechanism is the first pressure level, and the pressure applied to the platform mechanism by the screen is the second pressure level. In this embodiment, the first pressure level and the second pressure level both include the maximum pressure level and the minimum pressure level. During the downward moving of the platform mechanism, a maximum pressure level and minimum pressure level in the first pressure level of the screen are acquired, and it is determined that the platform mechanism is attached to the screen when the maximum pressure level meets a fifth condition and the minimum pressure level meets a sixth condition; or during the downward moving of the platform mechanism, a maximum pressure level and minimum pressure level in the second pressure level of the platform mechanism are acquired, and it is determined that the platform mechanism is attached to the screen when the maximum pressure level meets a seventh condition and the minimum pressure level meets an eighth condition.

The first pressure level or the second pressure level may be acquired by the pressure sensor. By disposing the pressure sensor on the screen or the platform mechanism, the first pressure amount of the screen or the second pressure level of the platform mechanism is acquired. The first pressure level or the second pressure level may also be acquired by the displacement sensor. A moving displacement amount is determined by the displacement sensor, and then through a correspondence relationship between the displacement amount and the pressure level, the first pressure level of the screen or the second pressure level of the platform mechanism is determined.

For the acquired maximum pressure level and minimum pressure level of the first pressure level, if the maximum pressure level meets the fifth condition and the minimum pressure level meets the sixth condition, it is considered that the platform mechanism is attached to the screen. Alternatively, for the maximum pressure level and minimum pressure level of the second pressure level, if the maximum pressure level meets the seventh condition and the minimum pressure level meets the eighth condition, it is considered that the platform mechanism is attached to the screen.

In this embodiment, the fifth condition, the sixth condition, the seventh condition, and the eighth condition may include a range or include a threshold. In other words, the fifth condition includes falling into a fifth range or being less than a fifth threshold; the sixth condition includes falling into a sixth range or being greater than a sixth threshold; the seventh condition includes falling into a seventh range or being less than a seventh threshold; and the eighth condition includes falling into an eighth range or being greater than an eighth threshold. If a range is included, the maximum pressure level is located within one range, the minimum pressure level is located within another range, and the condition is considered to be met; and if a threshold is included, the maximum pressure level shall be less than one threshold, the minimum pressure level shall be greater than one threshold, and the condition is considered to be met.

In a specific embodiment, the preset event may include completing the printing action of a preset number of layers and/or a current forming surface of the platform mechanism being parallel to a floating base plate of the exposure apparatus (e.g., the screen).

If the preset event is to complete the printing action of the preset number of layers, the preset event occurs when the preset number of layers are formed by a total printing actions including a first printing action for forming the initial printed layer and a plurality of subsequent printing actions, and printing is stopped. If the preset event is that the current forming surface of the platform mechanism is parallel to the floating base plate of the exposure apparatus (e.g., the screen), during printing, the number of the printed layers is not taken into consideration, but the printing action is repeated, until the current forming surface of the platform mechanism is parallel to the floating base plate of the exposure apparatus (e.g., the screen), and it is considered that the preset event occurs. It is to be noted that, a numerical value corresponding to the preset number of layers is determined, for example, the numerical value m may be 10/20/30 layers. If there is a low accuracy region in the printed object, zero searching may be realized by printing the low accuracy region. The numerical value corresponding to the preset number of layers may be determined according to processing errors and assembly errors.

In an embodiment, the zero searching control method further includes the following operations:
controlling a forming platform to move toward the exposure apparatus, until the forming platform is subjected to an acting force at a plurality of preset target positions.
adjusting a horizontal degree of the forming platform such that a difference value among the acting forces applied to each preset target position is less than a preset threshold.

The plurality of preset target positions may be distributed at different portions of the forming surface of the forming platform, for example, may be distributed on corners of the forming platform. Any one of the preset target positions and another preset target position diagonal to it are in a symmetrical relationship based on a center point of the forming surface.

Specifically, the forming platform may be a cuboid, which may be divided into four equal regions. The number of the preset target positions may be 4. It may be understood that, the number of the preset target positions may also be 6, 8, or the like, which are respectively distributed in the four regions of the forming platform. When the three-dimensional printing device is placed on the horizontal plane, the forming platform is controlled to move toward the exposure apparatus, that is, the forming platform is controlled to move downward, and is subjected to an acting force of the structure below during the process of moving down. Movement is stopped when all the preset target positions are subjected to the acting force. It is to be noted that, if the acting force applied is greater than or equal to an alarm value, the forming platform stops moving and sends early-warning information.

It is to be noted that, the horizontal degree of the forming platform is adjusted by using the acting force applied to the two preset positions in diagonal, causing a difference value of the acting force is small enough, and the difference value may be a value below 1N, for example, 0.1N, 0.2N, 0.3N, etc. When the difference value of the two groups of diagonals are less than a preset threshold, it is considered that the forming platform has been leveled. The acting force may be detected by a force sensor. For example, a steel sensor is used for detection, or the displacement sensor may also be used for detection. When displacement is the same, the acting force may also be considered to be the same. When there is a displacement amount, it may also be considered to be subject to the acting force.

Further, the step "controlling a forming platform to move toward the exposure apparatus, until the forming platform is subjected to an acting force at a plurality of preset target positions" may be performed regularly. If the acting force does not meet a setting requirement, a prompt signal may be sent or the prompt signal is uploaded to a cloud server. Generally, plate falling is a common problem in 3D printing. By acquiring a numerical value of the acting force, reasons for plate falling may be further screened. In a specific embodiment, after the horizontal degree of the forming platform is adjusted, repeated detection is performed once, that is, the forming platform is controlled to move downward, and whether the acting force of the plurality of preset target positions meets the setting requirement is detected. It is to be understood that, the setting requirement may be automatically set according to actual scenarios, and is not specifically limited herein.

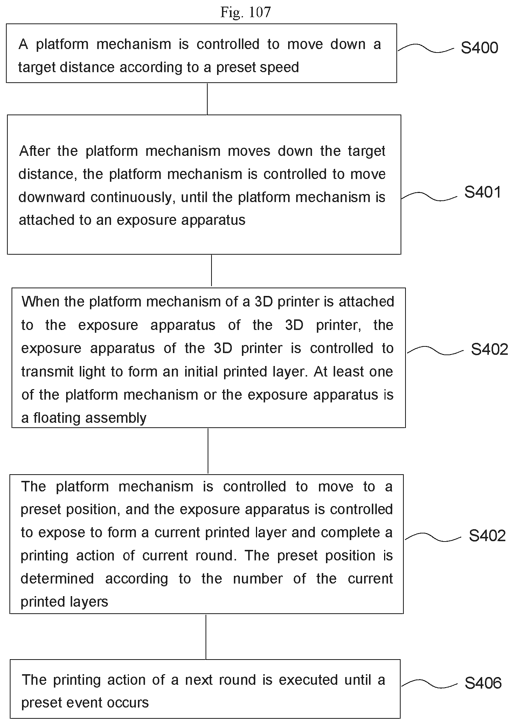

In an embodiment, as shown in Fig. 107, before controlling the exposure apparatus of the three-dimensional printing device to transmit light to form the initial printed layer, the method further includes the following steps:
S400, the platform mechanism is controlled to move down a target distance according to a preset speed.
S401, after the platform mechanism moves down the target distance, the platform mechanism is controlled to move downward continuously, until the platform mechanism is attached to the exposure apparatus.

Specifically, in an initial state, there is a certain distance between the platform mechanism and the exposure apparatus (e.g., the screen), and the platform mechanism moves downward according to a predetermined speed, until to be attached to the exposure apparatus (e.g., the screen). During moving downward, a first stage of downward movement is first performed, that is the target distance is moved downward, and then a second stage of downward movement is performed. During the secondary downward movement, whether the platform mechanism is attached to the exposure apparatus (e.g., the screen) is detected.

In this embodiment, in the process of performing the first stage of downward movement on the platform mechanism, a plurality of distance sections may be moved downward, and a total distance of the distance sections moved downward is the target distance. The plurality of distance sections may correspond to different downward movement speeds.

After the first stage of downward movement is completed, before the second stage of downward movement starts, residue detection may be performed on the platform mechanism and the material tray. If there are no residues, the second stage of downward movement may be performed; and if there are residues, the second stage of downward movement stops, and the platform mechanism is moved upward to the initial position.

After the platform mechanism is attached to the exposure apparatus (e.g., the screen), and when the angle between the exposure apparatus (e.g., the screen) and the horizontal plane is in a changing state and the angle between the platform mechanism and the horizontal plane is fixed, a restoring power is applied to the screen. The restoring power is a force that causes the angle of the screen to restore after the angle of the screen changes; or the restoring power is applied to the platform mechanism when the angle between the platform mechanism and the horizontal plane is in a changing state and the angle between the screen and the horizontal plane is fixed. The restoring power is a force that causes the angle of the platform mechanism to restore after the angle of the platform mechanism changes.

The restoring power in this embodiment may be provided by at least one of an elastic member such as a spring, a magnet, or an energized circuit, facilitating the reduction of the angle between the screen or the platform mechanism and the horizontal plane to an angle before attachment. The magnitude of the restoring power may be adjusted.

In one of the embodiments, when zero searching is completed, that is, when the preset event occurs, the platform mechanism or the exposure apparatus is locked, such that when a printed object is formed through exposure, the platform mechanism and the screen do not move, so as to improve the formation accuracy of printed products and achieve an effect of auxiliary liquid discharging.

After the first layer printed object is formed through exposure, the platform mechanism is controlled to move upward, and the plurality of layers of printed object are formed through exposure, until the printed object with the preset number of layers is completed or the current forming surface of the platform mechanism is parallel to the floating base plate of the screen. There are two methods for controlling the platform mechanism to move upward. After the first layer printed object is formed through exposure, the platform mechanism is controlled to gradually rise, and exposure and printing are performed once every time the distance of the thickness of one layer is risen, until the printed object with the preset number of layers is completed or the current forming surface of the platform mechanism is parallel to the floating base plate of the screen. Alternatively, after the first layer of printed object is formed through exposure, the platform mechanism is controlled to execute a first action, and exposure and printing are performed once every time the first action is executed, until the printed object with the preset number of layers is completed or the current forming surface of the platform mechanism is parallel to the floating base plate of the screen. The first action includes first rising a height greater than the thickness of one layer, and then descending to a position that is one layer thickness away from the previous layer of the printed object.

Fig. 108 is a bottom view of a three-dimensional printing device in this embodiment. A printer includes: a material tray, configured to carry photosensitive resin; a platform mechanism (not shown in Fig. 108), having a forming surface, where the forming surface is configured to carry a 3D printed product; a platform driving mechanism (not shown in Fig. 108), configured to drive the platform mechanism to move in a printing direction (i.e., a vertical direction); an exposure apparatus 20, configured to for an exposure image; and a sensor 30, which is a displacement sensor shown in the figure, and is fixed on a mounting plate 50 through a clamp 40. It is to be noted that, the exposure apparatus receives light projected by a light source, and projects an exposure image corresponding to a member to be printed toward the material tray 10.

In this embodiment, the three-dimensional printing device further includes a magnetic element 60, which is configured to lock the exposure apparatus, facilitating printing. After zero searching is completed, the magnetic element is used to fixed a screen, so as to perform subsequent printing.

In an embodiment, when zero searching starts, the platform mechanism may first descend rapidly and then descend slowly; residue detection is performed after descending; and if there is no residues, zero searching for a platform is performed with ultra-slow descending, and whether the platform mechanism is attached to the exposure apparatus is determined according to reading of the displacement sensor. When the platform mechanism is mounted and zero searching is performed with one click, initial reading of the displacement sensor is first recorded, and the platform mechanism is controlled to return to a zero position. Before first exposure, by setting a highest limiting point and a lowest limiting point around the screen, the elastic member (spring) is used for compensation, and zero searching adjustment is performed by 4 displacement sensors. When the platform mechanism descends, descending S1 at a speed of V1, and then descending S2 at a speed of V2, where V1 is greater than V2, and the sum of S1 and S2 is a target distance. Then residue detection is performed, and N is a preset value. When there is no residues, floating zero searching starts, downward movement is performed at a speed of V3, and V3 is less than V2. There is a certain flatness error in a forming plane of the platform mechanism, for example, there are situations that the left side is low and the right side is high, the left side is high and the right side is low, the front is high and the rear is low, or the front is low and the rear is high. When a printing plane is tightly attached to a bottom of the material tray, the material tray is pushed downward to push the screen positioned below the material tray to move downward, so as to trigger the displacement sensor and an elastic assembly such that it tilts downward and displaces. In this case, the displacement sensor records a maximum displacement amount and a minimum displacement amount. If the maximum displacement amount exceeds a preset range, zero searching fails, and an alarm prompt is sent to check the specific problems. If the maximum displacement amount meets the preset range, in this case, the minimum displacement amount is acquired to determine whether the minimum displacement amount falls into the preset range. If the minimum displacement amount falls into the preset range, it may be determined that all portions of the platform touch the bottom of the material tray. In this case, the forming surface of the platform mechanism is maintained to be parallel to the bottom of the material tray and the screen, exposure processing is performed, and a first layer printed object is printed.

After the first layer is printed, the platform mechanism is gradually risen, the displacement sensor and the elastic member are restored to remain in positions of the first printing, and the printing plane is separated from the material tray. A second layer continues to be printed, and when the second layer is printed, the platform mechanism moves to a preset position in which the second layer is printed. The printing is repeated, and when a mth layer is reached, zero searching is completed. Through a plurality of printed layers, as shown in Fig. 109, the current forming surface is parallel to the screen. N, S1, S2, S3, V1, V2, V3, and *m* may all be flexibly configured.

It is to be noted that, for ease of simple description, the foregoing method embodiments are all expressed as a series of action combinations, but those skilled in the art should know that the present disclosure is not limited by the described action sequence, as according to the present disclosure, some steps may be performed in other sequences or simultaneously. Then, those skilled in the art should also know that the embodiments described in the specification are all preferred embodiments, and the actions and modules involved are not necessarily required by the present disclosure.

Another aspect of the embodiments of the present disclosure further provides a three-dimensional printing device, including a memory, a processor, a platform mechanism, a material tray, an exposure apparatus, a mounting base, and an elastic member configured to provide a restoring power. The platform mechanism, the material tray, and the exposure apparatus are arranged in sequence in a first direction. The exposure apparatus includes the mounting base and a screen assembly. The screen assembly is movably disposed on the mounting base in the first direction. The screen assembly includes a mounting support and a screen fixed on the mounting support. The elastic member is also disposed on the mounting base, and the elastic member abuts against between the mounting support and the mounting base in the first direction. The memory stores a computer program, and the computer program, when being run by the processor, implements a method for controlling a three-dimensional printing device.

In one of the embodiments, as shown in Fig. 119, when a sensor uses a pressure sensor, a guiding post is disposed on the mounting support; the guiding post is spaced apart from the pressure sensor 80; the elastic member 90 includes a spring; and the spring is sleeved on the guiding post. The mounting base 100 includes a case body and an upper cover plate. The upper cover plate and the case body define an accommodating cavity together. The upper cover plate is provided with a guiding groove that runs through in the first direction. The screen assembly 20 is movably clamped in the guiding groove. The screen assembly 20 is guided by the guiding groove, such that the screen assembly 20 is prevented from deviating during zero searching, leading to stagnation, and thus failing to reset. A fixed rack 105 is disposed on a side of the upper cover plate that is away from the mounting support; the fixed rack 105 is disposed opposite to the mounting support; and the pressure sensor 80 is disposed on the fixed rack 105.

A third magnet 110 is disposed on the mounting support, a fourth magnet 113 is disposed on the upper cover plate, and the third magnet 110 and the fourth magnet 113 are opposite to each other and are adsorbable. The magnet may be an electromagnet, and the locking of the exposure apparatus may be realized through energizing and de-energizing.

In the description of the present disclosure, it is to be noted that, terms such as "upper", "lower", "left", "right", "inside", "outside", "axial", "radial", "circumferential" and the like are orientation or position relationships shown in the drawings, are adopted not to indicate or imply that indicated apparatuses or components must be in specific orientations or structured and operated in specific orientations but only to conveniently describe the present disclosure and simplify descriptions, and thus should not be construed as limits to the present disclosure. Furthermore, features delimited with "first", "second" may expressly or implicitly include one or more of that feature. In the description of the present disclosure, unless otherwise stated, the meaning of "a plurality of" is two or more.

In the description of the present disclosure, it is to be noted that, unless otherwise clearly specified and limited, the terms "mounted", "connected" and "connect" should be interpreted broadly. For example, the term "connect" may be fixed connection, detachable connection or integral construction. As an alternative, the term "connect" may be mechanical connection, or electrical connection. As an alternative, the term "connect" may be direct connection, or indirect connection through a medium, or communication in two elements. For those of ordinary skill in the art, specific meanings of the above mentioned terms in the present disclosure may be understood according to a specific condition.

In the description of the specification, descriptions of the terms "an embodiment", "some embodiments", "exemplary implementation", "example", "specific example" or "some examples", mean that specific features, structures, materials, or characteristics described with reference to the implementations or examples are included in at least one implementation or example of the present disclosure. In this specification, schematic representations of the above terms do not necessarily refer to the same embodiment or example. In addition, the described particular features, structures, materials or characteristics may be combined in any suitable manner in any one or more embodiments or examples.

## Claims

1. A three-dimensional printing device, **characterized in that**, comprising:
a frame, comprising a base plate;
a material tray, provided on the base plate and configured to hold a printing material, wherein the material tray defines a primary groove, a channel, and a secondary groove, which are in communication in sequence;
an illumination mechanism, located below the material tray, so as to project light toward the material tray;
a platform mechanism, configured to allow the printing material in the primary groove to adhere to layer by layer, so as to obtain a printed object; and
an automatic liquid supplementing mechanism, comprising a flow intercepting assembly, wherein the flow intercepting assembly is configured to block or open the channel such that the printing material in the secondary groove flows into the primary groove through the channel.

2. The three-dimensional printing device according to claim 1, wherein the automatic liquid supplementing mechanism further comprises a detection assembly, the detection assembly is configured to acquire liquid level information of the printing material in the primary groove, and the flow intercepting assembly blocks or opens the channel according to the liquid level information.

3. The three-dimensional printing device according to claim 1, wherein the frame further comprises a mounting plate, the mounting plate is provided on the base plate, and the flow intercepting assembly is provided on the mounting plate.

4. The three-dimensional printing device according to claim 1, wherein the flow intercepting assembly comprises a drive member, a push rod, and a blocking member, which are connected in sequence; the blocking member is configured to mate with the channel; and the drive member is configured to drive the push rod to drive the blocking member to move close to or away from the channel, so as to block or open the channel.

5. The three-dimensional printing device according to claim 4, wherein the drive member is configured to drive the blocking member to move between a termination position at which the channel is blocked and an initial position at which the channel is opened; and the flow intercepting assembly further comprises:
a triggering member;
a first sensor, configured to associate with the triggering member when the blocking member reaches the termination position, so as to output a blocking member termination sensing signal; and
a second sensor, configured to associate with the triggering member when the blocking member reaches the initial position, so as to output an initial blocking member sensing signal.

6. The three-dimensional printing device according to claim 5, wherein
the first sensor and the second sensor are hall sensors, and the triggering member is a magnetic member; or
the first sensor and the second sensor are micro-switches, and the triggering member is a toggle member.

7. The three-dimensional printing device according to claim 5, wherein the flow intercepting assembly further comprises an outer housing; the outer housing comprises an accommodating space having an opening portion; the drive member, the triggering member, the first sensor, and the second sensor are all located in the accommodating space; the push rod passes through the opening portion; and the push rod is configured to extend or retract from the opening portion under the action of the drive member such that the blocking member moves between the termination position and the initial position.

8. The three-dimensional printing device according to claim 7, wherein the flow intercepting assembly further comprises a sliding block and a sliding rail, which are located in the accommodating space and cooperated with each other; the sliding rail is mounted on the outer housing; the sliding block is connected to the drive member and the push rod; and the sliding block is configured to drive the push rod to move along the sliding rail under the action of the drive member.

9. The three-dimensional printing device according to claim 4, wherein the blocking member is detachably connected to the push rod; a first connecting member is disposed on the blocking member; and a second connecting member cooperated with the first connecting member is provided on an end of the push rod away from the drive member.

10. The three-dimensional printing device according to claim 9, wherein the blocking member comprises a blocking portion and a sleeve, which are connected with each other; a limiting recess radially passing through a wall of the sleeve is formed on an end of the sleeve away from the blocking portion; the push rod is provided with a limiting protrusion cooperated with the limiting recess; in a state that the blocking member is connected to the push rod, the sleeve is sleeved on an end of the push rod away from the drive member; and the limiting protrusion is snapped into the limiting recess to limit circumferential rotation of the blocking member.

11. The three-dimensional printing device according to claim 4, wherein a plurality of linear protrusions are arranged on the channel; a rubber sleeve is coated on the blocking member; and in a state that the blocking member blocks the channel, the rubber sleeve is in interference fit with the linear protrusions.

12. The three-dimensional printing device according to claim 1, wherein the automatic liquid supplementing mechanism further comprises a liquid adding assembly, and the liquid adding assembly comprises a support rack and a material bottle;
the support rack comprises a support plate and a limiting plate; an accommodating portion is defined by the support plate and the limiting plate; a fixation hole is provided in a position of the support plate that corresponds to the secondary groove; the accommodating portion is configured to accommodate the material bottle; and a bottle mouth of the material bottle runs through the fixation hole and then extends into the secondary groove.

13. The three-dimensional printing device according to claim 12, meeting at least one of the following:
the limiting plate is provided with a vertical gap;
a rib is formed on an inner surface of the limiting plate, and the rib comprises a guiding section and a limiting section, which are arranged from top to bottom; or
a first protrusion is formed on the inner surface of the limiting plate, and the material bottle is provided with a concave portion cooperated with the first protrusion.

14. The three-dimensional printing device according to claim 13, wherein an ejector rod is disposed in the secondary groove;
the material bottle further comprises:
a one-way valve, disposed at the bottle mouth of the material bottle, wherein the one-way valve is configured to block the bottle mouth;
the material bottle has an working position, when being in the working position, the material bottle is assembled on the support rack, the first protrusion is engaged with the concave portion, and the ejector rod ejects the one-way valve to open the bottle mouth of the material bottle.

15. The three-dimensional printing device according to claim 14, wherein the material bottle further has a standby position; a supporting portion is provided on the support rack; when being in the standby position, the material bottle is assembled on the support rack, the material bottle is cooperated with the supporting portion in a limiting manner, and an end of the one-way valve faced toward the secondary groove is higher than an end of the ejector rod away from the secondary groove.

16. The three-dimensional printing device according to claim 14, further comprising a supporting structure that supports the material bottle to cause the material bottle to be in a supporting position, wherein the supporting structure is mounted on the limiting plate of the support rack; the supporting structure comprises an operation portion and a telescopic portion; the operation portion is located on a side away from the accommodating portion of the limiting plate; and the telescopic portion is at least partially located in the accommodating portion in a telescoping manner.

17. The three-dimensional printing device according to claim 14, wherein the liquid adding assembly further comprises a third sensor; and when the material bottle reaches the working position, the material bottle triggers the third sensor.

18. The three-dimensional printing device according to claim 12, wherein the liquid adding assembly further comprises a material bottle identifier storing material bottle identifier information and a material bottle reader configured to identify the material bottle identifier information; the material bottle identifier is disposed on the material bottle; the material bottle reader is disposed on the support rack; the material bottle identifier information is configured to record information of the printing material in the material bottle; and the material bottle reader is configured to read the information of the printing material in the material bottle from the material bottle identifier.

19. The three-dimensional printing device according to claim 1, further comprising a screen mechanism that is disposed on the base plate and located between the material tray and the illumination mechanism, wherein the illumination mechanism comprises:
a shielding housing, comprising a bottom plate and a side wall, wherein the screen mechanism is disposed on a top of the shielding housing;
a light-emitting assembly, disposed on the bottom plate; and
a heat dissipation assembly, comprising a fan, an air inlet provided on the bottom plate, and an air outlet provided on the side wall, wherein the air inlet and the air outlet are respectively located on two sides of the screen mechanism, and the fan is configured to drive airflow to enter the shielding housing through the air inlet and leave the shielding housing through the air outlet.

20. The three-dimensional printing device according to claim 19, wherein the heat dissipation assembly further comprises:
a flow guide member having a flow guide surface, wherein the flow guide surface is configured to guide the airflow entering the shielding housing through the air inlet to the screen mechanism, and then to the air outlet.

21. The three-dimensional printing device according to claim 20, wherein the heat dissipation assembly further comprises a heat exchanger; and the heat exchanger comprises:
an evaporation member, disposed on the bottom plate and configured to absorb heat emitted by the light-emitting assembly;
a condensation member, disposed at the air outlet; and
a connection pipeline, configured to connect the evaporation member and the condensation member.

22. The three-dimensional printing device according to claim 21, wherein
the evaporation member comprises a heat sink, the light-emitting assembly is disposed on the heat sink, and a plurality of heat exchange channels are provided in the heat sink;
the condensation member comprises a heat dissipation fin; and
one end of the connection pipeline is embedded in the heat sink and communicates with the heat exchange channels, and the other end is embedded in the heat dissipation fin.

23. The three-dimensional printing device according to any one of claims 1 to 22, wherein the platform mechanism comprises a forming platform, a platform fixing rack, and a locking mechanism; and the locking mechanism comprises:
a locking member, having an abutment end; and
a transmission assembly, with one end being movably connected to the platform fixing rack and the other end being movably connected to the locking member, and comprising at least two transmission members, which are hinged with each other, wherein a first hinge shaft is provided between the two transmission members; the first hinge shaft has a locking position;
the transmission assembly is configured in a way that when the first hinge shaft is located in the locking position, the abutment end abuts the forming platform against the platform fixing rack, and the forming platform applies a force to the locking member such that the first hinge shaft is kept in the locking position.

24. The three-dimensional printing device according to any one of claims 1 to 22, wherein the frame comprises a clamping member; the material tray is detachably disposed on the frame, and a clamping assembly is disposed on the material tray; the clamping member is in clamping connection with the clamping assembly; the clamping assembly is provided with a mounting chamber and an accommodating groove, which communicate with each other; a movable locking portion is disposed in the accommodating groove; a limiting groove cooperated with the locking portion is provided on the clamping member; when the material tray is mounted on the frame, the clamping member is located in the mounting chamber, and a part of the locking portion is clamped in the limiting groove; and the locking portion is configured to be able to retract the accommodating groove toward a direction away from the limiting groove.

25. The three-dimensional printing device according to any one of claims 1 to 22, further comprising a locking structure configured to lock the frame and the material tray, wherein the locking structure comprises:
a housing, having a first opening;
a locking assembly, disposed on a side close to the first opening in the housing; and
a transmission structure, rotatably disposed in the housing, wherein a first end of the transmission structure abuts against a first end of the locking assembly, wherein
when the transmission structure rotates, the locking assembly is driven to move at the first opening such that a second end of the locking assembly is locked or unlocked with the material tray.

26. The three-dimensional printing device according to any one of claims 1 to 22, wherein the material tray comprises a material tray frame; a release film is provided in the material tray frame; the release film comprises a release film body and a release film identifier connected to the release film body; the primary groove and the secondary groove are defined by the material tray frame; the release film body is embedded in the primary groove, and the release film identifier is embedded in the secondary groove; a release film reader is disposed on the frame; and the release film identifier is disposed opposite to the release film reader.

27. The three-dimensional printing device according to any one of claims 1 to 22, further comprising
the screen mechanism, wherein the screen mechanism comprises a screen assembly;
an accommodating cavity and a through opening communicating with the accommodating cavity are defined by the frame; the screen assembly is disposed on the frame; the screen assembly is electrically connected to a first connection end through a first connection line; the first connection end is located in the accommodating cavity; and
the three-dimensional printing device further comprises:
a control mechanism, disposed in the accommodating cavity and electrically connected to a second connection end through a second connection line, wherein the second connection end and the first connection end are connected in an insertion manner; and
a supporting member, movably disposed on the frame, wherein a part of the supporting member extends into the accommodating cavity by the through opening so as to support the second connection end, and the supporting member is configured to be able to move toward a direction away from the accommodating cavity.

28. A three-dimensional printing method, **characterized in that**, applied to the three-dimensional printing device according to any one of claims 1 to 27, wherein the three-dimensional printing method comprises an automatic liquid supplementing step, and the automatic liquid supplementing step comprises:
acquiring liquid level information of a printing material in a primary groove;
comparing the liquid level information and preset liquid level information to generate a comparison result; and
controlling a flow intercepting assembly to block or open the channel according to the comparison result.

29. The three-dimensional printing method according to claim 28, wherein the preset liquid level information comprises first preset liquid level information and second preset liquid level information; and the automatic liquid supplementing step is applied before printing, and the controlling the flow intercepting assembly to block or open the channel according to the comparison result comprises:
controlling the flow intercepting assembly to open the channel if the comparison result is that a liquid level value corresponding to the liquid level information is lower than a first preset liquid level value corresponding to the first preset liquid level information; and
controlling the flow intercepting assembly to block the channel if the comparison result is that the liquid level value corresponding to the liquid level information is higher than a second preset liquid level value corresponding to the second preset liquid level information, such that the three-dimensional printing device starts printing.

30. The three-dimensional printing method according to claim 29, wherein before the automatic liquid supplementing step, the three-dimensional printing method further comprises:
detecting whether a material bottle is mounted in place;
if the material bottle is mounted in place, executing the automatic liquid supplementing step;
if the material bottle is not mounted in place, controlling the flow intercepting assembly to keep the channel open.

31. The three-dimensional printing method according to claim 30, wherein when the material bottle is not mounted in place,
comparing the liquid level information with third preset liquid level information, and providing prompt information if the liquid level value corresponding to the liquid level information is less than a third preset liquid level value corresponding to the third preset liquid level information, starting printing operation of the three-dimensional printing device if the liquid level value corresponding to the liquid level information is greater than or equal to the third preset liquid level value corresponding to the third preset liquid level information.

32. The three-dimensional printing method according to claim 30, wherein before the step of detecting whether the material bottle is mounted in place, the three-dimensional printing method further comprises:
detecting whether a material tray is mounted in place;
if the material tray is mounted in place, executing the step of detecting whether the material bottle is mounted in place; and
if the material tray is not mounted in place, outputting prompt information.

33. The three-dimensional printing method according to claim 28, wherein the preset liquid level information comprises fourth preset liquid level information; the automatic liquid supplementing step is applied in a printing process;
a step of acquiring the liquid level information of the printing material in the primary groove comprises: acquiring the liquid level information of the printing material in the primary groove after peeling is completed during each printing process; and
the step of the controlling the flow intercepting assembly to block or open the channel according to the comparison result comprises:
comparing the liquid level information with the fourth preset liquid level information, and executing a next printing process;
keeping the channel close if the liquid level value corresponding to the liquid level information is greater than or equal to a fourth liquid level value corresponding to the fourth preset liquid level information; and
controlling the flow intercepting assembly to open with a first preset time if in the process of performing printing for a consecutive preset number of times, the liquid level values corresponding to the liquid level information are all less than the fourth liquid level value corresponding to the fourth preset liquid level information.

34. The three-dimensional printing method according to claim 28, wherein after the automatic liquid supplementing step, the three-dimensional printing method further comprises:
detecting a temperature of the printing material in the primary groove; and
heating the printing material when the temperature of the printing material is lower than a preset temperature.

35. A three-dimensional printing method, **characterized in that**, applied to the three-dimensional printing device according to any one of claims 1 to 27, wherein an illumination mechanism comprises a light source and an exposure apparatus; and the three-dimensional printing method comprises:
when a platform mechanism of the three-dimensional printing device is attached to the exposure apparatus of the three-dimensional printing device, controlling the exposure apparatus of the three-dimensional printing device to transmit light to form an initial printed layer, wherein at least one of the platform mechanism or the exposure apparatus is a floating assembly;
controlling the platform mechanism to move to a preset position, and controlling the exposure apparatus to transmit light to form a current printed layer and complete a printing action of a current round, wherein the preset position is determined according to the number of the current printed layer; and
executing the printing action of a next round until a preset event occurs.

36. The three-dimensional printing method according to claim 35, further comprising:
controlling a forming platform to move toward the exposure apparatus, until the forming platform is subjected to forces at a plurality of preset target positions; and
adjusting a horizontal degree of the forming platform such that a difference value among the acting forces applied to each preset target position is less than a preset threshold.
